# EUROPEAN PATENT APPLICATION

(11) **EP 2 782 227 A1**
(43) Date of publication of application: **24.09.2014**
(21) Application number: 12849284.0
(22) Date of filing: 04.09.2012
(51) Int. Cl.: H02K 21/16, H02K 1/22, H02K 1/27, H02P 6/08

(54) **MOTOR AND MOTOR SYSTEM**

(30) Priority: 14.11.2011 JP 2011249183; 14.11.2011 JP 2011249185
(71) Applicant: Kabushiki Kaisha Yaskawa Denki, Kitakyushu-shi, Fukuoka 806-0004 (JP)
(72) Inventor: MURAKAMI, Sohji, Kitakyushu-shi Fukuoka 806-0004 (JP); OHTO, Motomichi, Kitakyushu-shi Fukuoka 806-0004 (JP); INOMATA, Kentaro, Kitakyushu-shi Fukuoka 806-0004 (JP); IDE, Kozo, Kitakyushu-shi Fukuoka 806-0004 (JP); MORIMOTO, Shinya, Kitakyushu-shi Fukuoka 806-0004 (JP)
(74) Representative: Grünecker, Kinkeldey, Stockmair & Schwanhäusser
(86) International application number: PCT/JP2012/072511
(87) International publication number: WO 2013/073263

(57) **Abstract**

Provided are a motor and a motor system in which the mechanical angle of a rotor indicating the absolute position of the rotational position of the rotor can be estimated. The motor includes: a rotor that includes a rotor core provided with a plurality of permanent magnets in a circumferential direction; and a stator that includes a stator core on which multi-phase stator coils are wound and is arranged facing the rotor with a predetermined air gap therebetween. The rotor has a structure in which the change pattern of magnetic properties of the rotor core or the permanent magnets changes stepwise in the circumferential direction. The stator has a structure in which the distribution pattern of a magnetic field generated by the stator coils with one phase or with a combination of the phases has uniqueness over a whole circumference.

## Description

### Field

Embodiments disclosed herein relate to a motor and a motor system.

### Background

A position of a rotor has conventionally been detected to control rotation of a motor. To detect the rotational position of a rotor of a motor, a position detector such as an encoder has generally been used.

However, from a viewpoint of wire saving, space saving, or improvement of reliability under severe environment, a technique for detecting the position of a rotor without using an encoder has been searched for.

As one example of such a technique, the technique disclosed in Patent Literature 1 was proposed. This technique uses the fact that a change in inductance of a coil winding on the stator side caused by a change in the rotational position of a rotor (position defined by mechanical angle displacement) corresponds in value to a change in magnetic resistance of a magnetic pole portion attached to a rotary shaft.

### Citation List

### Patent Literature

Patent Literature 1: Japanese Patent Application Laid-open No. 2010-166711

### Summary

### Technical Problem

However, even with the technology of Patent Literature 1, only a relative mechanical angle determined only from an electrical angle could be estimated. In other words, with conventional techniques including Patent Literature 1, an absolute mechanical angle indicating an absolute position of a rotor could not be directly estimated.

One aspect of embodiments has been made in view of the foregoing, and aims to provide a motor and a motor system in which the absolute mechanical angle of the rotor can be estimated.

### Solution to Problem

According to an embodiment, a motor includes: a rotor that includes a rotor core provided with a plurality of permanent magnets; and a stator that includes a stator core on which stator coils of a plurality of phases are wound, the stator being arranged facing the rotor with a predetermined air gap therebetween, wherein the rotor has a structure in which a change pattern of magnetic properties of the rotor core or the permanent magnets changes stepwise in a circumferential direction, and the stator has a structure in which a distribution pattern of a magnetic field generated by the stator coils with one phase or with a combination of the phases has uniqueness over a whole circumference.

### Advantageous Effects of Invention

According to one aspect of embodiments, a rotational position of a rotor can be accurately estimated without using an encoder.

### Brief Description of Drawings

FIG. 1 is a block diagram illustrating a schematic configuration of a motor system according to an embodiment.
FIG. 2 is a sectional view of a rotor and a stator of a motor according to the embodiment in a plane containing a rotor central axis.
FIG. 3 is a sectional view of a rotor and a stator according to a comparative example in a plane perpendicular to the rotor central axis.
FIG. 4 is a diagram illustrating one example of a mathematical model according to the comparative example.
FIG. 5 is a diagram illustrating names of magnetic poles of permanent magnets of the motor according to the comparative example and positions corresponding to d-axes and q-axes.
FIG. 6A is a diagram illustrating names and arrangement of stator coils of the motor according to the comparative example.
FIG. 6B is a diagram illustrating connection of stator coils of the motor according to the comparative example.
FIG. 7A is a diagram illustrating winding directions of the stator coils of the motor according to the comparative example.
FIG. 7B is a diagram illustrating the connection together with the winding directions of the stator coils of the motor according to the comparative example.
FIG. 8A is a diagram illustrating a method of applying an alternating current to the stator coils of the motor according to the comparative example.
FIG. 8B is a diagram illustrating distribution of magnetic flux generated when the method of current application illustrated in FIG. 8A is used.
FIG. 9A is a diagram illustrating density and distribution of magnetic flux generated around the d-axes of the rotor of the motor according to the comparative example.
FIG. 9B is a diagram illustrating density and distribution of magnetic flux generated around the q-axes of the rotor of the motor according to the comparative example.
FIG. 10 is a diagram illustrating density and distribution of magnetic flux generated when a cylindrical core (formed of stacked magnetic steel sheets) is placed instead of the rotor of the motor according to the comparative example and an alternating current is applied to the stator coils.
FIG. 11A is a diagram illustrating one example of the rotor according to the embodiment.
FIG. 11B is a diagram illustrating one example of the rotor according to the embodiment.
FIG. 12A is a diagram illustrating density and distribution generated around the d-axes of the rotor of the motor according to the embodiment.
FIG. 12B is a diagram illustrating density and distribution generated around the d-axes of the rotor of the motor according to the embodiment.
FIG. 13A is a diagram illustrating one example of the motor according to the embodiment.
FIG. 13B is a diagram illustrating one example of the motor according to the embodiment.
FIG. 13C is a diagram illustrating one example of the motor according to the embodiment.
FIG. 14A is a diagram illustrating density and distribution of magnetic flux generated around the d-axes of the rotor of the motor illustrated in FIG. 13A.
FIG. 14B is a diagram illustrating density and distribution of magnetic flux generated around the d-axes of the rotor of the motor illustrated in FIG. 13B.
FIG. 14C is a diagram illustrating density and distribution of magnetic flux generated around the d-axes of the rotor of the motor illustrated in FIG. 13C.
FIG. 15 is a diagram illustrating one example of the rotor of the motor according to the embodiment.
FIG. 16 is a diagram illustrating density and distribution of magnetic flux generated around the d-axes of the rotor of the motor according to the embodiment.
FIG. 17A is a diagram illustrating a modification of the embodiment.
FIG. 17B is a diagram illustrating a modification of the embodiment.
FIG. 18 is a diagram illustrating an example of the rotor of the motor according to the embodiment.
FIG. 19 is a diagram illustrating density and distribution of magnetic flux generated around the d-axes of the rotor of the motor according to the embodiment.
FIG. 20A is a diagram illustrating an example of the rotor of the motor according to the embodiment.
FIG. 20B is a diagram illustrating an example of the rotor of the motor according to the embodiment.
FIG. 21A is a diagram illustrating density and distribution of magnetic flux generated around the d-axes of the rotor of the motor according to the embodiment.
FIG. 21B is a diagram illustrating density and distribution of magnetic flux generated around the d-axes of the rotor of the motor according to the embodiment.
FIG. 22A is a diagram illustrating an example of the rotor of the motor according to the embodiment.
FIG. 22B is a diagram illustrating an example of the rotor of the motor according to the embodiment.
FIG. 22C is a diagram illustrating an example of the rotor of the motor according to the embodiment.
FIG. 23A is a diagram illustrating density and distribution of magnetic flux generated around the d-axes of the rotor of the motor according to the embodiment.
FIG. 23B is a diagram illustrating density and distribution of magnetic flux generated around the d-axes of the rotor of the motor according to the embodiment.
FIG. 23C is a diagram illustrating density and distribution of magnetic flux generated around the d-axes of the rotor of the motor according to the embodiment.
FIG. 24A is a diagram illustrating density and distribution of magnetic flux generated around the q-axes of the rotor of the motor according to the embodiment.
FIG. 24B is a diagram illustrating density and distribution of magnetic flux generated around the q-axes of the rotor of the motor according to the embodiment.
FIG. 24C is a diagram illustrating density and distribution of magnetic flux generated around the q-axes of the rotor of the motor according to the embodiment.
FIG. 25A is a diagram illustrating a modification of the embodiment.
FIG. 25B is a diagram illustrating a modification of the embodiment.
FIG. 26 is a diagram illustrating an example of the rotor of the motor according to the embodiment.
FIG. 27 is a diagram illustrating density and distribution of magnetic flux generated around the d-axes of the rotor of the motor according to the embodiment.
FIG. 28 is a diagram illustrating an example of the rotor of the motor according to the embodiment.
FIG. 29 is a diagram illustrating density and distribution of magnetic flux generated around the d-axes of the rotor of the motor according to the embodiment.
FIG. 30 is a diagram illustrating an example of the rotor of the motor according to the embodiment.
FIG. 31 is a diagram illustrating density and distribution of magnetic flux generated around the d-axes of the rotor of the motor according to the embodiment.
FIG. 32 is a diagram illustrating an example of the rotor of the motor according to the embodiment.
FIG. 33 is a diagram illustrating density and distribution of magnetic flux generated around the d-axes of the rotor of the motor according to the embodiment.
FIG. 34A is a diagram illustrating an example of the rotor of the motor according to the embodiment.
FIG. 34B is a diagram illustrating an example of the rotor of the motor according to the embodiment.
FIG. 34C is a diagram illustrating an example of the rotor of the motor according to the embodiment.
FIG. 35A is a diagram illustrating density and distribution of magnetic flux generated around the d-axes of the rotor illustrated in FIG. 34A.
FIG. 35B is a diagram illustrating density and distribution of magnetic flux generated around the d-axes of the rotor illustrated in FIG. 34B.
FIG. 35C is a diagram illustrating density and distribution of magnetic flux generated around the d-axes of the rotor illustrated in FIG. 34C.
FIG. 36A is a diagram illustrating an example of the stator of the motor according to the embodiment.
FIG. 36B is a diagram illustrating an example of the stator of the motor according to the embodiment.
FIG. 36C is a diagram illustrating an example of the stator of the motor according to the embodiment.
FIG. 37A is a diagram illustrating density and distribution of magnetic flux generated around the stator core when a cylindrical core (formed of stacked magnetic steel sheets) is placed instead of the rotor and an alternating current is applied to the stator coils in the motor according to the embodiment.
FIG. 37B is a diagram illustrating density and distribution of magnetic flux generated around the stator core when the cylindrical core (formed of stacked magnetic steel sheets) is placed instead of the rotor and an alternating current is applied to the stator coils in the motor according to the embodiment.
FIG. 37C is a diagram illustrating density and distribution of magnetic flux generated around the stator core when the cylindrical core (formed of stacked magnetic steel sheets) is placed instead of the rotor and an alternating current is applied to the stator coils in the motor according to the embodiment.
FIG. 38A is a diagram illustrating an example of the stator of the motor according to the embodiment.
FIG. 38B is a diagram illustrating an example of the stator of the motor according to the embodiment.
FIG. 38C is a diagram illustrating an example of the stator of the motor according to the embodiment.
FIG. 39A is a diagram illustrating density and distribution of magnetic flux generated around the stator core when a cylindrical core (formed of stacked magnetic steel sheets) is placed instead of the rotor and an alternating current is applied to the stator coils in the motor according to the embodiment.
FIG. 39B is a diagram illustrating density and distribution of magnetic flux generated around the stator core when the cylindrical core (formed of stacked magnetic steel sheets) is placed instead of the rotor and an alternating current is applied to the stator coils in the motor according to the embodiment.
FIG. 39C is a diagram illustrating density and distribution of magnetic flux generated around the stator core when the cylindrical core (formed of stacked magnetic steel sheets) is placed instead of the rotor and an alternating current is applied to the stator coils in the motor according to the embodiment.
FIG. 40A is a diagram illustrating an example of the stator of the motor according to the embodiment.
FIG. 40B is a diagram illustrating an example of the stator of the motor according to the embodiment.
FIG. 40C is a diagram illustrating an example of the stator of the motor according to the embodiment.
FIG. 41A is a diagram illustrating density and distribution of magnetic flux generated around the stator core when a cylindrical core (formed of stacked magnetic steel sheets) is placed instead of the rotor and an alternating current is applied to the stator coils in the motor according to the embodiment.
FIG. 41B is a diagram illustrating density and distribution of magnetic flux generated around the stator core when the cylindrical core (formed of stacked magnetic steel sheets) is placed instead of the rotor and an alternating current is applied to the stator coils in the motor according to the embodiment.
FIG. 41C is a diagram illustrating density and distribution of magnetic flux generated around the stator core when the cylindrical core (formed of stacked magnetic steel sheets) is placed instead of the rotor and an alternating current is applied to the stator coils in the motor according to the embodiment.
FIG. 42A is a diagram illustrating a combination of the rotor and the stator of the motor according to the embodiment.
FIG. 42B is a diagram illustrating a combination of the rotor and the stator of the motor according to the embodiment.
FIG. 43A is a diagram illustrating density and distribution of magnetic flux generated in the combination of the rotor and the stator of the motor according to the embodiment.
FIG. 43B is a diagram illustrating density and distribution of magnetic flux generated in the combination of the rotor and the stator of the motor according to the embodiment.
FIG. 44 is a diagram illustrating a relation between absolute position of the rotor and amplitude of the response current in the combination of the rotor and the stator of the motor according to the embodiment.
FIG. 45 is a block diagram of an absolute position encoderless servo system illustrating a system state when the absolute position is detected.
FIG. 46 is a block diagram of the absolute position encoderless servo system illustrating a system state when the motor is driven.
FIG. 47 is a block diagram of an absolute position encoderless servo system according to a modification.
FIG. 48 is an explanatory diagram of a motor according to a second embodiment seen in a longitudinal section.
FIG. 49 is a schematic diagram of the motor according to the second embodiment seen from the front.
FIG. 50 is an explanatory diagram illustrating a rotor structure of the motor according to the second embodiment.
FIG. 51A is a schematic diagram illustrating a stator of the motor according to the second embodiment.
FIG. 51B is an explanatory diagram illustrating a stator structure of the motor according to the second embodiment.
FIG. 52 is an explanatory diagram illustrating extreme values of inductance that appear at half cycles of electrical angle (45 degrees in mechanical angle).
FIG. 53 is an explanatory diagram illustrating a procedure for estimating the mechanical angle of the motor according to the second embodiment.
FIG. 54 is an explanatory diagram illustrating inductance distribution with respect to the mechanical angle of the motor according to the second embodiment.
FIG. 55 is an explanatory diagram illustrating a rotor structure according to a modification 1 of the second embodiment.
FIG. 56 is an explanatory diagram illustrating a rotor structure according to a modification 2 of the second embodiment.
FIG. 57 is an explanatory diagram illustrating a rotor structure according to a modification 3 of the second embodiment.
FIG. 58 is an explanatory diagram illustrating a rotor structure according to a modification 4 of the second embodiment.
FIG. 59A is a schematic diagram illustrating a stator according to a modification 1 of the second embodiment.
FIG. 59B is an explanatory diagram illustrating a structure of the stator according to the modification 1 of the second embodiment.
FIG. 60A is a schematic diagram illustrating a stator according to a modification 2 of the second embodiment.
FIG. 60B is an explanatory diagram illustrating a structure of the stator according to the modification 2 of the second embodiment.
FIG. 61 is an explanatory diagram illustrating connection of first stator coils.
FIG. 62 is an explanatory diagram illustrating connection of second stator coils.
FIG. 63 is an explanatory diagram of a motor according to a third embodiment seen in a longitudinal section.
FIG. 64 is a schematic diagram of the motor according to the third embodiment seen from the front.
FIG. 65 is an explanatory diagram illustrating a rotor structure of the motor according to the third embodiment.
FIG. 66A is a schematic diagram illustrating a stator of the motor according to the third embodiment.
FIG. 66B is an explanatory diagram illustrating a stator structure of the motor according to the third embodiment.
FIG. 67 is an explanatory diagram illustrating a procedure for estimating the mechanical angle of the motor according to the third embodiment.
FIG. 68 is an explanatory diagram illustrating inductance distribution with respect to the mechanical angle of the motor according to the third embodiment.
FIG. 69A is a schematic diagram illustrating a stator according to a modification 1 of the third embodiment.
FIG. 69B is an explanatory diagram illustrating a structure of the staror according to the modification 1 of the third embodiment.
FIG. 70A is a schematic diagram illustrating a stator according to a modification 1 of the third embodiment.
FIG. 70B is an explanatory diagram illustrating a structure of the stator according to the modification 1 of the third embodiment.
FIG. 71A is an explanatory diagram illustrating connection of first stator coils according to another embodiment.
FIG. 71B is an explanatory diagram illustrating connection of second stator coils according to another embodiment.
FIG. 72A is an explanatory diagram illustrating connection of first stator coils according to a modification 1.
FIG. 72B is an explanatory diagram illustrating connection of second stator coils according to the modification 1.
FIG. 73A is an explanatory diagram illustrating connection of first stator coils according to a modification 2.
FIG. 73B is an explanatory diagram illustrating connection of second stator coils according to the modification 2.

### Description of Embodiments

Embodiments of a motor and a motor system disclosed in the present application will now be described in detail with reference to the attached drawings. It should be noted that the examples in the following embodiments are not limiting.

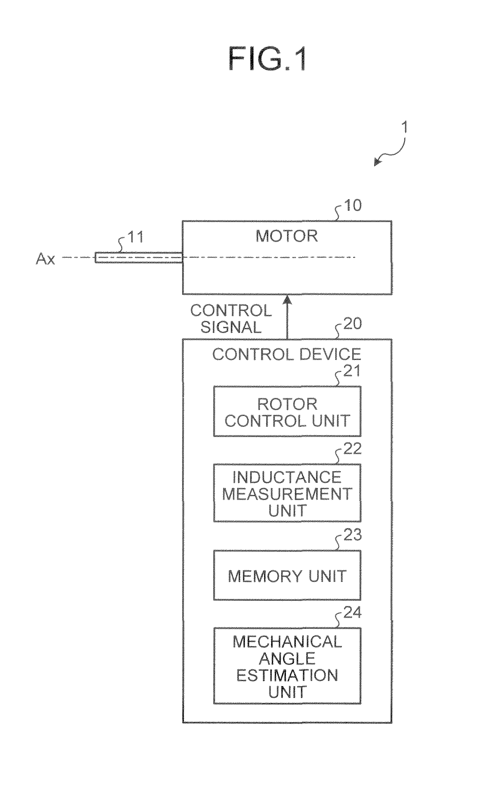

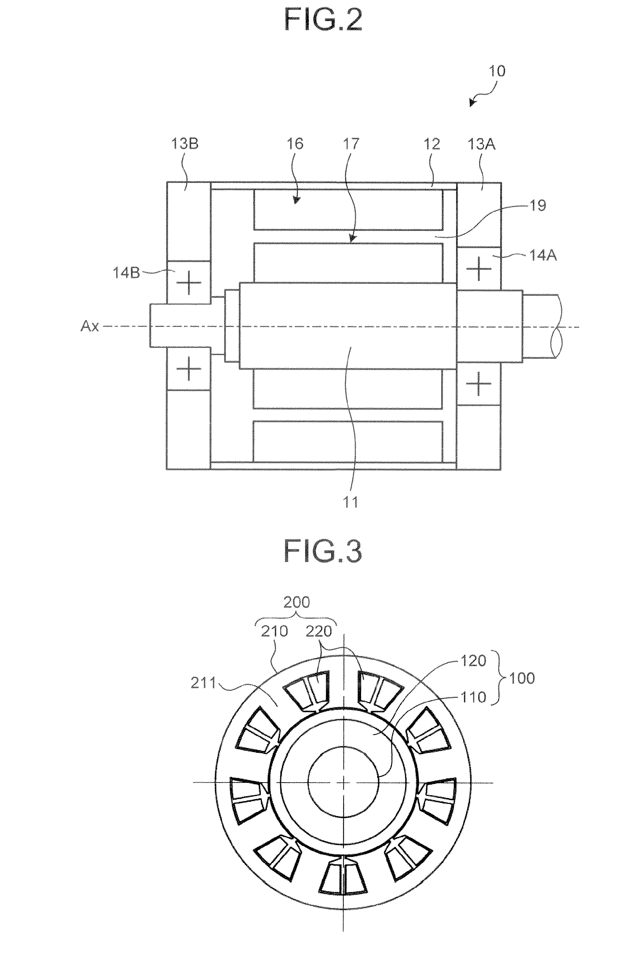

FIG. 1 is a block diagram illustrating a schematic configuration of a motor system 1 according to an embodiment, and FIG. 2 is a sectional view of a motor 10 according to the embodiment in a plane containing a rotor central axis.

As illustrated in FIG. 1, this motor system 1 includes this motor 10 and a control device 20. The control device 20 includes a rotor control unit 21, an inductance measurement unit 22, a memory unit 23, and a mechanical angle estimation unit 24 described later. In FIG. 1, the reference sign Ax denotes the shaft center (center) of a rotary shaft 11, which is a motor central axis.

The motor 10 includes: a rotor 17 that includes permanent magnets 18 and a rotor core 17a described later, illustration of which is omitted herein; and a stator 16 that includes a plurality of stator coils 15 and a stator core 16a, and is arranged facing the rotor 17 with an air gap therebetween. The rotary shaft 11 of the rotor 17 is rotatably supported by bearings 14A and 14B on brackets 13A and 13B, an outer periphery of the stator 16 is held by a frame 12, and the brackets 13A and 13B are fastened on the frame 12.

The total number of magnetic poles (magnetic pole count) of the rotor 17 on a surface facing the air gap is equal to or larger than four. A magnetic flux density distribution waveform in the air gap generated by the rotor 17 has a magnetic flux density component one cycle of which is 360 degrees in mechanical angle. In other words, when magnetic flux is generated in a position corresponding to a d-axis or a q-axis of the rotor 17 by a certain magnitude of magnetomotive force, the magnetic flux density in the air gap in a certain range of 180 degrees in mechanical angle in a circumferential direction of the rotor 17 becomes higher than the magnetic flux density in the air gap in the other range of 180 degrees. Furthermore, the magnetic flux density distribution waveform in the air gap generated by the stator 16 has the magnetic flux density component one cycle of which is 360 degrees in mechanical angle. More specifically, a cylindrical core 170 is placed instead of the rotor 17 so as to face the stator 16 and, when an alternating current is applied to the stator coils 15, for example, the magnetic flux density in the air gap in the certain range of 180 degrees in mechanical angle in the circumferential direction of the stator core 16a becomes higher than the magnetic flux density in the air gap in the other range of 180 degrees.

To facilitate understanding, a rotor 100 and a stator 200 of a motor of a comparative example will first be described with reference to FIG. 3.

FIG. 3 is a sectional view of the rotor 100 and the stator 200 of the comparative example in a plane perpendicular to the rotor central axis. Herein, a surface permanent magnet (SPM) motor is illustrated as a representative example in which the magnetic pole count of the rotor 100 is six, the number of coils of the stator 200 is nine, and the coils are in the form of concentrated winding.

The rotor 100 of the motor of the comparative example is constructed of a rotor core 110 formed of cut parts of stacked magnetic steel sheets or carbon steels for machine structural use, for example, and permanent magnets 120 equipped on a surface of the rotor core 110 facing an air gap. The permanent magnets 120 are made of sintered material containing a rare earth element, resin blend material containing a rare earth element, or a ferrite magnet, for example, and the direction of magnetization when magnetized is approximately in a radial direction of the rotor 100.

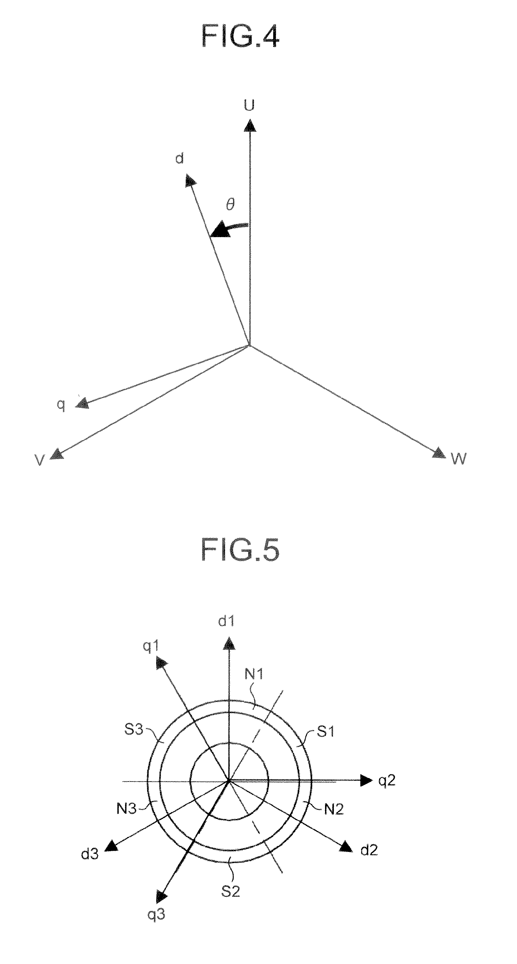

As a general representative example of a mathematical model of a motor, a model in the dq coordinate system is known. As illustrated in FIG. 4, this dq coordinate system model is mathematically derived by transforming a motor characteristic equation in a three-phase coordinate system (static coordinate system indicated by three coordinate axes of the U-phase axis, the V-phase axis, and the W-phase axis) into that in the dq coordinate system (coordinate system rotating together with the rotor indicated by two coordinate axes of the d-axis and the q-axis).

FIG. 5 illustrates positions of d-axes and q-axes in the actual rotor 100. In this example, because the number of pole pairs is three (one half of a magnet pole count of six), for each of the d-axis and the q-axis in the dq coordinate system, three d-axes (hereinafter, referred to as actual d-axes) passing through the centers of north poles of the permanent magnets 120 and three q-axes (hereinafter, referred to as actual q-axes) passing between the neighboring permanent magnets 120 of the rotor 100 exist. To distinguish the actual d-axes and the actual q-axis from each other, names are given as d1-axis, d2-axis, d3-axis, q1-axis, q2-axis, and q3-axis in a clockwise order as illustrated in FIG. 5.

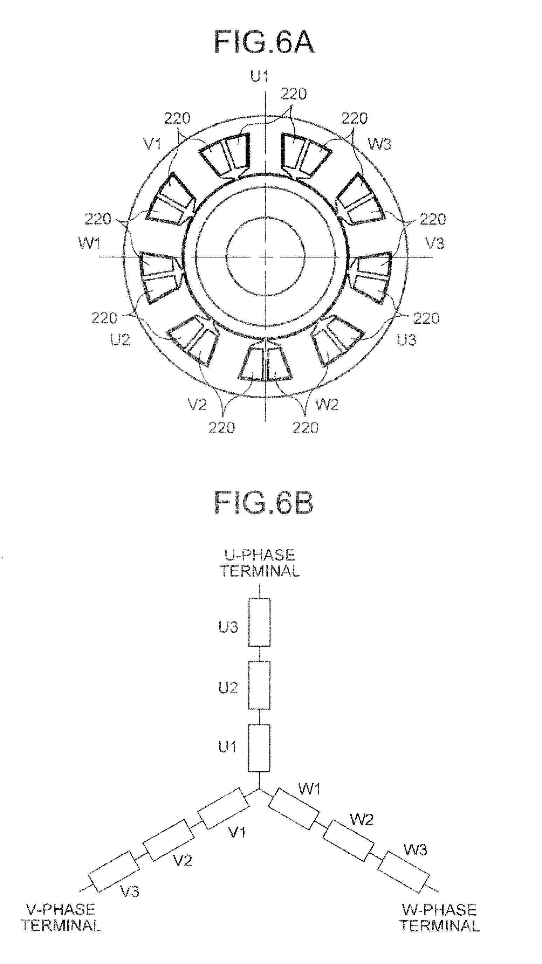

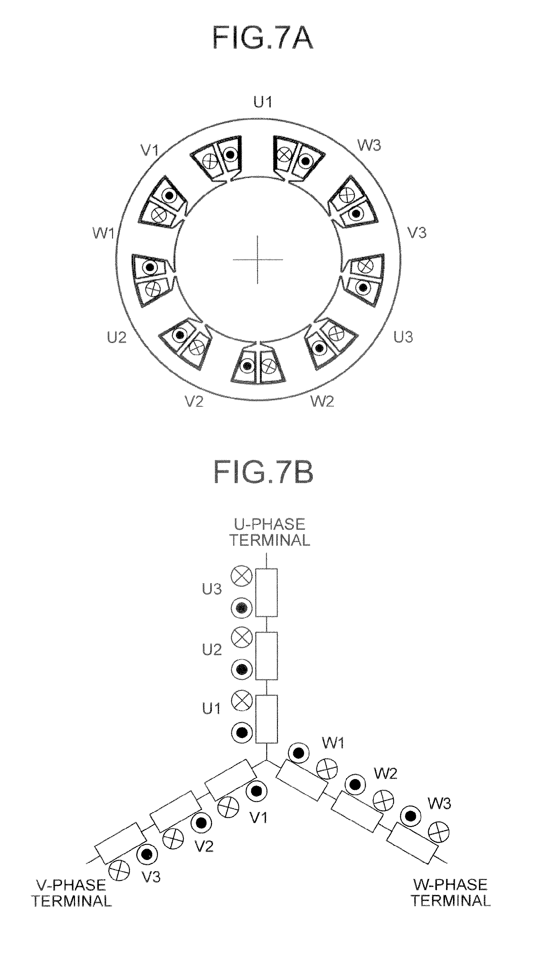

The stator 200 of the motor of the comparative example is, as illustrated in FIG. 3, constructed of a stator core 210 including teeth portions 211 that are provided at approximately equal intervals along the circumferential direction, and a stator coils 220 that are wound around the teeth portions 211 by a concentrated winding method. The stator core 210 is formed of stacked magnetic steel sheets, for example. When the rotor 100 rotates in a counterclockwise direction, the stator coils 220 the number of which is nine in total are assigned to three phases, that is, to a U-phase, a V-phase, and a W-phase as illustrated in FIG. 6A and FIG. 6B. The wound directions of the respective stator coils 220 are set as illustrated in FIG. 7A and FIG. 7B. In FIG. 7A and FIG. 7B, the symbols of circled crosses indicate a direction being directed from up to down with respect to the plane of the paper, and the symbols of circled dots indicate a direction being directed from down to up with respect to the plane of the paper. The respective stator coils 220 are mutually connected as illustrated in FIG. 7B, and constitute a three-phase star connection as a whole.

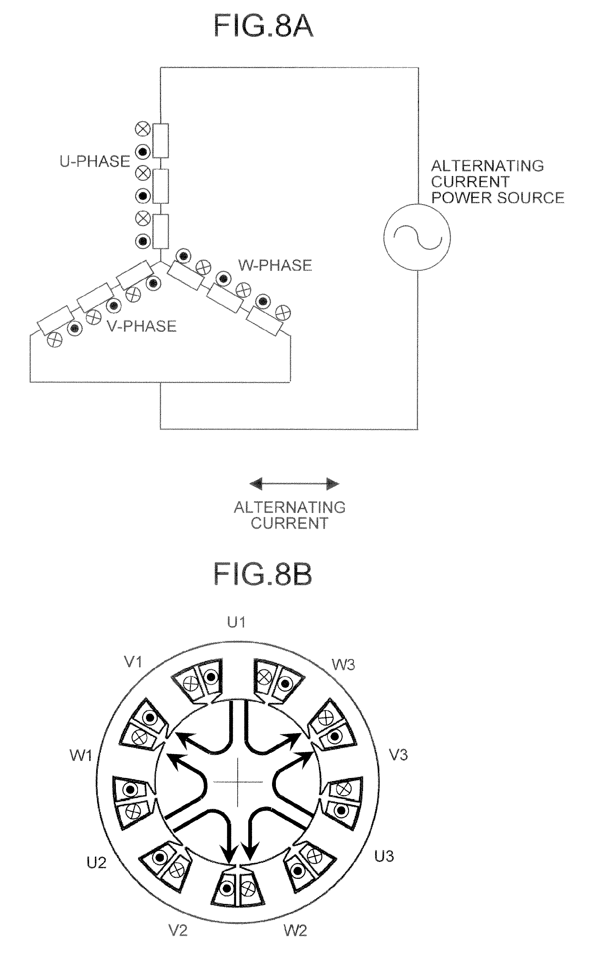

FIG. 8A is a diagram illustrating a method of applying an alternating current to the stator coils 220 of the motor according to the comparative example, and FIG. 8B is a diagram illustrating distribution of magnetic flux generated in this current application. When a V-phase terminal and a W-phase terminal of the stator coils are directly connected and an alternating current is applied from the terminals thus directly connected toward a U-phase terminal as illustrated in FIG. 8A, magnetic flux is generated as illustrated in FIG. 8B. FIG. 8B illustrates distribution of magnetic field generated by an alternating current at a given time, and illustrates the distribution at a given moment of magnetic flux that alternates in response to change in current. In FIG. 8B, the directions of the arrows each indicate a direction of magnetic flux (direction from a north pole toward a south pole). In this state of the stator 200, when the rotor 100 is installed so that the d1-axis of the rotor illustrated in FIG. 5 coincides with the center of the U1 stator coil in FIG. 8B, magnetic flux can be generated at positions corresponding to the d-axes of the rotor 100. In this state of the stator 200, when the rotor 100 is installed so that the q1-axis of the rotor 100 illustrated in FIG. 5 coincides with the center of the U1 stator coil 220 in FIG. 8B, magnetic flux can be generated in positions corresponding to the q-axes of the rotor 100.

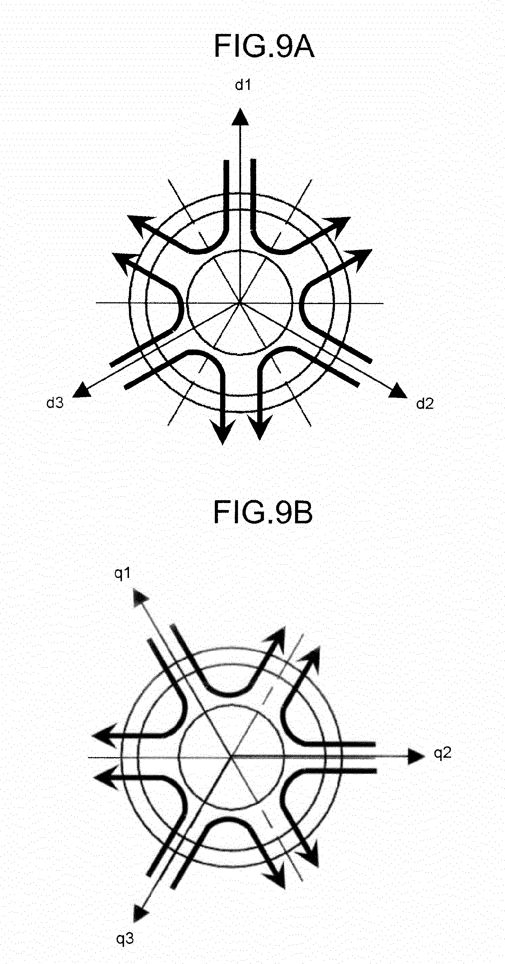

FIG. 9A and FIG. 9B illustrate density and distribution of magnetic flux when the magnetic flux is generated in positions of the d-axes and the q-axes of the rotor 100 of the motor of the comparative example by the above-described method. In FIG. 9A and FIG. 9B, the directions of the arrows each indicate a direction of magnetic flux (direction from a north pole toward a south pole), and the lines of the arrows are drawn having a larger width for a higher density of magnetic flux. Because the rotor 100 of the motor of the comparative example has constant and uniform electrical properties (e.g., electrical conductivity of the permanent magnets) in the circumferential direction, if the magnitude of magnetomotive force is fixed at a certain magnitude, magnetic flux with the same density is generated in any of three actual d-axes described above, and thus the line widths of the arrows are all the same. More specifically, the distribution of magnetic field is rotationally symmetrical in the circumferential direction of the rotor 100 (a cycle thereof is 120 degrees in mechanical angle in this example), and the magnetic flux density in a certain range of 180 degrees in mechanical angle does not become higher than the magnetic flux density in the other range of 180 degrees in mechanical angle. In other words, the magnetic flux density distribution waveform in the air gap generated by the rotor 100 does not have a magnetic flux density component one cycle of which is 360 degrees in mechanical angle.

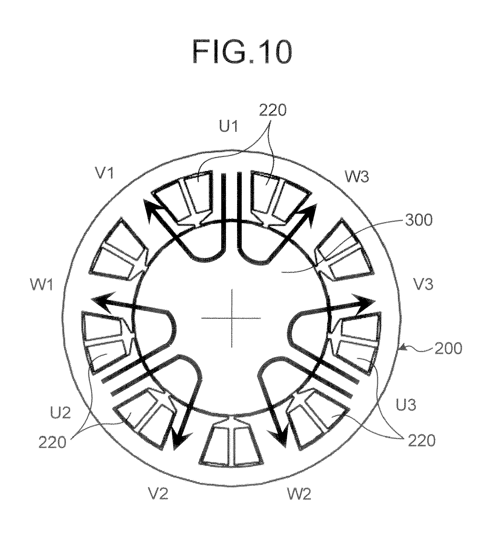

FIG. 10 illustrates distribution of magnetic flux when a cylindrical core (formed of stacked magnetic steel sheets) 300 is placed instead of the rotor 100 and an alternating current is applied from the U-phase terminal toward the V-phase terminal and the W-phase terminal of the stator coils 220. In FIG. 10, the directions of the arrows each indicate a direction of magnetic flux (direction from a north pole toward a south pole), and the lines of the arrows are drawn having a larger width for a higher density of magnetic flux. In the stator 200 of the motor of the comparative example, because the electrical properties (e.g., electrical conductivity) of the stator core 210 are uniform in the circumferential direction and further the winding numbers of the stator coils 220 are all the same, the distribution of magnetic field is rotationally symmetrical in the circumferential direction of the stator 200 (a cycle thereof is 120 degrees in mechanical angle in this example), and the magnetic flux density in a certain range of 180 degrees in mechanical angle does not become higher than the magnetic flux density in the other range of 180 degrees in mechanical angle. In other words, the magnetic flux density distribution waveform in the air gap generated by the stator 200 does not have a magnetic flux density component one cycle of which is 360 degrees in mechanical angle.

Because the motor of the comparative example detects the position and speed of the rotor 100 using a position sensor, any major problems do not occur even if the distribution of magnetic flux is rotationally symmetrical and both of the rotor 100 and the stator 200 do not have a magnetic flux density component in the air gap one cycle of which is 360 degrees in mechanical angle as described in the foregoing.

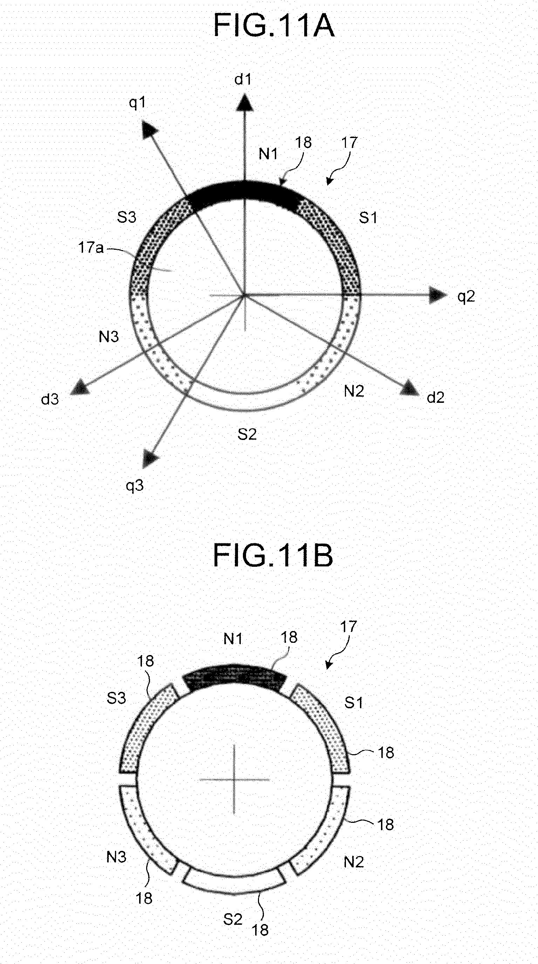

The rotor 17 and the stator 16 of the motor 10 according to the present embodiment illustrated in FIG. 2 will be described below with reference to FIG. 11A to FIG. 43B. Herein, a configuration is used that includes the rotor core 17a that has a cylindrical shape and on which the permanent magnets 18 having six poles are provided along the circumferential direction, and a motor is illustrated as a representative example in which the magnetic pole count of the rotor 17 is six, the number of coils of the stator 16 is nine, and the coils are in the form of concentrated winding.

In a rotor 17 of the embodiment of the present invention, the electrical conductivity of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as indicated by the density of dots in FIG. 11A and FIG. 11B, the electrical conductivity in the respective magnetic poles from a magnetic pole N1 to a magnetic pole S3 is distributed with a gradient in the ranges from 0 degrees to 360 degrees in mechanical angle. Herein, in FIGS. 11A and 11B, an area where the density of dots is high is a range where the electrical conductivity is high, and an area where the density of dots is low is a range where the electrical conductivity is low. FIG. 11A illustrates the rotor 17 in which six magnetic poles of N1, S1, N2, S2, N3, and S3 are formed in this order on the permanent magnets 18 in a ring shape, and FIG. 11B illustrates the rotor 17 in which of the permanent magnets 18 having six poles of N1, S1, N2, S2, N3, and S3 that are each independently formed are provided on the rotor core 17a.

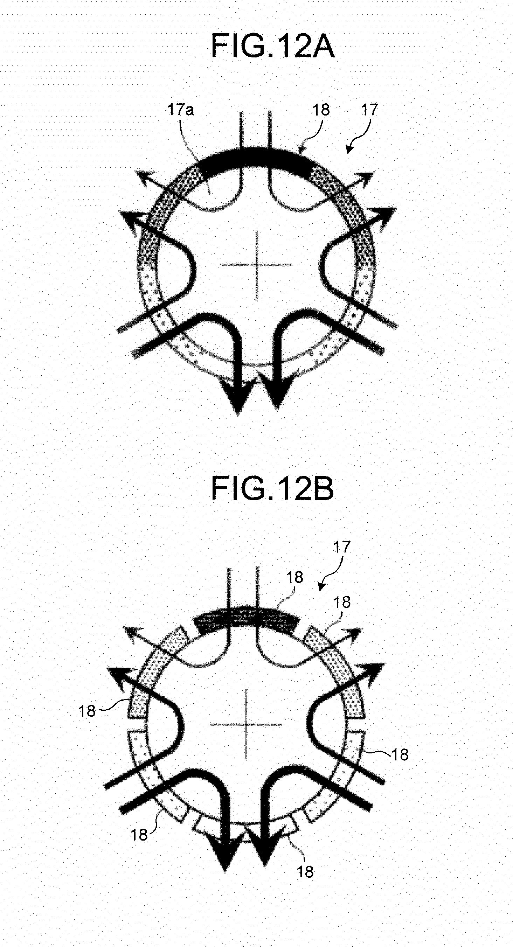

When an alternating current is applied to positions corresponding to the d-axes of the rotor illustrated in FIGS. 11A and 11B, density and distribution of magnetic flux generated in the rotor 17 of the present embodiment will be as illustrated in FIGS. 12A and 12B depending on the difference in electrical conductivity in the respective magnetic poles from the magnetic pole N1 to the magnetic pole S3. In FIGS. 12A and 12B, the directions of the arrows each indicate a direction of magnetic flux (direction from a north pole toward a south pole), and the lines of the arrows are drawn having a larger width for a higher density of magnetic flux. A higher electrical conductivity of the permanent magnets 18 increases an eddy current that is generated inside the permanent magnets 18 in response to the alternating current applied to the d-axes, thereby reducing the density of magnetic flux. Conversely, a lower electrical conductivity of the permanent magnets 18 reduces an eddy current that is generated inside the permanent magnets 18 in response to the alternating current applied to the d-axes, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIGS. 12A and 12B) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and a control method described later enables detection of the absolute position of the rotor 17.

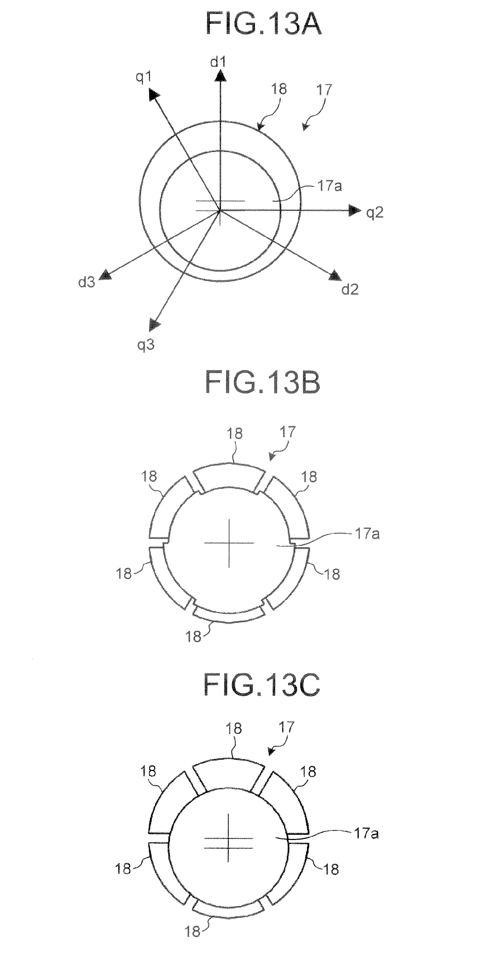

In a rotor 17 according to one embodiment of the present invention, the thickness (radial length) of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as illustrated in FIGS. 13A to 13C, the thickness of the permanent magnets 18 in the respective magnetic poles from the magnetic pole N1 to the magnetic pole S3 is distributed with a gradient in the ranges from 0 degrees to 360 degrees in mechanical angle.

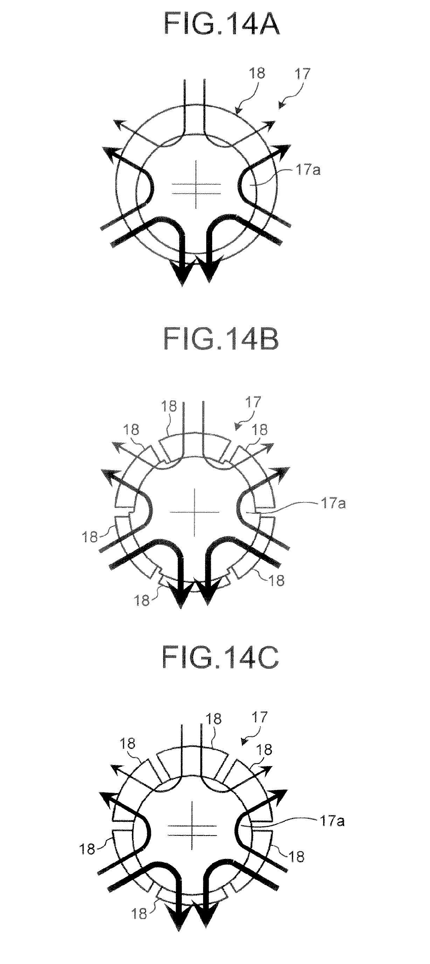

When an alternating current is applied to positions corresponding to the d-axes of the rotor 17 illustrated in FIGS. 13A, 13B, and 13C, density and distribution of magnetic flux generated in the rotor 17 of the present embodiment will be as illustrated in FIGS. 14A, 14B, and 14C. In FIGS. 14A, 14B, and 14C, the directions of the arrows each indicate a direction of magnetic flux (direction from a north pole toward a south pole), and the lines of the arrows are drawn having a larger width for a higher density of magnetic flux. A larger thickness of the permanent magnets 18 increases the magnetic resistance, thereby reducing the density of magnetic flux. Conversely, a smaller thickness of the permanent magnets 18 reduces the magnetic resistance, thereby increasing the density of magnetic flux. In the rotor 17 of the present embodiment, the thickness of the permanent magnets 18 differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIGS. 14A to 14C) becomes higher than the magnetic flux density in the other range of 180 degrees in mechanical angle. As described above, because the magnetic flux density distribution waveform in the air gap generated by the rotor 17 according to the embodiment has a magnetic flux density component one cycle of which is 360 degrees in mechanical angle, using this rotor 17 together with the stator 16 and the control method described later enables the detection of the absolute position of the rotor 17.

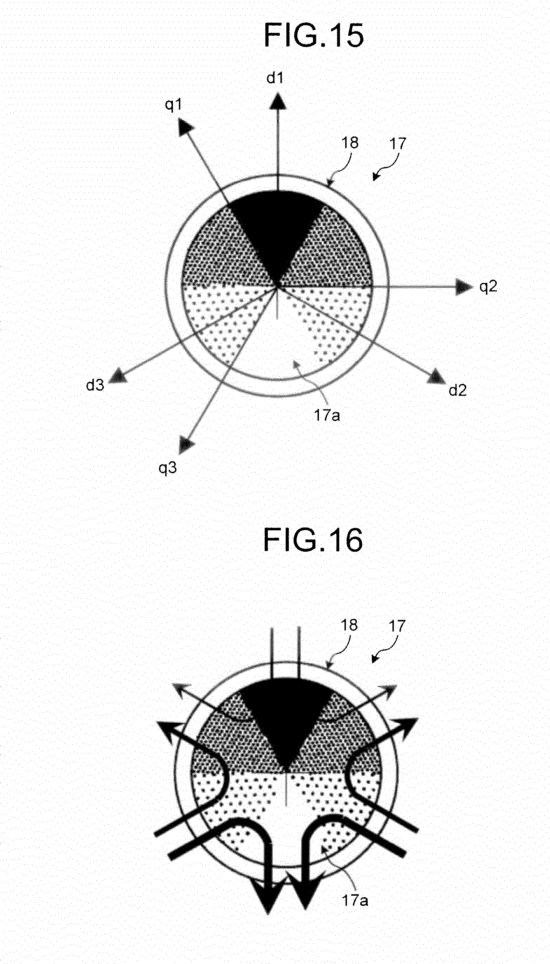

In a rotor 17 of one embodiment of the present invention, the electrical conductivity of the rotor core 17a provided on the inner diameter side of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as indicated by the density of dots in FIG. 15, the electrical conductivity of the rotor core 17a in the respective magnetic poles from a magnetic pole N1 to a magnetic pole S3 is distributed with a gradient in the ranges from 0 degrees to 360 degrees in mechanical angle. Herein, in FIG. 15, an area where the density of dots is high is a range where the electrical conductivity is high, and an area where the density of dots is low is a range where the electrical conductivity is low.

When an alternating current is applied to positions corresponding to the d-axes of the rotor 17 illustrated in FIG. 15, density and distribution of magnetic flux generated in the rotor 17 of the present embodiment will be as illustrated in FIG. 16 depending on the difference of electrical conductivity of the rotor core 17a in the respective magnetic poles from the magnetic pole N1 to the magnetic pole S3. In FIG. 16, the directions of the arrows each indicate a direction of magnetic flux (direction from a north pole toward a south pole), and the lines of the arrows are drawn having a larger width for a higher density of magnetic flux. A higher electrical conductivity of the rotor core 17a increases an eddy current that is generated inside the rotor core 17a in response to the alternating current applied to the d-axes, thereby reducing the density of magnetic flux. Conversely, a lower electrical conductivity of the rotor core 17a reduces an eddy current that is generated inside the rotor core 17a in response to the alternating current applied to the d-axes, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIG. 16) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

Each of the above-described embodiments may be adopted singly, or two or more of the embodiments may be adopted at the same time.

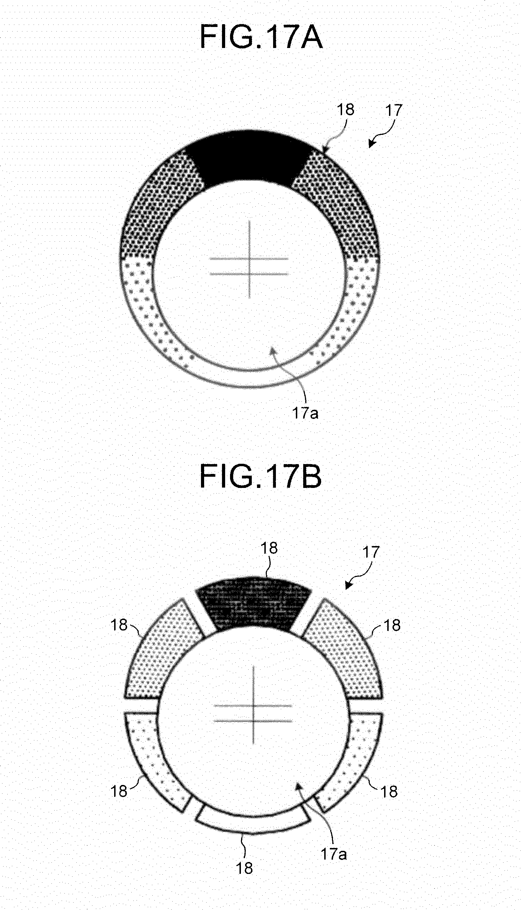

FIGS. 17A and 17B illustrate examples in which two of the above-described embodiments are adopted at the same time. More specifically, the electrical conductivity of the permanent magnets 18 differs for each of ranges of the magnetic poles, and also the thickness (radial length) of the permanent magnets 18 differs for each of the ranges of magnetic poles. It is evident from the above-described logic that the magnetic flux density distribution waveform in the air gap generated by the rotor 17 has a magnetic flux density component one cycle of which is 360 degrees in mechanical angle even when these modifications are used. FIG. 17A illustrates the rotor 17 in which the permanent magnets 18 in a ring shape having a different thickness (radial length) gradually changing in a range of 180 degrees are provided around the rotor core 17a, and FIG. 17B illustrates the rotor 17 in which the permanent magnets 18 having a different thickness (radial length) are provided around the rotor core 17a.

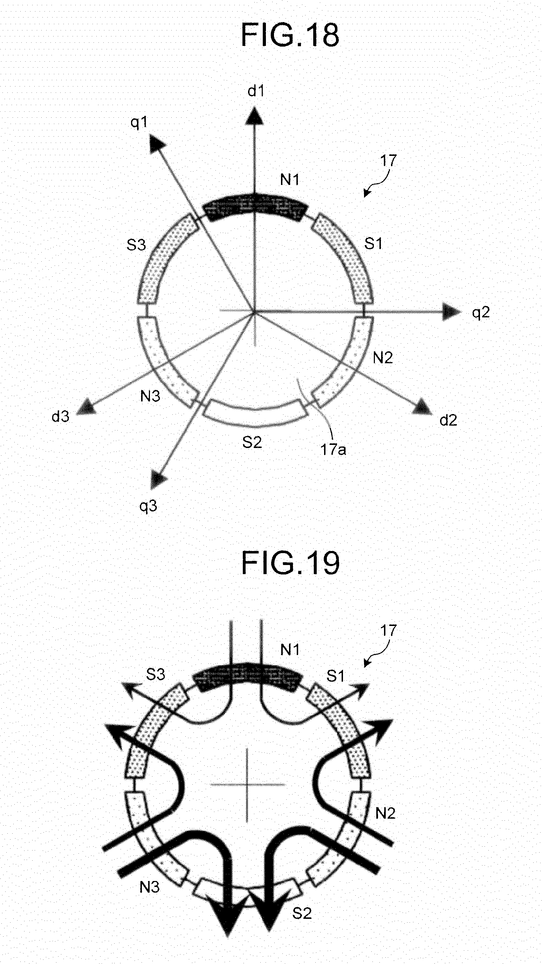

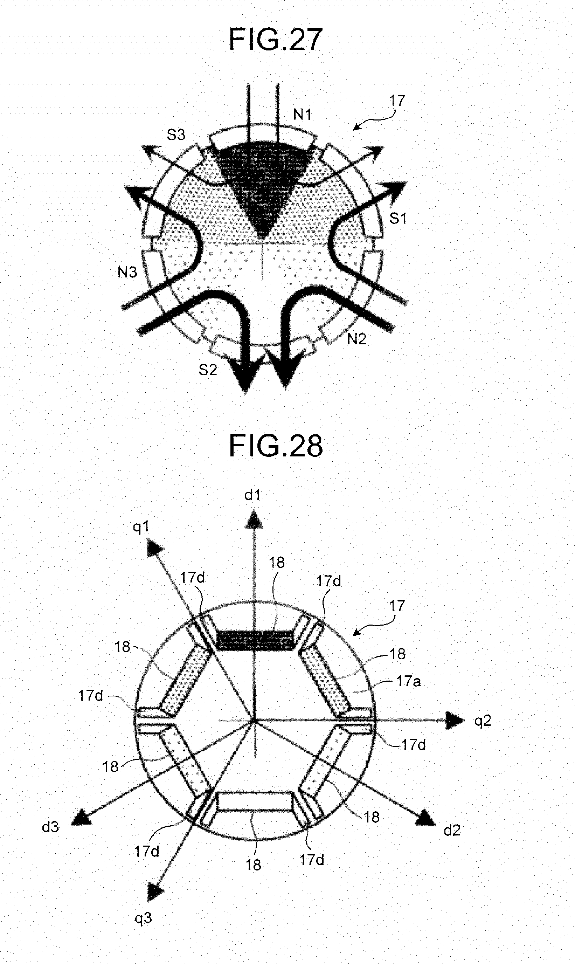

The above embodiments are embodiments in the case where the installation configuration of the permanent magnets 18 onto the rotor 17 is a surface permanent magnet type (SPM type), but based on similar consideration, embodiments in the case where the installation configuration of the permanent magnet 18 is an inset type or an interior permanent magnet type (IPM type) can be easily proposed. Examples thereof will be described below. FIG. 18 to FIG. 27 illustrate the inset type, and FIG. 28 to FIG. 35C illustrate the interior permanent magnet type.

In a rotor 17 of one embodiment of the present invention, the electrical conductivity of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as indicated by the density of dots in FIG. 18, the electrical conductivity in the respective magnetic poles from a magnetic pole N1 to a magnetic pole S3 is distributed with a gradient in the ranges from 0 degrees to 360 degrees in mechanical angle. Herein, in FIG. 18, an area where the density of dots is high is a range where the electrical conductivity is high, and an area where the density of dots is low is a range where the electrical conductivity is low.

When an alternating current is applied to positions corresponding to the d-axes of the rotor 17 illustrated in FIG. 18, density and distribution of magnetic flux generated in the rotor 17 of the present embodiment will be as illustrated in FIG. 19 depending on the difference of electrical conductivity in the respective magnetic poles from the magnetic pole N1 to the magnetic pole S3. In FIG. 19, the directions of the arrows each indicate a direction of magnetic flux (direction from a north pole toward a south pole), and the lines of the arrows are drawn having a larger width for a higher density of magnetic flux. A higher electrical conductivity of the permanent magnets 18 increases an eddy current that is generated inside the permanent magnets 18 in response to the alternating current applied to the d-axes, thereby reducing the density of magnetic flux. Conversely, a lower electrical conductivity of the permanent magnets 18 reduces an eddy current that is generated inside the permanent magnets 18 in response to the alternating current applied to the d-axes, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIG. 19) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

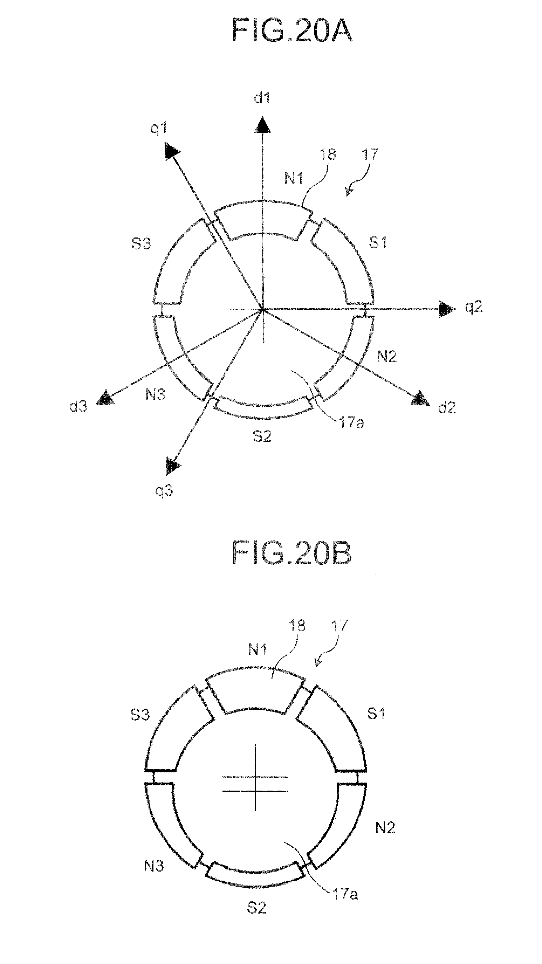

In a rotor 17 according to one embodiment of the present invention, the thickness (radial length) of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as illustrated in FIGS. 20A and 20B, the thickness of the permanent magnets 18 in the respective magnetic poles from the magnetic pole N1 to the magnetic pole S3 is distributed with a gradient in the ranges from 0 degrees to 360 degrees in mechanical angle. FIG. 20A illustrates the rotor 17 in which the thickness (radial length) of the permanent magnets 18 decreases in a gradual and stepwise manner at S1 and S3 and then at N2 and N3 from the maximum N1 to the minimum S2. In contrast, FIG. 20B illustrates the rotor 17 using permanent magnets 18 each of which is in a bilaterally asymmetrical shape and in which the thickness (radial length) of each of S1 and S3 and also N2 and N3 varies in a gradual and smooth manner from the maximum N1 to the minimum S2.

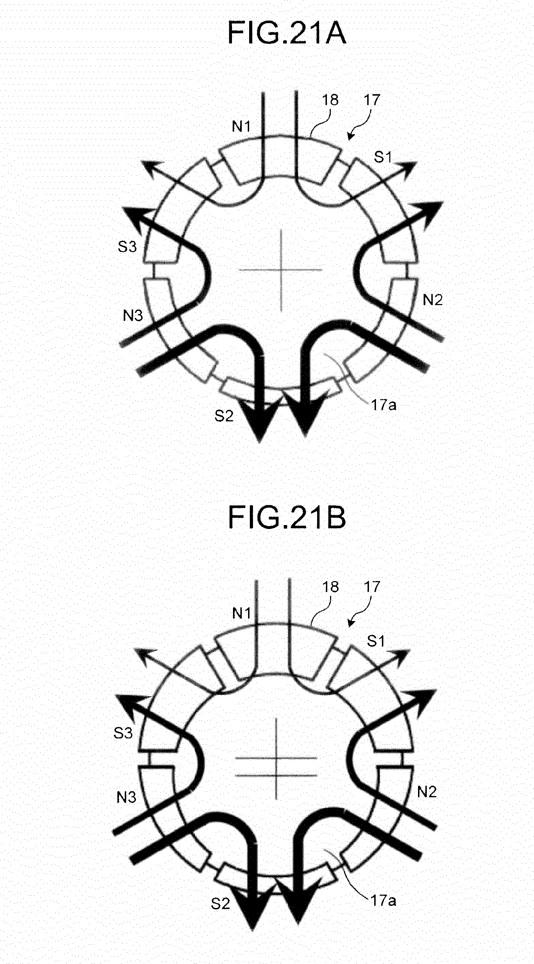

When an alternating current is applied to positions corresponding to the d-axes of the rotor 17 illustrated in FIGS. 20A and 20B, density and distribution of magnetic flux generated in the rotor 17 of the present embodiment will be as illustrated in FIGS. 21A and 21B. In FIGS. 21A and 21B, the directions of the arrows each indicate a direction of magnetic flux (direction from a north pole toward a south pole), and the lines of the arrows are drawn having a larger width for a higher density of magnetic flux. A larger thickness of the permanent magnets 18 increases the magnetic resistance, thereby reducing the density of magnetic flux. Conversely, a smaller thickness of the permanent magnets 18 reduces the magnetic resistance, thereby increasing the density of magnetic flux. In the rotor 17 of the present embodiment, the thickness of the permanent magnets 18 differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIGS. 21A and 21B) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

The above embodiments are embodiments in which the rotor 17 has magnetic anisotropy with attention paid to the magnetic flux generated in positions corresponding to the d-axes of the rotor 17, but embodiments can also be easily proposed in which the rotor 17 has magnetic anisotropy with attention paid to the magnetic flux generated in positions corresponding to the q-axes of the rotor 17. Examples thereof will be described below.

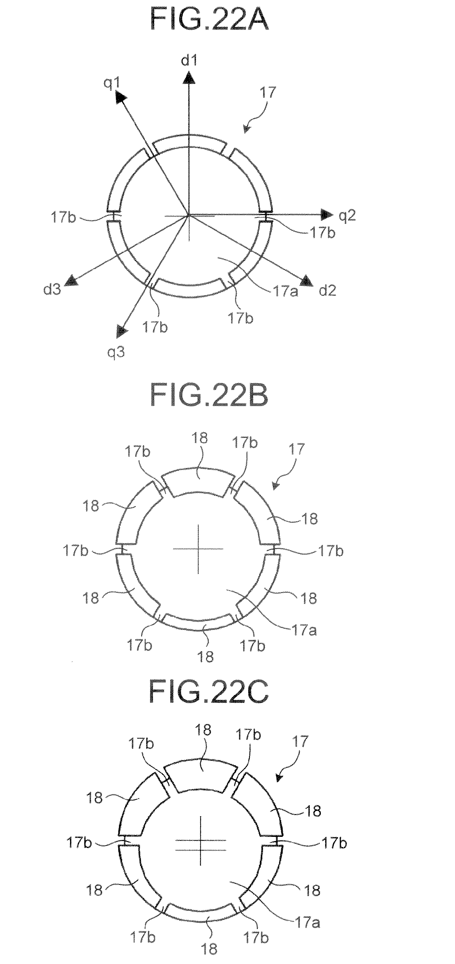

In a rotor 17 of one embodiment of the present invention, the height (radial length) of salient poles 17b of the rotor core 17a differs in the circumferential direction so that the magnetic flux density distribution waveform in the air gap generated by the rotor 17 has a magnetic flux density component one cycle of which is 360 degrees in mechanical angle. More specifically, as illustrated in FIGS. 22A, 22B, and 22C, the height of the six salient poles 17b is distributed with a gradient in ranges from 0 degrees to 360 degrees in mechanical angle.

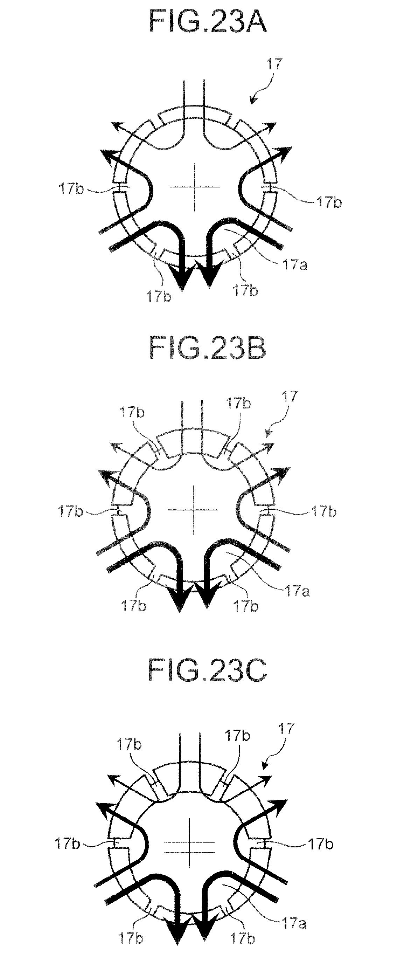

When an alternating current is applied to positions corresponding to the d-axes of the rotor 17 illustrated in FIGS. 22A, 22B, and 22C, density and distribution of magnetic flux generated in the rotor 17 of the present embodiment will be as illustrated in FIGS. 23A, 23B, and 23C. In FIGS. 23A, 23B, and 23C, the directions of the arrows each indicate a direction of magnetic flux (direction from a north pole toward a south pole), and the lines of the arrows are drawn having a larger width for a higher density of magnetic flux. A smaller height of the salient poles 17b of the rotor core 17a increases the magnetic resistance, thereby reducing the density of magnetic flux. Conversely, a larger height of the salient poles 17b of the rotor core 17a reduces the magnetic resistance, thereby increasing the density of magnetic flux. In the rotor 17 of the present embodiment, the height of the salient poles 17b of the rotor core 17a differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIGS. 23A, 23B, and 23C) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

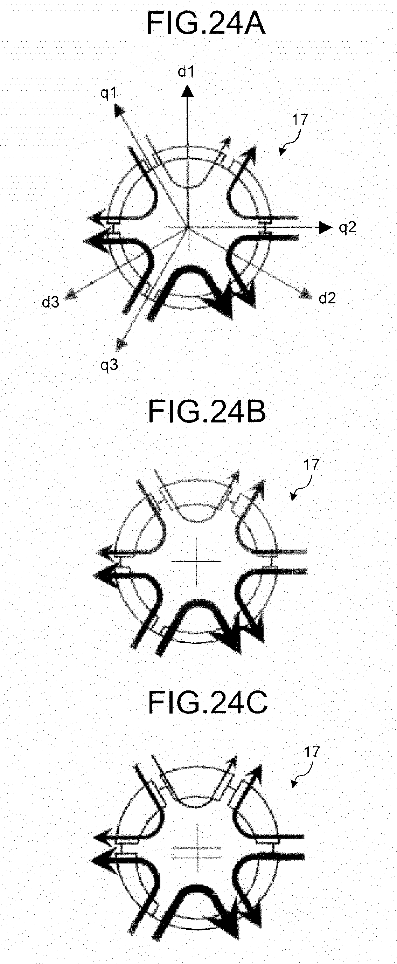

When an alternating current is applied to positions corresponding to the q-axes of the rotor 17 illustrated in FIGS. 24A, 24B, and 24C, density and distribution of magnetic flux generated in the rotor 17 of the present embodiment will be as illustrated in FIGS. 24A, 24B, and 24C. In FIGS. 24A, 24B, and 24C, the directions of the arrows each indicate a direction of magnetic flux (direction from a north pole toward a south pole), and the lines of the arrows are drawn having a larger width for a higher density of magnetic flux. A smaller height of the salient poles 17b of the rotor core 17a increases the magnetic resistance, thereby reducing the density of magnetic flux. Conversely, a larger height of the salient poles 17b of the rotor core 17a reduces the magnetic resistance, thereby increasing the density of magnetic flux. In the rotor 17 of the present embodiment, the height of the salient poles 17b of the rotor core 17a differs for each of the magnetic poles as described above, which causes a difference in the density of magnetic flux generated around the three actual q-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIGS. 24A, 24B, and 24C) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

Each of the above-described embodiments may be adopted singly, or two or more of the embodiments may be adopted at the same time.

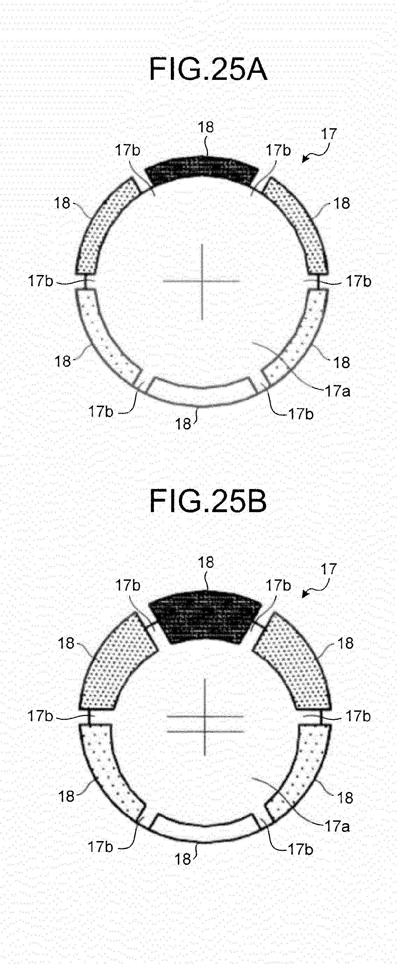

FIGS. 25A and 25B illustrate examples in which two of the above-described embodiments are adopted at the same time. Illustrated is an example in which the electrical conductivity of the permanent magnets 18 differs for each of ranges of the magnetic poles, and also the height of the salient poles 17b of the rotor core 17a differs in the circumferential direction. Also illustrated is an example in which the electrical conductivity of the permanent magnets 18 differs for each of ranges of the magnetic poles, and also the thickness (radial length) of the permanent magnets 18 differs for each of the ranges of the magnetic poles, and further the height of the salient poles 17b of the rotor core 17a differs in the circumferential direction. It is evident from the above-described logic that the magnetic flux density distribution waveform in the air gap generated by the rotor 17 has a magnetic flux density component one cycle of which is 360 degrees in mechanical angle even when these modifications are used. The rotor 17 illustrated in FIG. 25B herein uses the permanent magnets 18 in the shape illustrated in FIG. 20B.

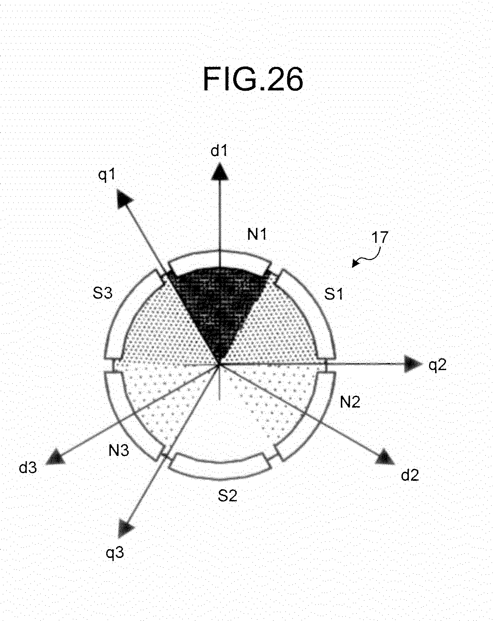

In a rotor 17 of one embodiment of the present invention, the electrical conductivity of the rotor core 17a provided on the inner diameter side of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as indicated by the density of dots in FIG. 26, the electrical conductivity of the rotor core 17a in the respective magnetic poles from the magnetic pole N1 to the magnetic pole S3 is distributed with a gradient in the ranges from 0 degrees to 360 degrees in mechanical angle. Herein, in FIG. 26, an area where the density of dots is high is a range where the electrical conductivity is high, and an area where the density of dots is low is a range where the electrical conductivity is low.

When an alternating current is applied to positions corresponding to the d-axes of the rotor 17 illustrated in FIG. 26, density and distribution of magnetic flux generated in the rotor 17 of the present embodiment will be as illustrated in FIG. 27 depending on the difference of electrical conductivity of the rotor core 17a in the respective magnetic poles from the magnetic pole N1 to the magnetic pole S3. In FIG. 27, the directions of the arrows each indicate a direction of magnetic flux (direction from a north pole toward a south pole), and the lines of the arrows are drawn having a larger width for a higher density of magnetic flux. A higher electrical conductivity of the rotor core 17a increases an eddy current that is generated inside the rotor core 17a in response to the alternating current applied to the d-axes, thereby reducing the density of magnetic flux. Conversely, a lower electrical conductivity of the rotor core 17a reduces an eddy current that is generated inside the rotor core 17a in response to the alternating current applied to the d-axes, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIG. 27) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

In a rotor 17 of one embodiment of the present invention, the electrical conductivity of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as indicated by the density of dots in FIG. 28, the electrical conductivity in the respective magnetic poles from a magnetic pole N1 to a magnetic pole S3 is distributed with a gradient in the ranges from 0 degrees to 360 degrees in mechanical angle. Herein, in FIG. 28, an area where the density of dots is high is a range where the electrical conductivity is high, and an area where the density of dots is low is a range where the electrical conductivity is low. Note that the rotors 17 illustrated in the drawings including FIG. 28 to FIG. 35C are those of the interior permanent magnet type, in which the permanent magnets 18 are arranged in magnetic slots 17d that are magnet arrangement holes formed in the rotor core 17a.

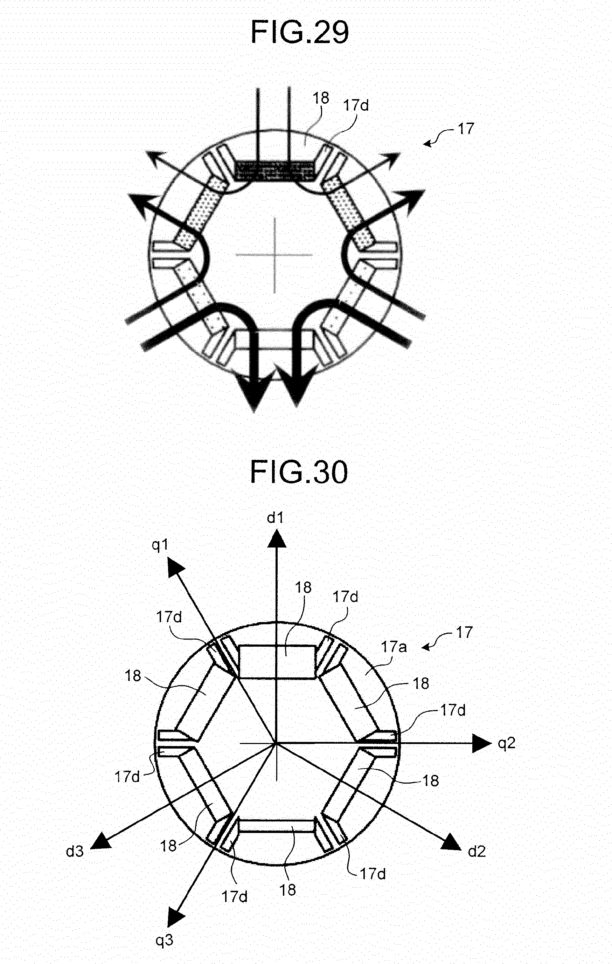

When an alternating current is applied to positions corresponding to the d-axes of the rotor 17 illustrated in FIG. 28, density and distribution of magnetic flux generated in the rotor 17 of the present embodiment will be as illustrated in FIG. 29 depending on the difference of electrical conductivity in the respective magnetic poles from the magnetic pole N1 to the magnetic pole S3. In FIG. 29, the directions of the arrows each indicate a direction of magnetic flux (direction from a north pole toward a south pole), and the lines of the arrows are drawn having a larger width for a higher density of magnetic flux. A higher electrical conductivity of the permanent magnets 18 increases an eddy current that is generated inside the permanent magnets 18 in response to the alternating current applied to the d-axes, thereby reducing the density of magnetic flux. Conversely, a lower electrical conductivity of the permanent magnets 18 reduces an eddy current that is generated inside the permanent magnets 18 in response to the alternating current applied to the d-axes, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIG. 29) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

In a rotor 17 of one embodiment of the present invention, the thickness (radial length) of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as illustrated in FIG. 30, the thickness of the permanent magnets 18 in the respective magnetic poles from a magnetic pole N1 to a magnetic pole S3 is distributed with a gradient in the ranges from 0 degrees to 360 degrees in mechanical angle. In the rotor 17 illustrated in FIG. 30, the thickness (radial length) of the permanent magnets 18 is appropriately changed.

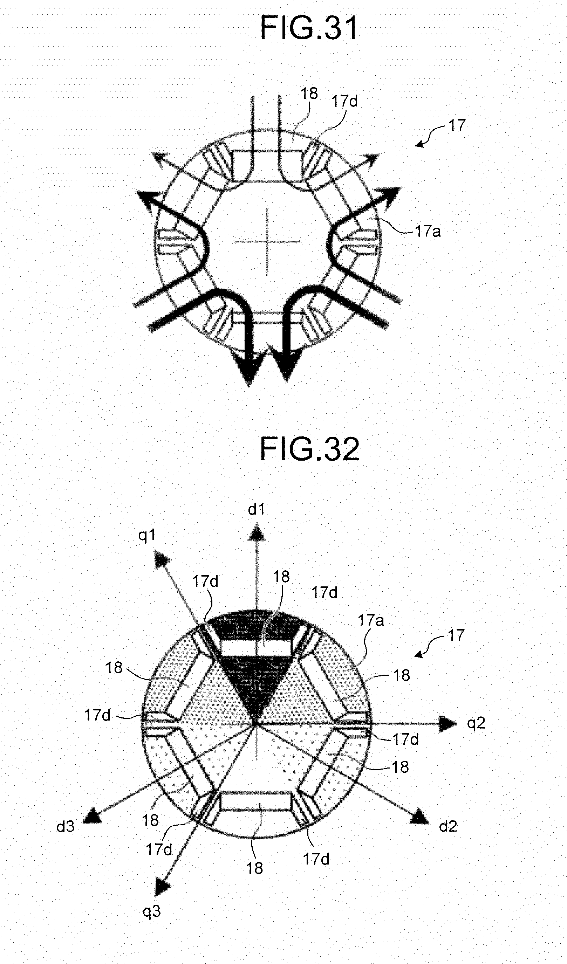

When an alternating current is applied to positions corresponding to the d-axes of the rotor 17 illustrated in FIG. 30, density and distribution of magnetic flux generated in the rotor 17 of the present embodiment will be as illustrated in FIG. 31. In FIG. 31, the directions of the arrows each indicate a direction of magnetic flux (direction from a north pole toward a south pole), and the lines of the arrows are drawn having a larger width for a higher density of magnetic flux. A larger thickness of the permanent magnets 18 increases the magnetic resistance, thereby reducing the density of magnetic flux. Conversely, a smaller thickness of the permanent magnets 18 reduces the magnetic resistance, thereby increasing the density of magnetic flux. In the rotor 17 of the present embodiment, the thickness of the permanent magnets 18 differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIG. 31) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

In a rotor 17 of one embodiment of the present invention, the electrical conductivity of the rotor core 17a provided on the inner diameter side of the permanent magnets 18 differs for each of ranges of the magnetic poles so that the magnetic flux density distribution waveform in the air gap generated by the rotor 17 has a magnetic flux density component one cycle of which is 360 degrees in mechanical angle. More specifically, as indicated by the density of dots in FIG. 32, the electrical conductivity of the rotor core 17a in the respective magnetic poles from the magnetic pole N1 to the magnetic pole S3 is distributed with a gradient in the ranges from 0 degrees to 360 degrees in mechanical angle. Herein, in FIG. 32, an area where the density of dots is high is a range where the electrical conductivity is high, and an area where the density of dots is low is a range where the electrical conductivity is low.

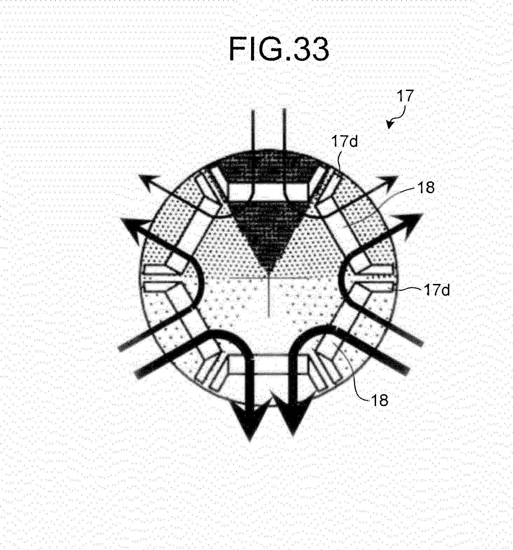

When an alternating current is applied to positions corresponding to the d-axes of the rotor 17 illustrated in FIG. 32, density and distribution of magnetic flux generated in the rotor 17 of the present embodiment will be as illustrated in FIG. 33 depending on the difference of electrical conductivity of the rotor core 17a in the respective magnetic poles from the magnetic pole N1 to the magnetic pole S3. In FIG. 33, the directions of the arrows each indicate a direction of magnetic flux (direction from a north pole toward a south pole), and the lines of the arrows are drawn having a larger width for a higher density of magnetic flux. A higher electrical conductivity of the rotor core 17a increases an eddy current that is generated inside the rotor core 17a in response to the alternating current applied to the d-axes, thereby reducing the density of magnetic flux. Conversely, a lower electrical conductivity of the rotor core 17a reduces an eddy current that is generated inside the rotor core 17a in response to the alternating current applied to the d-axes, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIG. 33) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

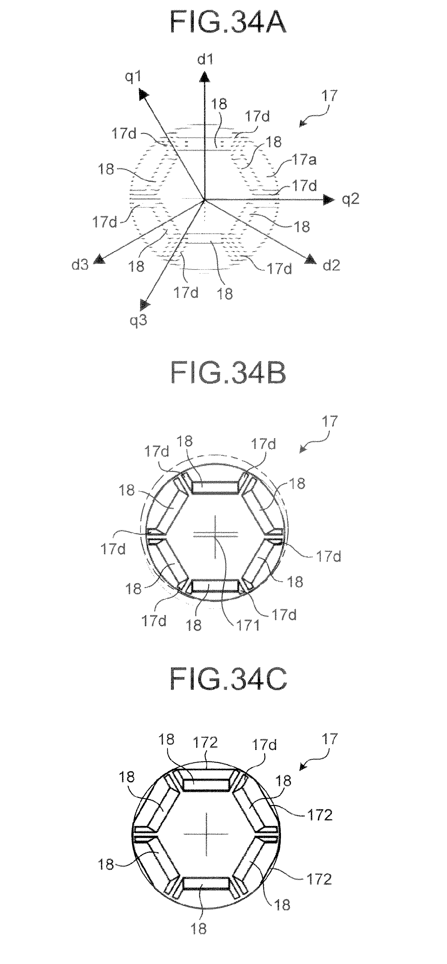

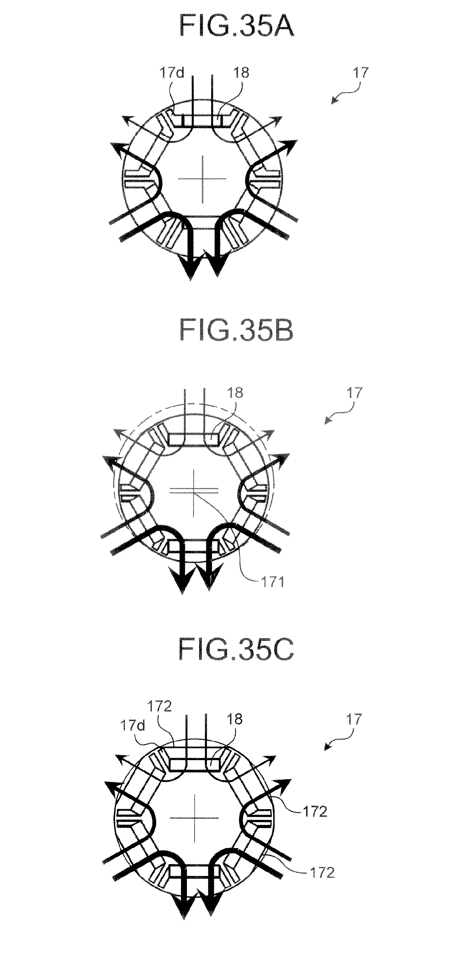

In a rotor 17 of one embodiment of the present invention, the shape of the rotor core 17a differs for each of ranges of the magnetic poles so that the magnetic flux density distribution waveform in the air gap generated by the rotor 17 has a magnetic flux density component one cycle of which is 360 degrees in mechanical angle. More specifically, as illustrated in FIGS. 34A, 34B, and 34C, the shape of the rotor core 17a in the respective magnetic poles from the magnetic pole N1 to the magnetic pole S3 is different in only one magnetic pole or distributed with certain regular variations in the ranges from 0 degrees to 360 degrees in mechanical angle. FIG. 35A illustrates the rotor 17 that is arranged so that the respective distances between a surface of the rotor core 17a facing the air gap and the permanent magnets 18 are changed by changing the depths of the magnet slots 17d, FIG. 35B illustrates the rotor 17 that has a circumferential surface centered on an eccentric axis 171 so that the outer diameter of the rotor core 17a gradually changes, and FIG. 35C illustrates the rotor 17 in which arc surfaces facing the permanent magnets 18 arranged are cut to change the respective cut depths 172.

When an alternating current is applied to positions corresponding to the d-axes of the rotor 17 illustrated in FIGS. 34A, 34B, and 34C, density and distribution of magnetic flux generated in the rotor 17 of the present embodiment will be as illustrated in FIGS. 35A, 35B, and 35C depending on the difference in the shape of the rotor core 17a in the respective magnetic poles from the magnetic pole N1 to the magnetic pole S3. In FIG. 35A, 35B, and 35C, the directions of the arrows each indicate a direction of magnetic flux (direction from a north pole toward a south pole), and the lines of the arrows are drawn having a larger width for a higher density of magnetic flux. As can be seen from any of FIGS. 35A, 35B, and 35C, a closer arrangement of the permanent magnets 18 to the surface of the rotor core 17a facing the air gap increases the magnetic resistance, thereby reducing the density of magnetic flux. In addition, a smaller outer diameter of the rotor core 17a increases the magnetic resistance, thereby reducing the density of magnetic flux. Conversely, more separate arrangement of the permanent magnets 18 from the surface of the rotor core 17a facing the air gap reduces the magnetic resistance, thereby increasing the density of magnetic flux. In addition, a larger outer diameter of the rotor core 17a reduces the magnetic resistance, thereby increasing the density of magnetic flux. In the rotor 17 of the present embodiment, the density of magnetic flux differs for each of the magnetic poles as described above, which causes a difference in the density of magnetic flux generated around the three actual d-axes. In other words, the distribution of magnetic flux becomes rotationally asymmetrical in the circumferential direction of the rotor 17, and the magnetic flux density in a certain range of 180 degrees in mechanical angle (lower side of the rotor 17 in FIGS. 35A, 35B, and 35C) becomes higher than the magnetic flux density in the other range of 180 degrees in mechanical angle. As described above, because the magnetic flux density distribution waveform in the air gap generated by the rotor 17 according to the one embodiment of the present invention has a magnetic flux density component one cycle of which is 360 degrees in mechanical angle, using this rotor 17 together with the stator 16 and the control method described later enables the detection of the absolute position of the rotor 17.

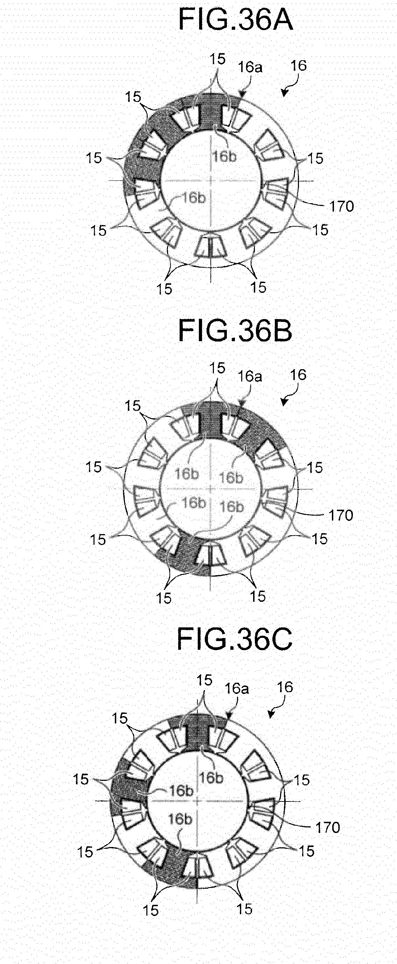

In a stator 16 according to one embodiment of the present invention, the electrical conductivity of the stator core 16a differs in the circumferential direction so that the magnetic flux density distribution waveform in the air gap generated by the stator 16 has a magnetic flux density component one cycle of which is 360 degrees in mechanical angle. In other words, as indicated by hatching in FIGS. 36A, 36B, and 36C, the electrical conductivity of the stator core 16a is distributed with a gradient in the ranges from 0 degrees to 360 degrees in mechanical angle. Herein, in FIGS. 36A, 36B, and 36C, an area where the density of hatching is high is a range where the electrical conductivity is low, and an area where the density of hatching is low is a range where the electrical conductivity is high.

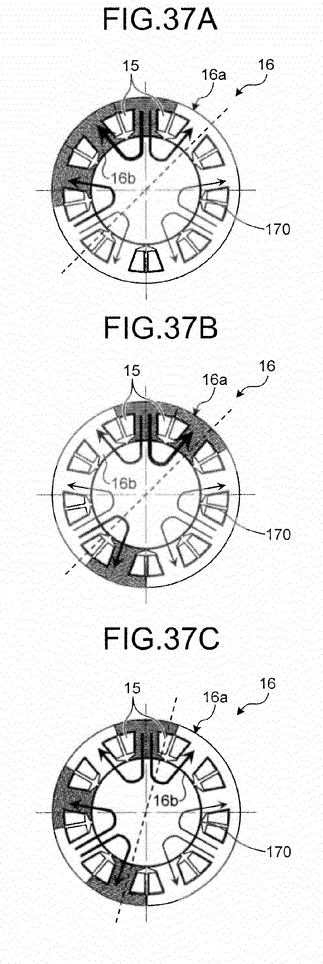

With respect to the stator 16 illustrated in FIGS. 36A, 36B, and 36C, the cylindrical core 170 (formed of stacked magnetic steel sheets) is placed instead of the rotor 17, and the distribution of magnetic flux when an alternating current is applied from the U-phase terminal toward the V-phase terminal and the W-phase terminal of the stator coil 15 becomes as illustrated in FIGS. 37A, 37B, and 37C. In FIGS. 37A, 37B, and 37C, the directions of the arrows each indicate a direction of magnetic flux (direction from a north pole toward a south pole), and the lines of the arrows are drawn having a larger width for a higher density of magnetic flux. Lower electrical conductivity of the stator core 16a reduces the magnetic resistance, thereby increasing the density of magnetic flux. Conversely, higher electrical conductivity of the stator core 16a increases the magnetic resistance, thereby reducing the density of magnetic flux. In the stator 16 of the present embodiment, the density of magnetic flux is distributed with a gradient in the circumferential direction as described above. In other words, the distribution of magnetic flux becomes rotationally asymmetrical in the circumferential direction of the stator 16, and the magnetic flux density in a certain range of 180 degrees in mechanical angle (upper-left side of the stator 16 in FIGS. 37A, 37B, and 37C) becomes higher than the magnetic flux density in the other range of 180 degrees in mechanical angle. As described above, because the magnetic flux density distribution waveform in the air gap generated by the stator 16 according to the one embodiment of the present invention has a magnetic flux density component one cycle of which is 360 degrees in mechanical angle, using this stator 16 together with any of the above-described rotors 17 and the control method enables the detection of the absolute position of the rotor 17.

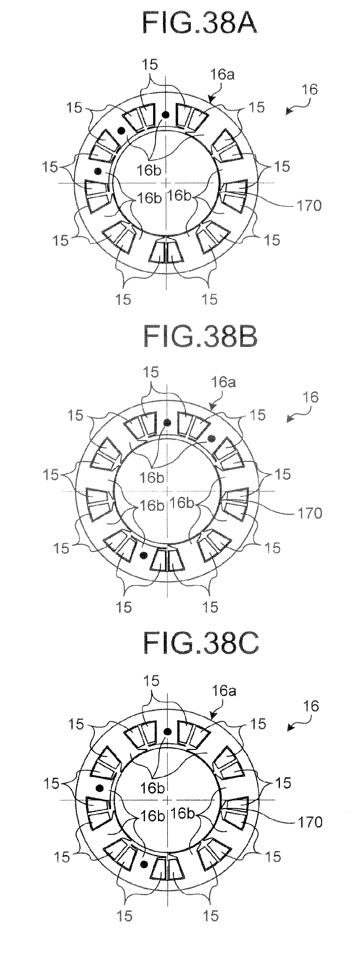

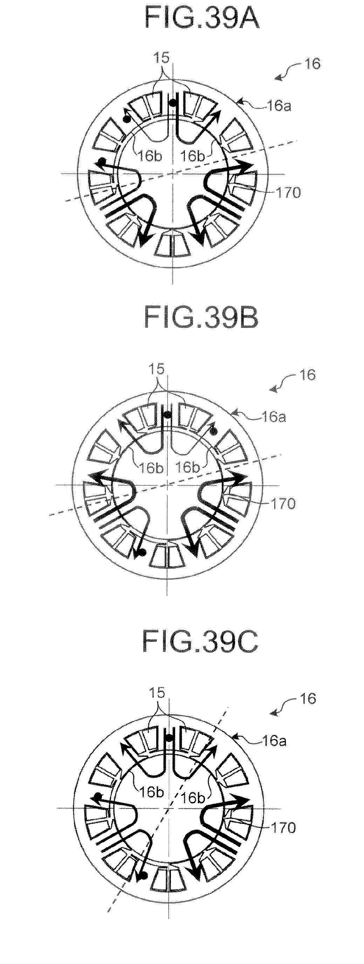

In a stator 16 according to one embodiment of the present invention, the radial lengths of the teeth 16b of the stator core 16a differ in the circumferential direction so that the magnetic flux density distribution waveform in the air gap generated by the stator 16 has a magnetic flux density component one cycle of which is 360 degrees in mechanical angle. In other words, as illustrated in FIGS. 38A, 38B, and 38C, the radial lengths of the teeth 16b are distributed with a gradient in the ranges from 0 degrees to 360 degrees in mechanical angle. In FIGS. 38A, 38B, and 38C and FIGS. 39A, 39B, and 39C, the teeth 16b having relatively shortened radial lengths are depicted with a symbol "•".

When a cylindrical core 170 (formed of stacked magnetic steel sheets) is placed instead of the rotor 17 and an alternating current is applied to the stator 16 illustrated in FIGS. 38A, 38B, and 38C from the U-phase terminal toward the V-phase terminal and the W-phase terminal of the stator coils 15, the distribution of the magnetic flux will be as illustrated in FIGS. 39A, 39B, and 39C. In FIGS. 39A, 39B, and 39C, the directions of the arrows each indicate a direction of magnetic flux (direction from a north pole toward a south pole), and the lines of the arrows are drawn having a larger width for a higher density of magnetic flux. A longer radial length of the teeth 16b of the stator core 16a reduces the magnetic resistance, thereby increasing the density of magnetic flux. Conversely, a shorter radial length of the teeth 16b of the stator core 16a increases the magnetic resistance, thereby reducing the density of magnetic flux. In the stator 16 of the present embodiment, the density of magnetic flux is distributed with a gradient in the circumferential direction as described above. In other words, the distribution of magnetic flux becomes rotationally asymmetrical in the circumferential direction of the stator 16, and the magnetic flux density in a certain range of 180 degrees in mechanical angle (lower right side of the stator 16 in FIGS. 39A, 39B, and 39C) becomes higher than the magnetic flux density in the other range of 180 degrees in mechanical angle. As described above, because the magnetic flux density distribution waveform in the air gap generated by the stator 16 according to the one embodiment of the present invention has a magnetic flux density component one cycle of which is 360 degrees in mechanical angle, using this stator 16 together with any of the above-described rotors 17 and the control method enables the detection of the absolute position of the rotor 17.

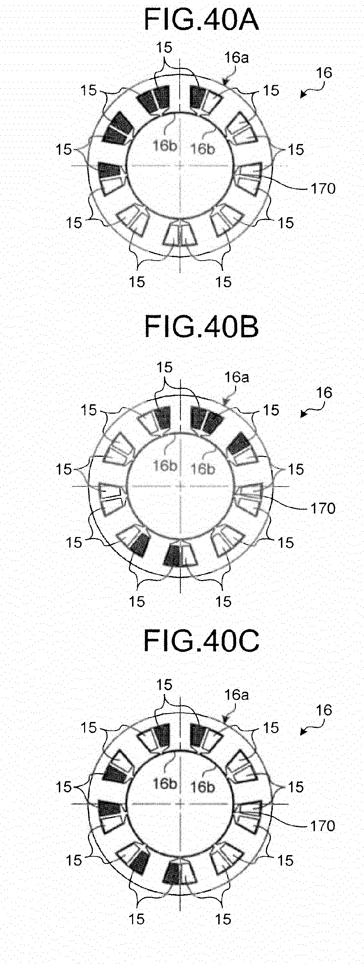

In a stator 16 according to one embodiment of the present invention, the winding numbers of the stator coils 15 differ in the circumferential direction so that the magnetic flux density distribution waveform in the air gap generated by the stator 16 has a magnetic flux density component one cycle of which is 360 degrees in mechanical angle. In other words, as illustrated in FIGS. 40A, 40B, and 40C, the winding numbers of the stator coils 15 are distributed with a gradient in the ranges from 0 degrees to 360 degrees in mechanical angle. In FIGS. 40A, 40B, and 40C, areas hatched in a higher density indicate the stator coils 15 the winding numbers of which are larger, and areas hatched in a lower density indicate the stator coils 15 the winding numbers of which are smaller.

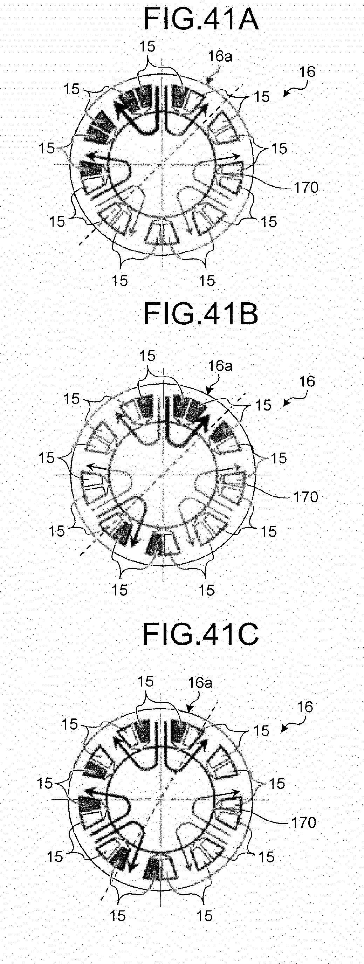

When a cylindrical core 170 (formed of stacked magnetic steel sheets) is placed instead of the rotor 17 and an alternating current is applied to the stator 16 illustrated in FIGS. 40A, 40B, and 40C from the U-phase terminal toward the V-phase terminal and the W-phase terminal of the stator coils 15, the distribution of the magnetic flux will be as illustrated in FIGS. 41A, 41B, and 41C. In FIGS. 41A, 41B, and 41C, the directions of the arrows each indicate a direction of magnetic flux (direction from a north pole toward a south pole), and the lines of the arrows are drawn having a larger width for a higher density of magnetic flux. A larger winding number of the stator coils 15 increases the magnetomotive force, thereby increasing the density of magnetic flux. Conversely, a smaller winding number of the stator coils 15 reduces the magnetomotive force, thereby reducing the density of magnetic flux. In the stator 16 of the present embodiment, the density of magnetic flux is distributed with a gradient in the circumferential direction as described above. In other words, the distribution of magnetic flux becomes rotationally asymmetrical in the circumferential direction of the stator 16, and the magnetic flux density in a certain range of 180 degrees in mechanical angle (upper left side of the stator 16 in FIGS. 41A, 41B, and 41C) becomes higher than the magnetic flux density in the other range of 180 degrees in mechanical angle. As described above, because the magnetic flux density distribution waveform in the air gap generated by the stator 16 according to the one embodiment of the present invention has a magnetic flux density component one cycle of which is 360 degrees in mechanical angle, using this stator 16 together with any of the above-described rotors 17 and the control method enables the detection of the absolute position of the rotor 17.

A principle that enables the absolute position of the rotor 17 to be detected with a combination of the rotor 17 and the stator 16 described above will be described below.

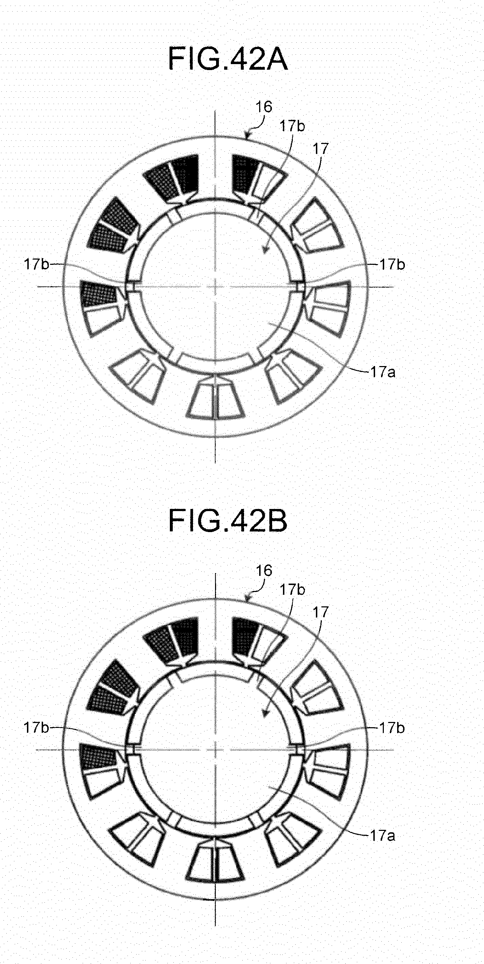

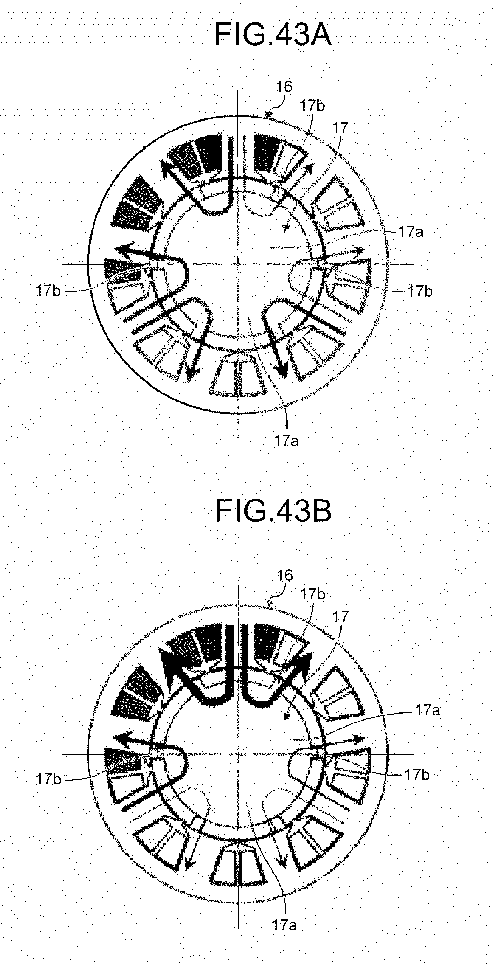

FIGS. 42A and 42B illustrate an example of the combination of the rotor 17 and the stator 16. In FIGS. 42A and 42B, the rotor 17 is of an inset type, and the heights (radial lengths) of the salient poles 17b of the rotor core 17a differ in the circumferential direction so that the magnetic flux density distribution waveform in the air gap generated by the rotor 17 has a magnetic flux density component one cycle of which is 360 degrees in mechanical angle. In the stator 16, the winding numbers of the stator coils 15 differ in the circumferential direction so that the magnetic flux density distribution waveform in the air gap generated by the stator 16 has a magnetic flux density component one cycle of which is 360 degrees in mechanical angle. When an alternating current is applied to the stator 16 illustrated in FIGS. 42A and 42B from the U-phase terminal toward the V-phase terminal and the W-phase terminal of the stator coils 15, the distribution of magnetic flux will be as illustrated in FIGS. 43A and 43B. In FIGS. 43A and 43B, the directions of the arrows each indicate a direction of magnetic flux (direction from a north pole toward a south pole), and the lines of the arrows are drawn having a larger width for a higher density of magnetic flux. FIG. 43A illustrates distribution of magnetic flux when the d1-axis of the rotor 17 illustrated in FIG. 22A is positioned in the center of a tooth 16b around which the U1 stator coil (see FIG. 6A) of the stator 16 is wound, and FIG. 43B illustrates distribution of magnetic flux when the d1-axis of the rotor 17 illustrated in FIGS. 22A is in a position opposite to the position of FIG. 43A by 180 degrees in mechanical angle.

The distributions of magnetic flux in FIG. 43A and FIG. 43B are determined by mutual influence of the magnetic anisotropy of the rotor 17 and the magnetic anisotropy of the stator 16 described above, and thus the distributions of magnetic flux are different depending on the absolute position of the rotor 17. Furthermore, because the magnetic flux density distribution waveforms in the air gap generated by the rotor 17 and the stator 16 described above each have a magnetic flux density component one cycle of which is 360 degrees in mechanical angle, a variation of the distribution of magnetic flux in response to the absolute position of the rotor 17 also has a magnetic flux component one cycle of which is 360 degrees in mechanical angle.

Thus, by measuring the variation of the distribution of magnetic flux in response to the absolute position of the rotor 17, the absolute position of the rotor 17 can be indirectly estimated even without a position sensor.

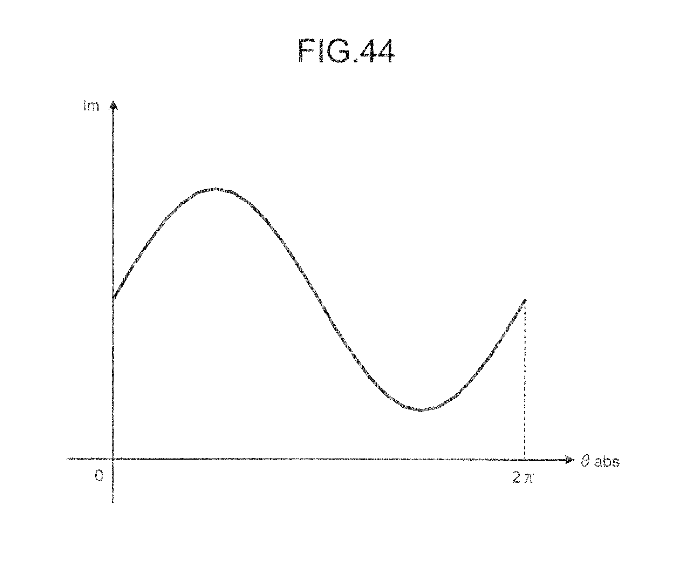

The variation of the distribution of magnetic flux in response to the absolute position of the rotor 17 can be indirectly measured by measuring the amplitude of a response current when a specific frequency of voltage is applied to the rotor coils 15. More specifically, a drawn graph in which the horizontal axis represents the absolute position θabs of the rotor 17 and the vertical axis represents the amplitude Im of the response current indicates a relation as described in FIG. 44, which substantially enables estimation of the absolute position θabs of the rotor 17 from the amplitude Im of the response current.

A procedure for estimating the absolute position θabs of the rotor 17 from the amplitude Im of the response current will be described below.

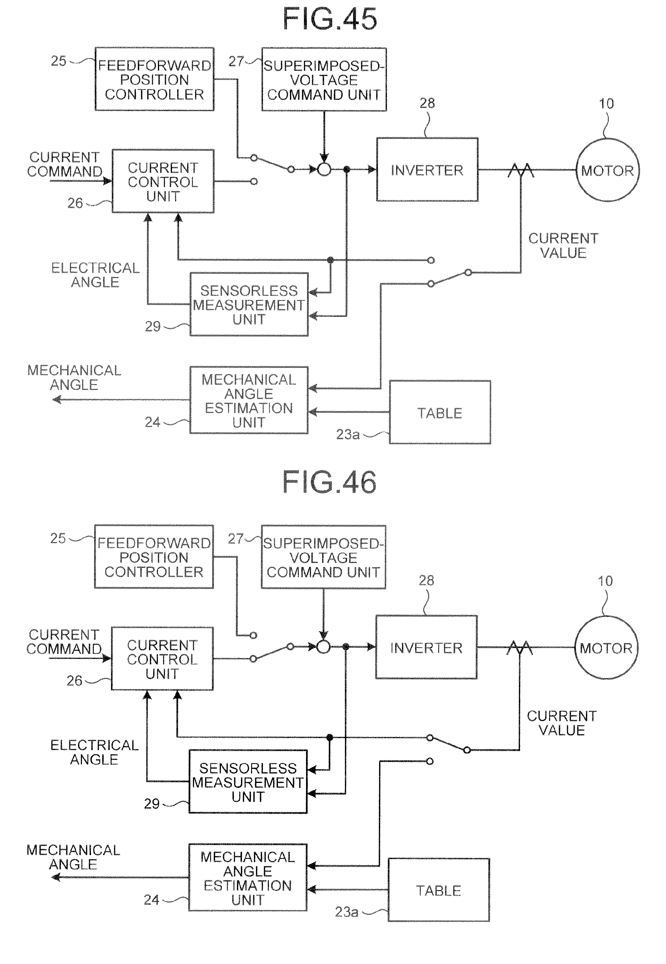

FIG. 45 and FIG. 46 are block diagrams of an absolute position encoderless servo system (motor system 1), FIG. 45 illustrates a system state when the absolute position is detected, and FIG. 46 illustrates a system state when the motor is driven.

As illustrated, the motor system 1 includes a superimposed-voltage command unit 27, and the control device 20 (FIG. 1) first gives, using the superimposed-voltage command unit 27 during the absolute position detection, a high-frequency voltage having a frequency and an amplitude that are determined in advance as a target to an inverter 28. The superimposed-voltage command unit 27 can also change the direction of superimposing the high-frequency voltage as desired from 0 to 360 degrees in electrical angle.

The inverter 28 applies a high-frequency voltage waveform obtained from the superimposed-voltage command unit 27 as a PWM to the above-described motor 10 that enables absolute position detection. In the motor 10 that enables absolute position detection, the current and the inductance obtained when a voltage is superimposed in a magnetic pole position vary depending on the angle of a rotor (rotor 17). The superimposed-voltage command unit 27 and the inverter 28 are connected with a sensorless measurement unit 29 represented by the inductance measurement unit 22 (see FIG. 1).

Thus, with the motor system 1 illustrated in FIGS. 45 and 46, a current value can be estimated by using a shunt resistor (not depicted), for example.

A table 23a is stored in a memory unit 23 (see FIG. 1) implemented with a memory such as a ROM, in which variations of magnetic position current values depending on the rotor angle (angle of the rotor 17) in response to a superimposed signal of the motor system 1 are tabulated as numerical data.

The mechanical angle estimation unit 24 compares the table 23a with the estimated current value to estimate the present mechanical angle.

However, in the relation between the amplitude Im of the response current and the absolute position θabs of the rotor 17 illustrated in FIG. 44, for example, there are two mechanical angles that correspond to a certain current value in the table 23a, and thus which one of them should be used needs to be estimated.

A feedforward position controller 25 includes a V/F control circuit or a pull-in control circuit, for example, and can rotate the rotor 17 of the motor 10 accurately to a certain extent. The rotor 17 of the motor 10 is caused to rotate by feedforward position control.

Thus, the following processes (1) to (3) are repeated to estimate the mechanical angle. More specifically, as described above, (1) in the absolute position detection period, a high-frequency voltage having a frequency and an amplitude that are determined in advance is given as a target to the inverter 28 by the superimposed-voltage command unit 27. (2) The inverter 28 applies a high-frequency voltage waveform obtained from the superimposed-voltage command unit 27 as a PWM to the motor 10 that enables absolute position detection. (3) The mechanical angle estimation unit 24 compares the table 23a with the estimated current value to estimate the present mechanical angle.

By using two mechanical angles obtained in the first and second repetitions, the position of a rotor (rotor 17) can be uniquely estimated.

Further rotating the rotor and estimating the mechanical angle can increase the estimation accuracy of the position of the rotor (rotor 17).

After the detection of the absolute position of the rotor (rotor 17), control can be performed by switching the control sequence to a sensorless method performed by the sensorless measurement unit 29 using an induced-voltage observer or inductance saliency.

In addition, by considering the magnetic properties of the motor 10 that enables absolute position detection for the sensorless method, control performance can be improved.

It should be noted that in the motor system 1 illustrated in FIG. 45 and FIG. 46, the table 23a of magnetic pole position current values is used, but a magnetic pole position inductance, a current value on an axis that is magnetically orthogonal to a magnetic pole position, and inductance on the axis that is magnetically orthogonal to the magnetic pole position may be used for the mechanical angle estimation. Herein, the magnetic pole position is the d-axis direction, and the axis that is magnetically orthogonal to the magnetic pole position is the q-axis.

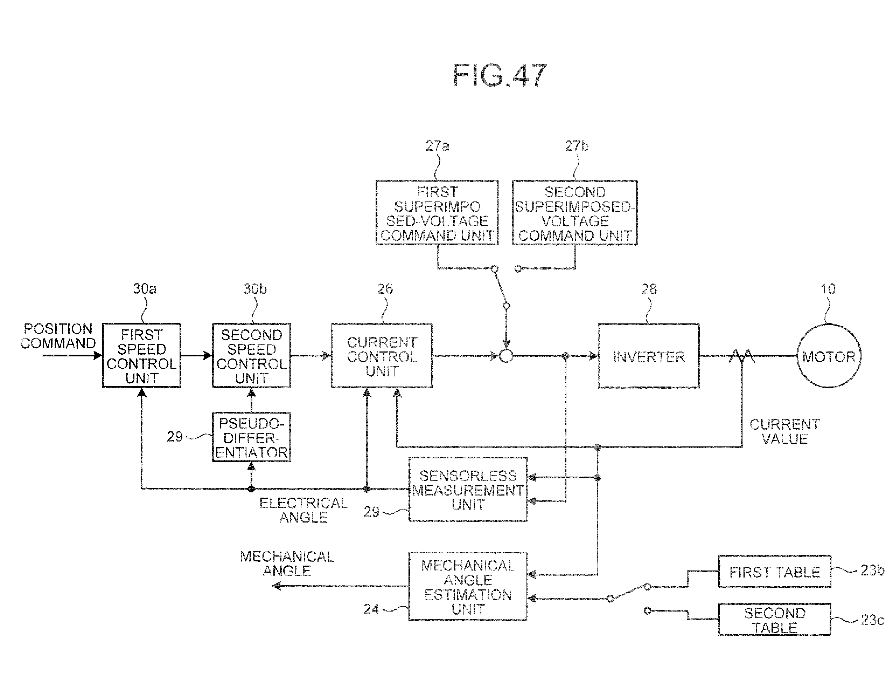

FIG. 47 is a block diagram according to a modification of the absolute position encoderless servo system (motor system 1). The motor system 1 herein is different from those in FIG. 45 and FIG. 46 in the following two points.

The points are that: the motor system 1 includes, as the superimposed-voltage command unit 27 that gives a high-frequency voltage as a target to the inverter 28, a first superimposed-voltage command unit 27a for giving a first superimposed-voltage command a and a second superimposed-voltage command unit 27b for giving a second superimposed-voltage command b, and also includes a first table 23b corresponding to the first superimposed-voltage command unit 27a and a second table 23c corresponding to the second superimposed-voltage command unit 27b; and a signal indicating an electrical angle from the sensorless measurement unit 29 is output to a first speed control unit 30a and to a second speed control unit 30b via a pseudo-differentiator 31, in addition to a current control unit 26. Note that because other configurations are the same, like reference signs are given and explanation thereof is omitted.

First, during absolute position detection, using the first superimposed-voltage command unit 27a and the second superimposed-voltage command unit 27b, the control device 20 (FIG. 1) selectively gives a high-frequency voltage as a target to the inverter, the high-frequency voltage having a frequency and an amplitude that are determined in advance. Furthermore, both the superimposed-voltage command units 27a and 27b can change the direction of superimposing the high-frequency voltage as desired from 0 to 360 degrees in electrical angle.

The inverter 28 applies a high-frequency voltage waveform obtained in accordance with the first superimposed-voltage command a (or the second superimposed-voltage command b) as a PWM to the above-described motor 10 that enables absolute position detection. In the motor 10 that enables absolute position detection, the current and the inductance obtained when a voltage is superimposed in a magnetic pole position vary depending on the angle of the rotor (rotor 17).

Thus, with the motor system 1 illustrated in FIG. 47, a current value can be estimated using a shunt resistor (not depicted), for example.

The first table 23b and the second table 23c are also stored in the memory unit 23 (see FIG. 1) implemented with a memory such as a ROM, in which variations of magnetic position current values depending on the rotor angle (angle of the rotor 17) in response to a superimposed signal of the motor system 1 are tabulated as numerical data.

The mechanical angle estimation unit 24 compares the first table 23b and the second table 23c with the estimated current value to estimate the present mechanical angle.

However, in this case also, for example, in the relation between the amplitude Im of the response current and the absolute position θabs of the rotor 17 illustrated in FIG. 44, there are two mechanical angles that correspond to a certain current value, and thus which one of them should be used needs to be estimated.

Accordingly, the rotor (rotor 17) is rotated to some extent, and the current is detected in a different mechanical angle to estimate the mechanical angle.

In the motor system 1 illustrated in FIG. 47, to rotate the rotor (rotor 17), sensorless control performed by the sensorless measurement unit 29 in the comparative example, current control, and position control are used.

The sensorless control of the comparative example uses the sensorless method using inductance saliency. By the sensorless control of the comparative example using inductance saliency in this manner, the magnetic pole position can be sequentially estimated, and thus the current control and the position control can be operated.

More specifically, by the sensorless control, the current control, and the position control of the comparative example, the rotor 17 of the motor 10 is rotated and the following processes (1) to (3) are repeated to estimate the mechanical angle.

(1) During the absolute position detection, a high-frequency voltage having a frequency and an amplitude that are determined in advance is given as a target to the inverter 28 by the first superimposed-voltage command unit 27a and the second superimposed-voltage command unit 27b. (2) The inverter 28 applies a high-frequency voltage waveform obtained from the first superimposed-voltage command unit 27a and the second superimposed-voltage command unit 27b as a PWM to the motor 10 that enables absolute position detection. (3) The mechanical angle estimation unit 24 compares the first table 23b and the second table 23c with the estimated current value to estimate the present mechanical angle.

Thus, the position of a rotor (rotor 17) can be uniquely estimated by using two mechanical angles obtained in the first and second repetitions.

Further rotating the rotor (rotor 17) and estimating the mechanical angle can increase the estimation accuracy of the position of the rotor (rotor 17).

As described in the foregoing, not only the first superimposed-voltage command a but also the second superimposed-voltage command b for a frequency and a voltage that are different from those of the first superimposed-voltage command a is executed, and comparison with the second table 23c corresponding to the superimposed-voltage command b is performed to estimate the mechanical angle, whereby the accuracy of estimating the position of the rotor (rotor 17) can be improved.

After the detection of the absolute position, control can be performed by switching the control sequence to the sensorless method using an induced-voltage observer or inductance saliency.

In addition, by considering the magnetic properties of the motor 10 that enables absolute position detection for the sensorless method, control performance can be improved.

It should be noted that the tables of magnetic pole position current values are used in the system illustrated in FIG. 47, but a magnetic pole position inductance, a current value on an axis that is magnetically orthogonal, and inductance on the axis that is magnetically orthogonal may be used for the mechanical angle estimation. The magnetic pole position inductance, the current value on an axis that is magnetically orthogonal, and the inductance on the axis that is magnetically orthogonal can be appropriately combined for the mechanical angle estimation.

As described in the foregoing, with the motor system 1, three-phase voltages having frequencies ranging from 0 to several tens kilohertz can be applied, and three-phase currents flown by applying the voltages can be measured or estimated. In addition, the motor system 1 includes the memory unit 23 in the control device 20 in which the absolute position of the rotor 17 and the amplitude of a response current as illustrated in FIGS. 45 to 47 or the absolute position of the rotor 17 and the inductance value are tabulated and stored.

In the motor system 1, an algorithm is implemented by which the amplitude of a response current or the inductance value can be obtained by applying a voltage of several tens hertz to a high-frequency voltage of several tens kilohertz during the absolute position detection and these values are compared with the above-described tables (the table 23a and the first and second tables 23b and 23c) to obtain the absolute position. In addition, in the motor system 1, to uniquely identify the absolute position or improve the detection accuracy, an algorithm is implemented by which the rotor 17 can be rotated using feedforward control or feedback control during the absolute position detection is performed. Furthermore, in the motor system 1, an algorithm is implemented by which the electrical angle of any of the motors 10 according to the above-described embodiments that enable absolute position detection can be estimated using a high-frequency superimposition sensorless method or a sensorless method using a motor observer.

In the above-described embodiments, a motor is described as a representative example in which the magnetic pole count of the rotor 17 is six, the number of coils of the stator 16 is nine, and the coils are in the form of concentrated winding. However, embodiments in which a different number of magnetic poles (e.g., 8, 10, or 12) and a different number of coils (e.g., 6, 12, or 15) are used can be easily derived by the skilled person based on the description in the present specification. Therefore, the invention described in the present specification should be considered to naturally include also such similar inventions.

In connection with a second embodiment and a third embodiment, a motor 10 and a motor system 1 according to the embodiments will be further described below.

### Second Embodiment

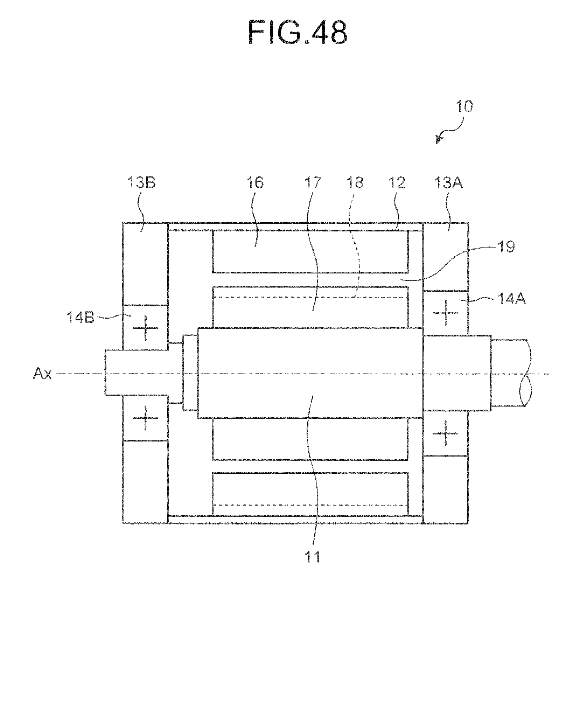

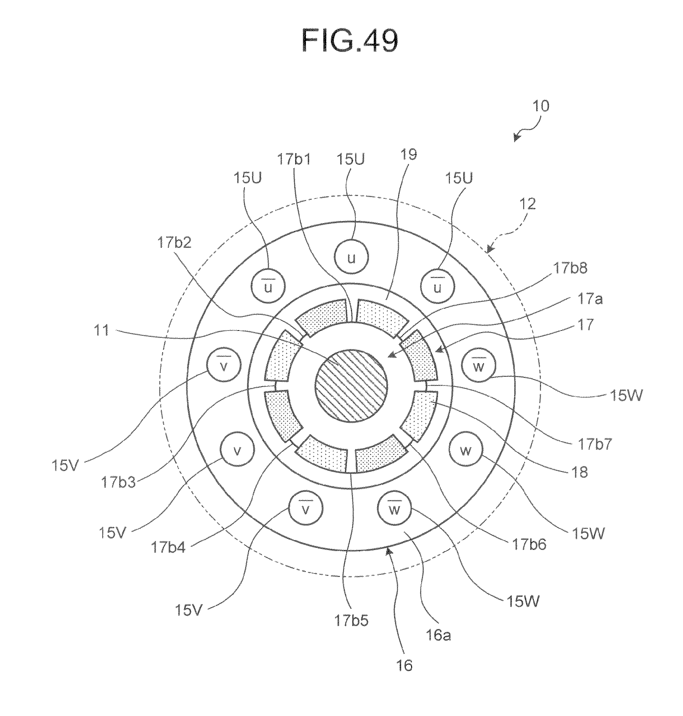

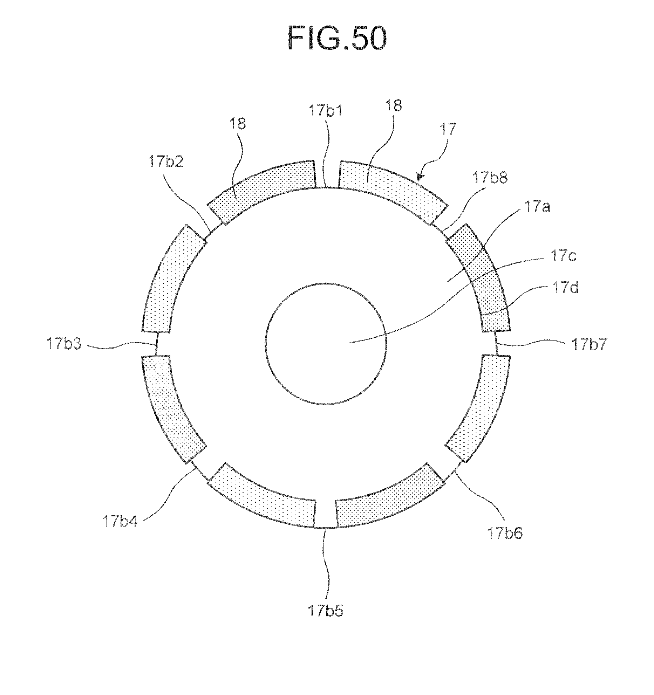

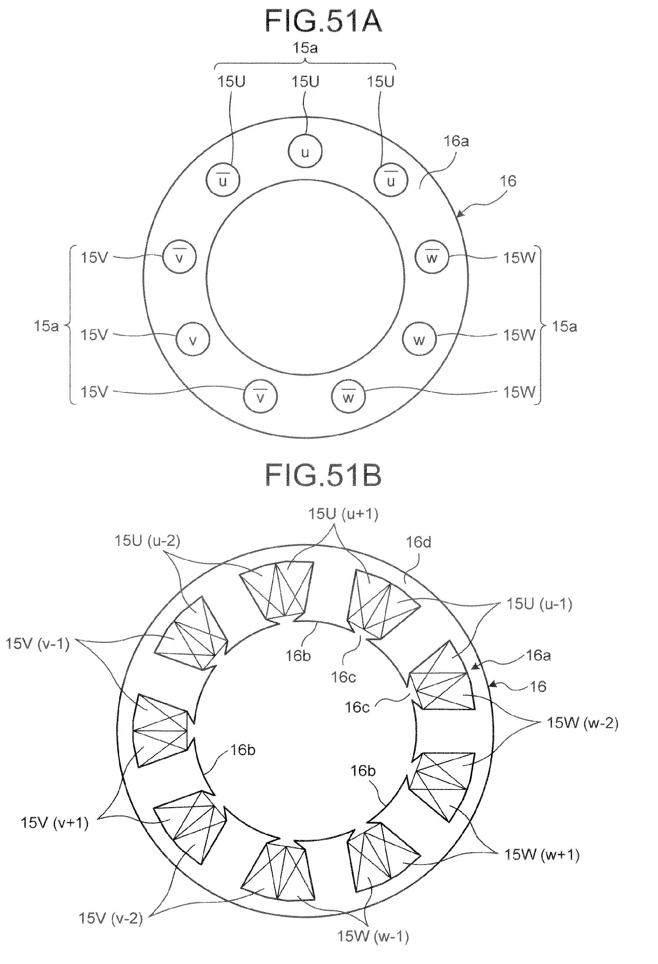

FIG. 48 is an explanatory diagram of the motor according to the second embodiment seen in a longitudinal section, and FIG. 49 is a schematic diagram of the motor 10 seen from the front. FIG. 50 is an explanatory diagram illustrating a rotor structure of the motor 10, FIG. 51A is a schematic diagram illustrating a stator of the motor 10, and FIG. 51B is an explanatory diagram illustrating a stator structure thereof.

The motor 10 according to the present embodiment is a synchronous motor in which a rotor 17 is provided with permanent magnets 18 as illustrated in FIG. 49. In this motor 10, in addition to reluctance torque generated by change in inductance, magnet torque generated by attractive force and repulsive force between the permanent magnets 18 and rotor coils 15 is added, whereby high power can be obtained.

As the permanent magnets 18, any one of sintered magnets such as a neodymium magnet, a samarium-cobalt magnet, a ferrite magnet, and an alnico magnet may be used.

Synchronized with a required rotational speed, rotation of the motor 10 is maintained by applying a sinusoidal current to U-phase windings, V-phase windings, and W-phase windings with a phase difference of 120 degrees each in electrical angle.

The motor system 1 according to the present embodiment is configured to enable accurate estimation of the rotational position of the rotor 17 as described below. When one of the permanent magnets 18 is staying at a position corresponding to the V-phase windings, for example, the position of the rotor 17 is accurately detected, whereby a current can be appropriately applied to the V-phase windings. Thus, it is possible to prevent a situation in which torque sufficient to start the motor 10 cannot be generated because of an accidental current flow through the U-phase windings, for example. Furthermore, the motor system 1 according to the present embodiment can eliminate need for a sensor such as an encoder.

A specific configuration of the motor system 1 and the motor 10 according to the present embodiment will be described below. As illustrated in FIG. 1, the motor system 1 includes the motor 10 and a control device 20.

As illustrated in FIG. 48, the motor 10 is configured such that brackets 13A and 13B are attached to the front and the back of a cylindrical frame 12, and a rotary shaft 11 is rotatably mounted between both brackets 13A and 13B with bearings 14A and 14B interposed therebetween. In the drawing, the reference sign Ax denotes the center of the rotary shaft 11, which is a motor central axis.

As illustrated in FIG. 49, a rotor 17 is attached to the rotary shaft 11 rotatably about the shaft. The rotor 17 has saliency and includes a columnar rotor core 17a provided with a plurality of (eight in this example) permanent magnets 18 along the circumferential direction. In the rotor 17, each of the permanent magnets 18 forms one magnetic pole, and eight rectangular magnet slots 17d the longitudinal direction of which is the direction of rotary shaft 11 are provided along the circumferential direction of the rotor core 17a at intervals so as to be positioned somewhat on the inner side from the outer surface of the rotor core 17a.

The stator 16 is attached inside the cylindrical frame 12 so as to face this rotor 17 with a predetermined air gap 19 therebetween. The rotor core 17a and the stator core 16a each are formed of a stacked core of magnetic steel sheets, but alternatively the rotor core 17a may be formed of a cut part of iron, for example.

As illustrated in FIG. 49 and FIG. 50, in the rotor 17, portions that have radial lengths different from each other are formed along the circumferential direction of the rotor core 17a. In other words, salient poles 17b constituted by a plurality of (eight in this example) protrusions are formed along the circumferential direction of the rotor core 17a, whereby portions that have radial lengths different from each other are formed. In FIG. 50, the reference sign 17c denotes a rotary shaft insertion hole.

The amounts of outward protrusions of the respective salient poles 17b are individually changed, whereby the magnetic properties of the rotor 17 are changed. In the present embodiment, salient pole portions 17b2, 17b3, and 17b4 are formed with the amount of protrusion gradually increased from a salient pole portion 17b1 having the smallest amount of protrusion, and salient pole portions 17b6, 17b7, and 17b8 are formed with the amount of protrusion gradually decreased from a salient pole portion 17b5 having the largest amount of protrusion toward the salient pole portion 17b1.

In other words, the rotor 17 has a structure in which the change pattern of the magnetic properties (saliency, magnetic resistance, permeance, etc.) of the rotor core 17a changes stepwise over a semiperimeter in the circumferential direction.

In the present embodiment, exemplified is a structure in which the change pattern of the magnetic properties of the rotor core 17a changes stepwise over a semiperimeter in the circumferential direction, but alternatively the amount of protrusion may be gradually increased from the salient pole portion 17b1 having the smallest amount of protrusion so that the salient pole portion 17b8 is formed with the largest amount of protrusion. In other words, a structure in which the change pattern of the magnetic properties of the rotor core 17a changes stepwise over a perimeter in the circumferential direction is used.

As illustrated in FIG. 49, FIG. 51A, and FIG. 51B, the stator 16 includes a stator core 16a on which multi-phase (U-phase, V-phase, and W-phase) stator coils 15 including U-phase windings 15U, V-phase windings 15V, and W-phase windings 15W are wound. The stator coils 15 are wound on the teeth 16b as illustrated in FIG. 51B. In FIG. 51B, the reference sign 16c denotes slot portions of the stator core 16a, and the reference sign 16d denotes a yoke portion.

As illustrated in the drawings, in the stator core 16a according to the present embodiment, along the circumferential direction thereof, the stator coils 15 (U-phase windings 15U, V-phase windings 15V, and W-phase windings 15W) are sequentially wound. Three coil sets 15a each of which includes different phases are formed along the circumferential direction at intervals of 120 degrees (FIG. 51A).

One of the coil sets 15a is constructed of a positive U-phase winding 15U and two negative U-phase windings 15U interposing the positive U-phase winding 15U therebetween. As illustrated in the drawing, similarly, the others are the coil set 15a constructed of a positive V-phase winding 15V and two negative V-phase windings 15V and the coil set 15a constructed of a positive W-phase winding 15W and two negative W-phase windings 15W. Bars appended to U, V, and W indicating the respective phases in FIG. 51A and signs of positive and negative (+, -) given in FIG. 51B indicate directions of currents (winding directions of coils).

As described above, in the motor system 1 according to the present embodiment, the motor 10 having eight poles and nine slots is used and, in the stator 16 of the motor 10, the stator coils 15 of the respective phases or the coil sets (in-phase groups of the stator coils 15) having the respective phases are arranged mechanically at intervals of 120 degrees.

Accordingly, the distribution of the magnetic field generated by these (the stator coils 15 of the respective phases or the coil sets having the respective phases) during one cycle in electrical cycle is not reproduced during one cycle (360 degrees) in mechanical angle.

More specifically, the distribution pattern of the magnetic field generated by the respective stator coils 15 of the three phases is not repeated during one cycle (in the whole circumference) in mechanical angle of the stator core 16a. In other words, the distribution pattern of the magnetic field generated by the stator coils 15 with one phase or by a combination of the respective phases on the inner circumferential side of the stator 16 has uniqueness over the whole circumference of the stator core 16a. In still other words, the magnetic flux density distribution waveform in the air gap generated by the stator 16 has a magnetic flux density component one cycle of which is 360 degrees in mechanical angle.

As in the present embodiment, when multi-phase (three phases of U-phase, V-phase, and W-phase in the present embodiment) stator coils 15 or coil sets having the respective phases are arranged at intervals of 120 degrees, a change in magnetic properties of the rotor 17 and a change in inductance are apparently the same as those in the case of the stator 16 having two poles, and the distribution of the magnetic field is not reproduced during one cycle (360 degrees) in mechanical angle.

Thus, in the motor 10 according to the present embodiment, the rotor 17 has a function of transmitting mechanical angle information and the stator 16 has a function of observing the mechanical angle information of the rotor 17. In addition, inductance corresponding to a position of the rotor 17 can be obtained from the stator 16, and the control device 20 can determine the mechanical angle of the rotor 17 from the inductance.

The control device 20 in the motor system 1 includes a rotor control unit 21 for controlling the rotation of the rotor 17 and an inductance measurement unit 22 for measuring the inductance of the stator coils 15 described later that are wound on the stator 16 (FIG. 1).

The rotor control unit 21 herein corresponds to the current control unit 26 in FIGS. 45A and 45B and FIG. 46. The inductance measurement unit 22 is connected with a known measurement device using the inverter 28 and the superimposed-voltage command unit 27 (see FIG. 45A) including a high-frequency generator, for example, and measures the inductance by superimposing a high frequency voltage on the motor 10.

In addition, the control device 20 includes a memory unit 23 for storing therein reference data indicating the inductance depending on a mechanical angle θₘ of the rotor in association with information on the mechanical angle θₘ. Furthermore, the control device 20 includes a mechanical angle estimation unit 24 for estimating an initial position of the rotor 17 on the basis of the value of the inductance measured by the inductance measurement unit 22 and the reference data that is tabulated and stored in the memory unit 23.

The control device 20 can be implemented with a computer. In this computer, although not depicted, the memory unit 23 can be implemented with a memory such as a ROM and a RAM, and the rotor control unit 21, the inductance measurement unit 22, and the mechanical angle estimation unit 24 can be implemented with a CPU, for example. In the memory unit 23, a computing program and various control programs for measuring inductance, and a table containing the reference data, for example, are stored, and the CPU operates in accordance with these programs and functions as a unit for detecting the mechanical angle of the rotor 17.

In the motor system 1 according to the present embodiment, to detect the mechanical angle of the rotor 17, a measurement step and an estimation step are performed. Herein, a storing process step is performed in advance before the above processes. Once the reference data has been stored in the memory unit 23, the storing process step does not necessarily have to be performed every time.

The storing process step is a step of tabulating reference data indicating an extreme value of an inductance value L depending on the mechanical angle (also denoted as mechanical angle θₘ) of the rotor 17 in advance and storing the data in the memory unit 23. The reference data being the reference extreme value includes, for example, an inductance value L at an extreme value and a mechanical. angle θₘ therefor. Hereinafter, a value associating the extreme value of the inductance value L with the mechanical angle θₘ is denoted by Lₘ.

The measurement step is a step of rotating the rotor 17 by a predetermined angle (e.g., 45 degrees) from an initial position and measuring the inductance of the stator 16 on the basis of the position of the rotor 17. At this step, the maximum and minimum values of the inductance are measured.

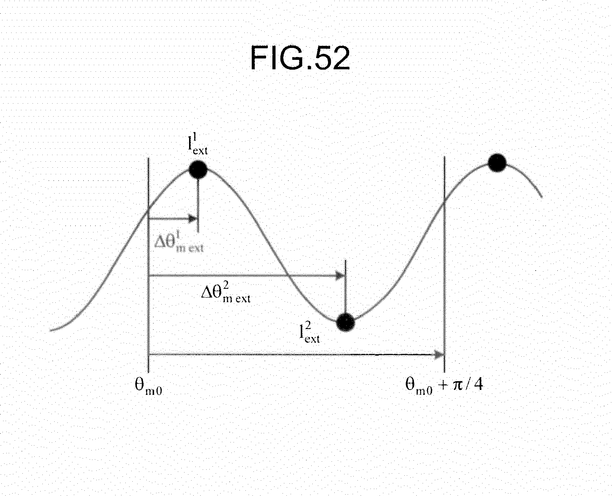

When the rotor 17 is rotated from the initial position, it is preferable that the rotor 17 be rotated at least 45 degrees. In the present embodiment, when the rotor 17 is rotated 45 degrees (θₘ₀+π/4) in mechanical angle from the initial position (θₘ₀), the inductance over 180 degrees (half cycle) in electrical angle can be measured, and thus one maximum value and one minimum value each can be obtained as illustrated in FIG. 52.

FIG. 52 is an explanatory diagram illustrating extreme values of inductance that appear at half cycles of electrical angle (45 degrees in mechanical angle). In FIG. 52, l¹ₑₓₜ denotes an extreme value when the rotor 17 is rotated by Δθ¹_{m ext} from the initial position (θₘ₀), and l² ₑₓₜ denotes an extreme value when the rotor 17 is rotated by Δθ²_{m ext} from the initial position (θₘ₀).

The estimation step is a step of comparing a measured value of the inductance measured with the reference data that is tabulated in advance as a mechanical angle corresponding to the position of the rotor 17 and, based on the comparison result, estimating the absolute position that is the initial position of the rotor 17. In this estimation, the position by the mechanical angle displacement of the rotor 17 can be calculated using a predetermined arithmetic expression.

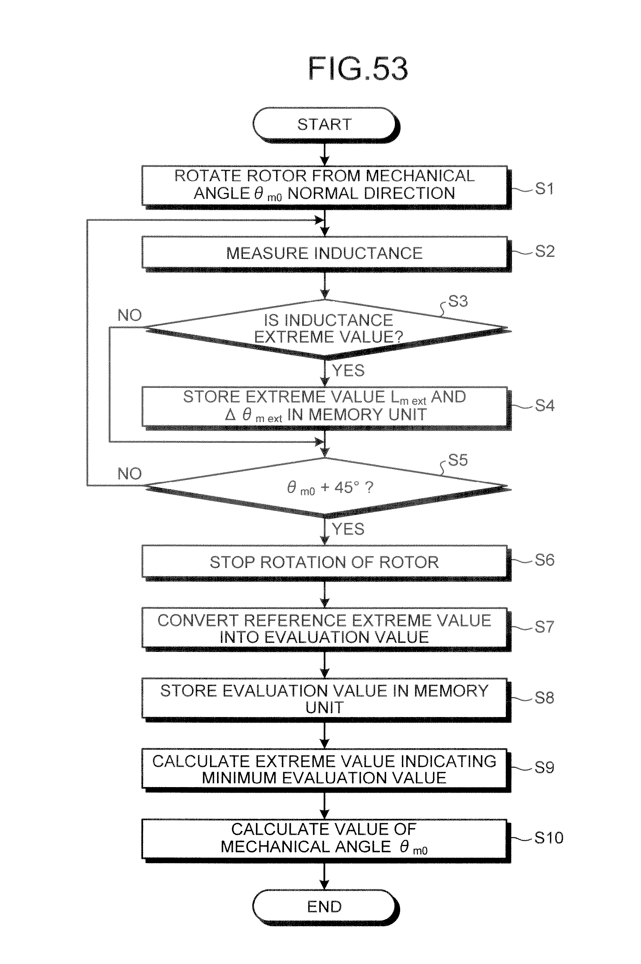

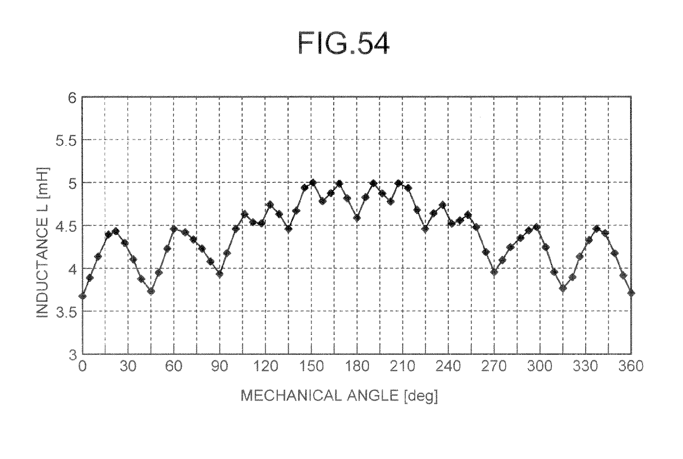

With respect to a procedure for detecting the mechanical angle of the rotor 17, a flow of further detailed steps of the measurement step and the estimation step will be described below with reference to FIG. 53 and FIG. 54. FIG. 53 is an explanatory diagram illustrating a procedure for estimating the mechanical angle of the motor 10 according to the embodiment. FIG. 54 is an explanatory diagram illustrating inductance distribution with respect to the mechanical angle of the motor 10, in which inductance values that were calculated from values of current that was flown by applying a high-frequency voltage to the U-axes are plotted every time the rotor 17 rotates 2π/65 (rad) in mechanical angle. It should be noted that the illustration in FIG. 54 is merely an example, which is not limiting.

In the measurement step, when the inductance of the motor 10 is distributed as illustrated in FIG. 54, the CPU that functions as the rotor control unit 21 (see FIG. 1) of the control device 20 first rotates the rotor 17 from the mechanical angle θₘ₀ to the normal direction as illustrated in FIG. 53 (step S1).

The CPU causes the inductance measurement unit 22 to measure the inductance in that position (step S2). Whether the measured value is an extreme value is determined (step S3) and, if it is an extreme value (Yes at step S3), the measured value is stored in the memory unit 23 in association with the angle at that time. More specifically, the measured value and the angle are stored therein as L_{m ext} and Δθ_{m ext} (step S4).

If the measured value is not an extreme value (No at step S3), the CPU determines whether the rotational position of the rotor 17 is θₘ₀+45 degrees (step S5). If the rotational position of the rotor 17 is not θₘ₀+45 degrees (No at step S5), the process of the CPU moves on to step S2. In other words, measurement of the inductance value is performed to detect an extreme value until the rotor 17 rotates 45 degrees in mechanical angle.

When the rotational position of the rotor 17 has reached θₘ₀+45 degrees (Yes at step S5), the CPU stops the rotation of the rotor 17 (step S6). This completes the measurement step, and the process proceeds to the estimation step.

In the estimation step, the CPU converts the reference extreme value that is reference data in the table stored in the memory unit 23 into an evaluation value, using a predetermined evaluation function (step S7). All of evaluation values into which extreme values are converted from extreme values until the rotational position of the rotor 17 reaches θₘ₀+45 degrees are stored in the memory unit 23 (step S8).

The CPU calculates a minimum evaluation value that makes the predetermined evaluation function smallest among all the evaluation values (step S9). From this, the mechanical angle θₘ₀ that is the initial position of the rotor 17 of the motor 10 is calculated (step S10), and the process is completed.

After the mechanical angle θₘ₀ that is the initial position of the rotor 17 of the motor 10 is calculated, the motor 10 can be driven by a known motor control (what is called encoderless control by which a motor is controlled without using an encoder, for example).

As described above, in the motor system 1 according to the present embodiment, sensorless control is performed in which the absolute position of the rotor 17 is estimated by applying a voltage to the stator coils 15 and detecting change in inductance. This eliminates the necessity of, for example, a sensor such as an encoder, making it possible to achieve reduction of the number of components and downsizing of the motor 10 associated therewith, for example.

In the example described in the foregoing, the amounts of outward protrusions of the salient poles 17b of the rotor core 17a are made different from each other so as to change stepwise over a semiperimeter, whereby magnetic properties of the rotor 17 are changed to obtain a structure that can transmit mechanical angle information of its own.

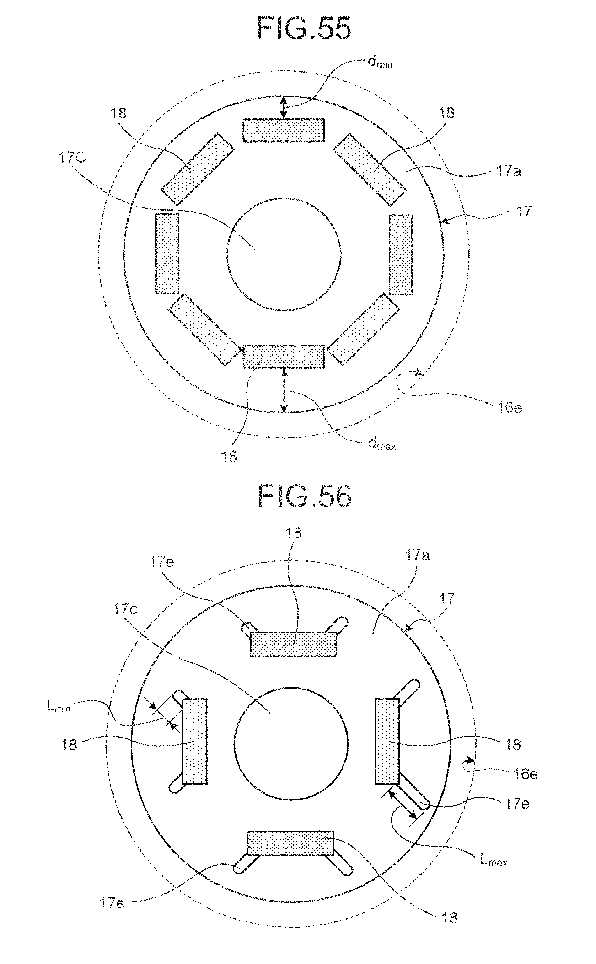

However, to change the magnetic properties of the rotor 17, the rotor core 17a can be configured as illustrated in FIG. 55 to FIG. 58, for example.

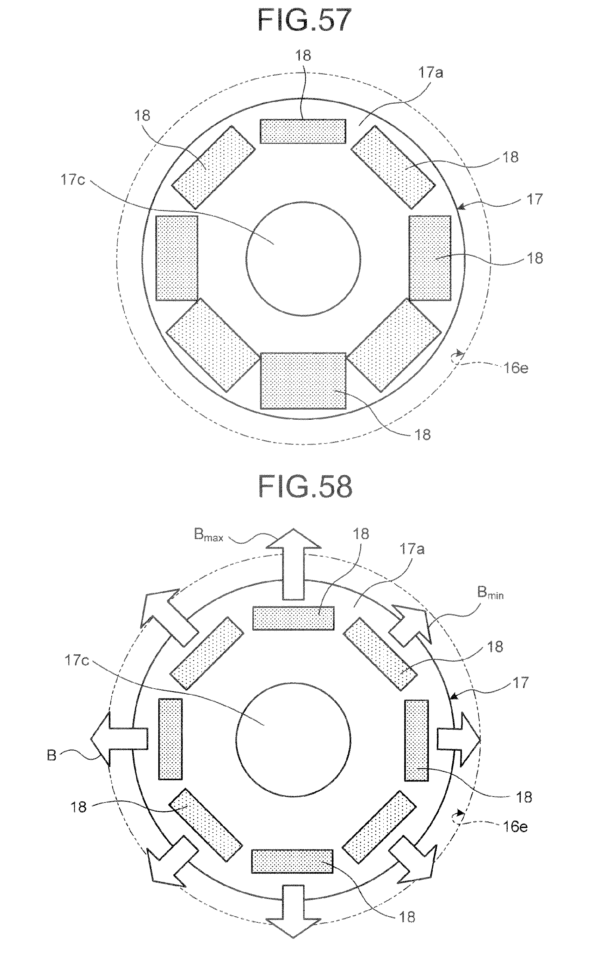

FIG. 55 is an explanatory diagram illustrating a rotor structure according to a modification 1, FIG. 56 is an explanatory diagram illustrating a rotor structure according to a modification 2, FIG. 57 is an explanatory diagram illustrating a rotor structure according to a modification 3, and FIG. 58 is an explanatory diagram illustrating a rotor structure according to a modification 4. Note that the components that are the same as those of the above-described embodiments are denoted by like reference signs also in FIG. 55 to FIG. 58.

### Modification 1 of Rotor

In a rotor core 17a illustrated in FIG. 55, spacing amounts between a plurality of permanent magnets 18 are different. More specifically, spacing depths d of the respective permanent magnets 18 embedded along the circumferential direction of the stator core 17a from the rotor core perimeter are different from each other. Herein, the permanent magnets 18 of eight poles are embedded in the rotor core 17a at intervals of 45 degrees from the center, and the permanent magnet 18 of the largest spacing amount dₘₐₓ is embedded facing the permanent magnet 18 of the smallest spacing amount dₘᵢₙ.

### Modification 2 of Rotor

A rotor core 17a illustrated in FIG. 56 has slits 17e communicating to magnet slots 17d that are magnet arrangement holes formed to arrange permanent magnets 18, and the lengths of the respective slits 17e are different. If the magnetic properties can be changed, the shapes thereof instead of the lengths of the respective slits 17e may be made different so that the areas, for example, change.

Herein, the permanent magnets 18 of four poles are embedded in the rotor core 17a at intervals of 90 degrees from the center, the slits 17e each extend on both ends of the respective permanent magnets 18. The permanent magnet 18 at which the slits 17e of the longest length Lₘₐₓ are positioned is embedded facing the permanent magnet 18 at which the slits 17e of the shortest length Lₘᵢₙ.

### ] Modification 3 of Rotor

In a rotor core 17a illustrated in FIG. 57, the sizes of a plurality of permanent magnets 18 are different. Herein, the permanent magnets 18 of eight poles are embedded in the rotor core 17a at intervals of 45 degrees from the center, and the largest permanent magnet 18 is embedded facing the smallest permanent magnet 18. If the magnetic properties can be changed, the shapes of the permanent magnets 18 instead of the sizes thereof may be made different.

### Modification 4 of Rotor

In FIG. 55 to FIG. 57, examples are illustrated in which mainly the magnetic properties of the stator core 17a are made different, but the magnetic properties of the permanent magnets 18 themselves may be made different as illustrated in FIG. 58.

More specifically, in a rotor 17 illustrated in FIG. 58, the magnetic flux densities (residual magnetic flux densities) of permanent magnets 18 embedded in a rotor core 17a are made different. Furthermore, the change pattern of magnetic properties of the permanent magnets 18 herein changes stepwise over a perimeter in the circumferential direction.

Outline arrows illustrated in FIG. 58 indicate magnetization of the permanent magnets 18, and the length of each arrow corresponds to the magnitude of residual magnetic flux density. More specifically, in FIG. 58, the permanent magnets 18 of eight poles from that of the minimum residual magnetic flux density Bₘᵢₙ to that of the maximum residual magnetic flux density Bₘₐₓ at intervals of 45 degrees from the center are embedded in the rotor core 17a clockwise and stepwise.

Accordingly, when a rotor 17 including the rotor core 17a illustrated in FIG. 58 is used, the value of inductance that is distributed in a mountain shape as illustrated in FIG. 54 in the previously described embodiment will be distributed upward from left to right.

In FIG. 55 to FIG. 58 illustrating the modifications of the rotor 17 described above, the reference sign 16e denotes an inner circumferential surface of the stator 16 that is arranged facing the rotor 17.

Modifications of the stator 16 will be described hereinafter. The stator core 16a used in the above-described embodiments has nine slots in which the stator coils 15 (U-phase windings 15U, V-phase windings 15V, and W-phase windings 15W) are sequentially wound in the circumferential direction (see FIGS. 51A and 51B).

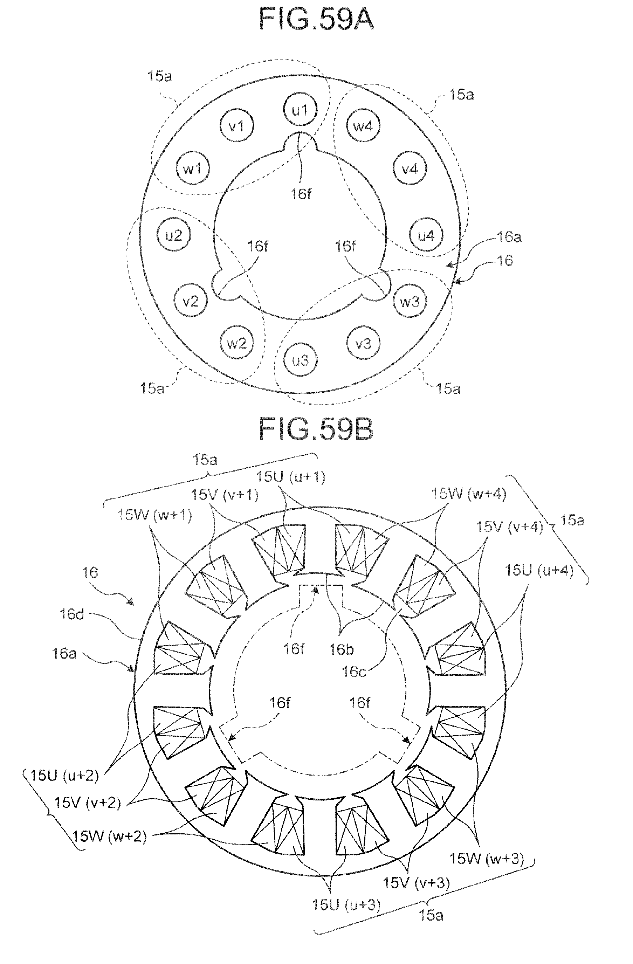

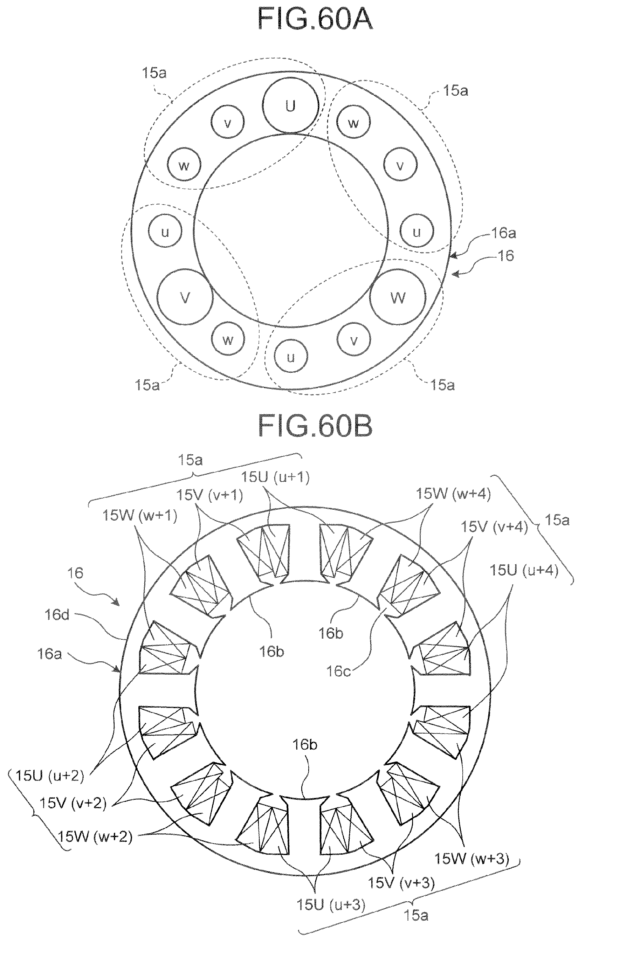

However, the stator 16 can have structures illustrated in FIGS. 59A and 59B and FIGS. 60A and 60B. More specifically, in the stator 16, the stator coils 15 may be sequentially wound for each phase in the circumferential direction, and the coil sets 15a each of which is constructed of the stator coils 15 of different phases may be formed in plurality along the circumferential direction so that the distribution patterns of magnetic fields in the respective coil sets 15a are different from each other.

FIG. 59A is a schematic diagram illustrating a stator according to a modification 1, FIG. 59B is an explanatory diagram illustrating a structure of the stator, FIG. 60A is a schematic diagram illustrating a stator according to a modification 2, and FIG. 60B is an explanatory diagram illustrating a structure of the stator.

### Modification 1 of Stator

A stator 16 illustrated in FIG. 59A and FIG. 59B also includes a stator core 16a on which stator coils 15 including U-phase windings 15U, V-phase windings 15V, and W-phase windings 15W each in plurality are wound in slots 16c each of which are formed between a plurality of teeth 16b.

A U-phase winding 15U, a V-phase winding 15V, and a W-phase winding 15W constitute one coil set 15a in the circumferential direction, and on the stator core 16a, four coil sets 15a are sequentially wound at intervals of 90 degrees in the circumferential direction. More specifically, one of the coil sets 15a is constructed of a U-phase winding 15U(U+1), a V-phase winding 15V(V+1), and a W-phase winding 15W(W+1).

The other coil sets 15a are constructed of the respective U-phase windings 15U of U+2, U+3, and U+4, the respective V-phase windings 15V of V+2, V+3, and V+4, and the respective W-phase windings 15W of W+2, W+3, and W+4 as illustrated in the drawing.

By selectively making different the heights of U-phase, V-phase, and W-phase teeth 16b in each of coil sets 15a, the distribution patterns of magnetic fields are made different from each other in each of the coil sets 15a so that the distribution pattern of a magnetic field has a one-time-only nature (uniqueness) over the whole circumference.

More specifically, in one coil set 15a, the heights of the U-phase, V-phase, and W-phase teeth 16b are uniform, but in another coil set 15a, a tooth 16b around which a U-phase winding 15U(U+1) is wound is made shorter than the other teeth (V-phase: V+1, W-phase: W+1). In another coil set 15a, a tooth 16b around which a V-phase winding 15V(V+2) is wound is made shorter than the other teeth (W-phase: W+2, U-phase: U+2), and in still another coil set 15a, a tooth 16b on which a W-phase winding 15W(W+3) is wound is made shorter than the other teeth (U-phase: U+3, V-phase: V+3). In the drawing, the reference signs 16f schematically denote concave portions at which the teeth 16b are formed shorter.

### Modification 2 of Stator

As illustrated in FIGS. 60A and 60B, by selectively making different the winding numbers of U-phase, V-phase, and W-phase coils in each of coil sets 15a, the distribution patterns of magnetic fields are made different from each other in each of the coil sets 15a so that the distribution pattern of a magnetic field has a one-time-only nature (uniqueness) over the whole circumference. In FIG. 60A, the respective stator coils 15 are depicted with circles, and the winding number is expressed by the size of each circle.

More specifically, as illustrated in the drawing, in one coil set 15a, the winding numbers of the respective U-phase, V-phase, and W-phase coils are uniform, but in another coil set 15a, the winding number of a U-phase winding 15U(U+1) is made larger than those of the other windings (V-phase: V+1, W-phase: W+1). In another coil set 15a, the winding number of a V-phase winding 15V(V+2) is made larger than those of the other windings (W-phase: W+2, U-phase: U+2), and in still another coil set 15a, the winding number of a W-phase winding 15W(W+3) is made larger than those of the other windings (U-phase: U+3, V-phase: V+3).

### Modification of Second Embodiment

As described in the foregoing, according to the present embodiment, when the motor 10 is started, the mechanical angle θₘ₀ that is the initial position of the rotor 17 is directly detected first. However, for example, with something like a mechanical angle detection mode switch provided, for example, a normal operation and a start time for performing a mechanical angle detection process can be switched by the switch.

More specifically, a stator 16 has a structure in which first stator coils 151 used during normal operation and second stator coils 152 used during the mechanical angle detection process are wound on a stator core 16a for each phase of the U-phase, the V-phase, and the W-phase in such a manner that the passage of current is optionally switched. When the passage of current is switched to the second stator coils 152, the distribution of the magnetic field generated by the stator 16 on the inner circumferential side is not repeated in the whole circumference, so that the distribution of a magnetic field having a one-time-only nature (uniqueness) is generated over the whole circumference.

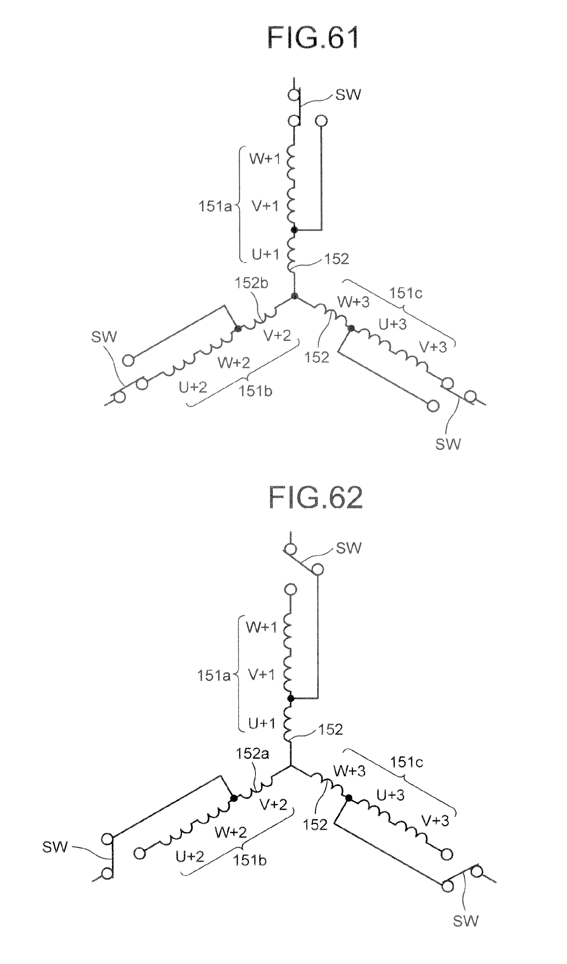

One example of this structure is illustrated in FIG. 61 and FIG. 62. FIG. 61 is an explanatory diagram illustrating connection of the first stator coils, and FIG. 62 is an explanatory diagram illustrating connection of the second stator coils.

For example, in a motor 10 having eight poles and twelve slots, as illustrated in the drawings, a first stator coil 151a including respective stator coils 15 of U+1, U+2, U+3, and U+4 that are connected in series is wound on the stator core 16a. Similarly, wound thereon are a first stator coil 151b including respective stator coils 15 of V+1, V+2, V+3, and V+4 that are connected in series and a first stator coil 151c including respective stator coils 15 of W+1, W+2, W+3, and W+4 that are connected in series.

In the first stator coils 151a, the first stator coil 151a including the stator coils 15 of U+1, U+2, U+3, and U+4 and a second stator coil 152a including only the stator coil of U+1 are optionally switched by a stator coil selection switch SW (hereinafter, simply referred to as "switch SW"). Similarly, in the first stator coils 151b, the first stator coil 151b including the stator coils 15 of V+1, V+2, V+3, and V+4 and a second stator coil 152b including only the stator coil 15 of V+1 are optionally switched by a switch SW. Furthermore, similarly, in the first stator coils 151c, the first stator coil 151c including the stator coils 15 of W+1, W+2, W+3, and W+4 and a second stator coil 152c including only the stator coil 15 of W+1 are optionally switched by a switch SW.

In other words, in the present embodiment, a configuration in which the second stator coils 152 are included in part of the first stator coils 151 is used.

The magnetic field generated by the first stator coils 151 illustrated in FIG. 61 is distributed uniformly in the whole circumference, and also the distribution pattern of the magnetic field is uniform. However, when this state is changed to that in FIG. 62 by switching the switches SW, in the first stator coil 151a, circuitry is disconnected except the stator coil 15 of U+1 out of the stator coils 15 (e.g., U+1, U+2, U+3, and U+4), and consequently a current is applied only to the second stator coil 152a including only the stator coil 15 of U+1.

In other words, when the passage of current is switched to these second stator coils 152, the passage of current to the other stator coils 15 excluding the second stator coils 152 is prohibited.

The same applies to the first stator coil 151b and the first stator coil 151c and, when the switches SW are switched, circuitry is disconnected except the stator coils 15 of V+1 and W+1, and consequently a current is applied only to the second stator coils 152b and 152c including only the respective stator coils 15 of V+1 and W+1. A one-time-only distribution pattern appears in which a magnetic field generated at this time has uniqueness over the whole circumference of the stator core 16a. More specifically, when the passage of current is switched to the second stator coils 152, the distribution pattern of the magnetic field generated by the stator coils 15 of three phases (U+1, V+1, and W+1) is not repeated in the whole circumference of the stator core 16a.

As described above, in the motor 10 according to the present embodiment, the stator coil 15 can be switched into two states that are, for example, a state in which the stator coils 15 are constructed of the first stator coils 151 selected for normal operation and a state in which the stator coils 15 are constructed of the second stator coils 152 selected for a mechanical angle detection process.

Even in this structure, similarly to the previously described embodiments, the motor 10 and the motor system 1 that enable estimation of the absolute mechanical angle of the rotor 17 can be built.

Furthermore, with the motor 10 and the motor system 1 of the present embodiment, during the normal operation, the winding state of the stator coils 15 is in a state of concentrated winding that is widely and generally adopted. More specifically, because each of the first stator coils 151 is constructed of U-phase, V-phase, and W-phase coils as one set, the distribution of the magnetic field generated by the first stator coils 151 during one cycle in electrical angle is repeated during one cycle in mechanical cycle. This makes it possible for the rotor 17 to smoothly rotate.

### Third Embodiment

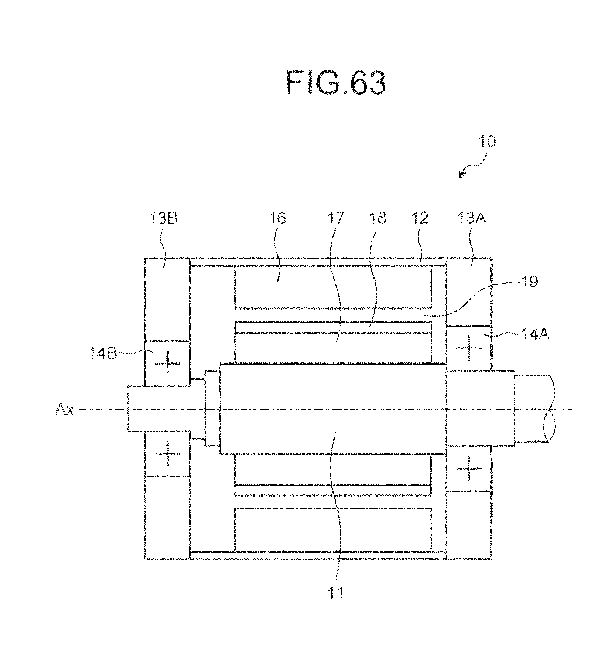

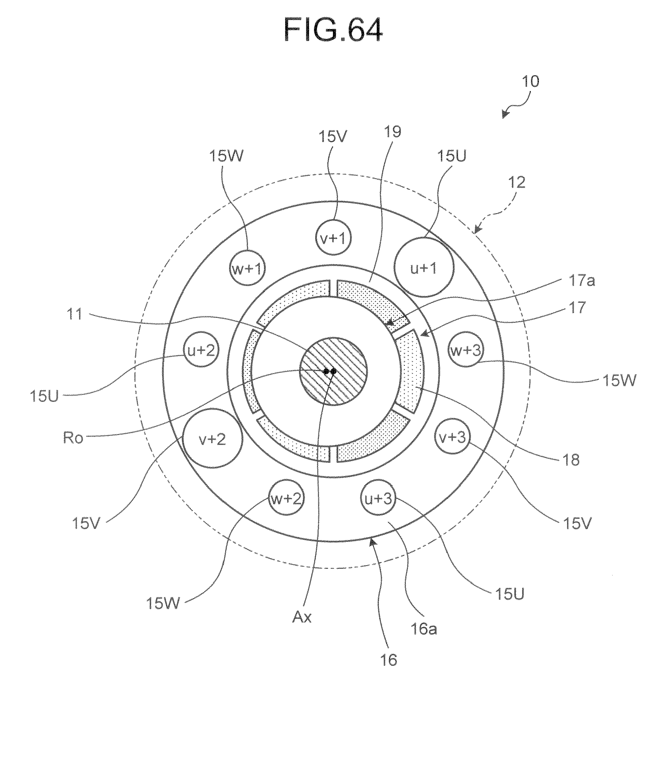

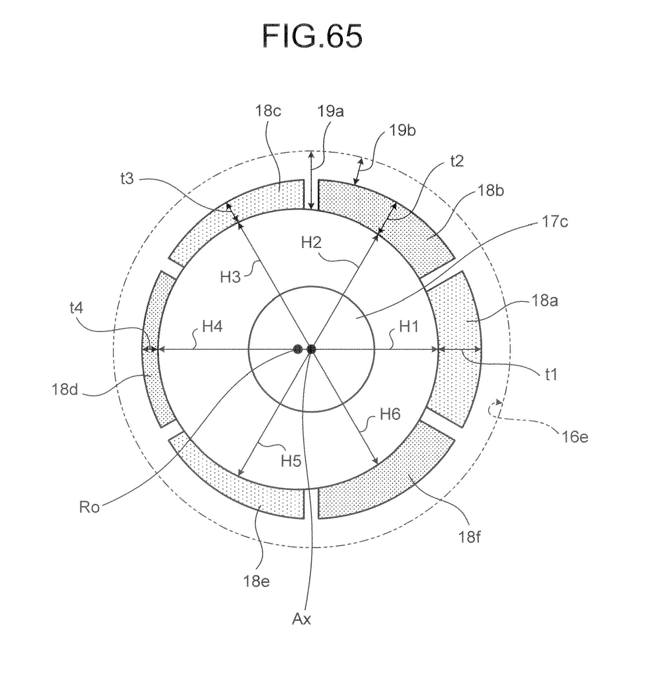

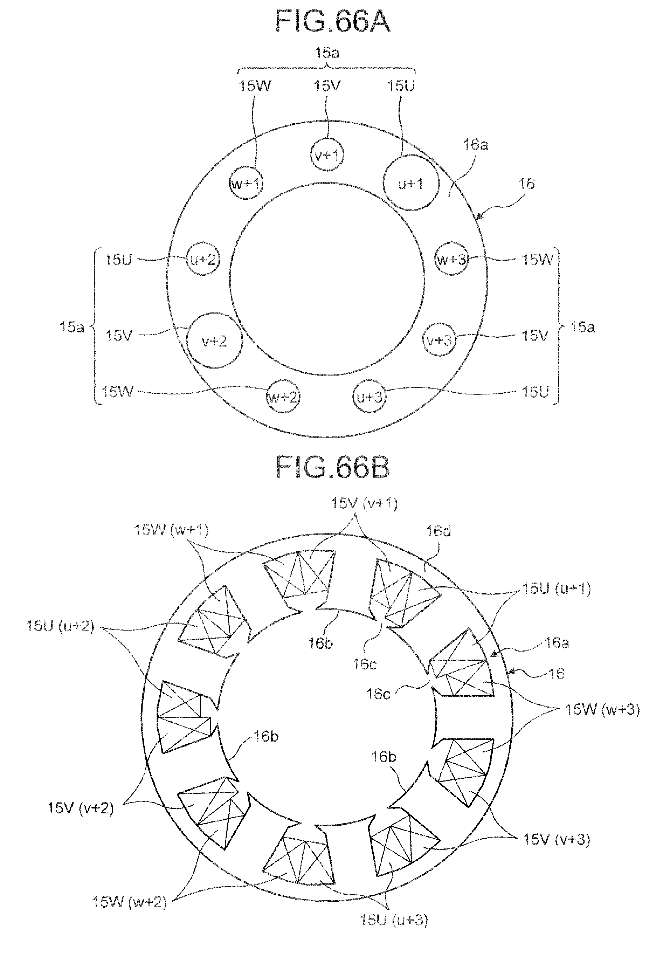

FIG. 63 is an explanatory diagram illustrating a motor according to an embodiment seen in a longitudinal section, and FIG. 64 is a schematic diagram illustrating the motor seen from the front. FIG. 65 is an explanatory diagram illustrating a rotor structure of the motor, FIG. 66A is a schematic diagram illustrating a stator of the motor, and FIG. 66B is an explanatory diagram illustrating a structure of the stator.

The motor 10 according to the present embodiment is a synchronous motor in which permanent magnets 18 are attached to a surface of a rotor 17 as illustrated in FIG. 64. As the permanent magnets 18, any one of sintered magnets such as a neodymium magnet, a samarium-cobalt magnet, a ferrite magnet, and an alnico magnet can be used.

Synchronized with a required rotational speed, rotation of the motor 10 is maintained by applying a sinusoidal current to U-phase windings, V-phase windings, and W-phase windings with a phase difference of 120 degrees each in electrical angle.

A motor system 1 according to the present embodiment is configured to enable accurate estimation of the rotational position of the rotor 17 as described below. For example, when one of the permanent magnets 18 is staying at a position corresponding to the V-phase windings, for example, the position of the rotor 17 is accurately detected, whereby a current can be appropriately applied to the V-phase windings. Thus, it is possible to prevent a situation in which torque sufficient to start the motor 10 cannot be generated because of an accidental current flow through the U-phase windings, for example, instead of the V-phase windings. Furthermore, the motor system 1 according to the present embodiment can eliminate need for a sensor such as an encoder.

A specific configuration of the motor system 1 and the motor 10 according to the present embodiment will be described below. As illustrated in FIG. 1, the motor system 1 includes the motor 10 and the control device 20.

As illustrated in FIG. 63, the motor 10 is configured such that brackets 13A and 13B are attached to the front and the back of a cylindrical frame 12, and a rotary shaft 11 is rotatably mounted between both brackets 13A and 13B with bearings 14A and 14B interposed therebetween. In the drawing, the reference sign Ax denotes a shaft center (center) of the rotary shaft 11, which is a motor central axis.

As illustrated in FIG. 64, a rotor 17 is attached to the rotary shaft 11 rotatably about the shaft. The rotor 17 includes a columnar rotor core 17a provided with a plurality of (six in this example) permanent magnets 18a to 18f on a circumferential surface at regular intervals along the circumferential direction.

The stator 16 is attached inside the cylindrical frame 12 so as to face this rotor 17 with a predetermined air gap 19 therebetween. The rotor core 17a and the stator core 16a each are formed of a stacked core of magnetic steel sheets, but alternatively the rotor core 17a may be formed of a cut part of iron, for example.

The rotor 17 of the motor 10 according to the present embodiment is characterized by its structure. As illustrated in FIG. 64 and FIG. 65, a physical axis line R0 of the rotor core 17a is displaced from a shaft center Ax of the rotary shaft 11.

More specifically, the physical axis line R0 of the rotor core 17a is shifted from the rotary shaft 11, whereby the magnetic center of the rotor core 17a is decentered with respect to the shaft center Ax of the rotary shaft 11 and a spacing 19a between an outer circumferential surface of the rotor core 17a and an inner circumferential surface 16e of the stator core 16a is changed steplessly in the circumferential direction. This changes the change pattern of magnetic properties of the rotor core 17a steplessly over a perimeter or a semiperimeter in the circumferential direction. In FIG. 65, the reference sign 17c denotes a rotary shaft insertion hole.

In contrast, a spacing 19b between outer circumferential surfaces of the six permanent magnets 18a to 18f arranged on the surface of the rotary core 17a and the inner circumferential surface 16e of the stator core 16a is constant. Accordingly, the radial lengths of the respective permanent magnets 18a to 18f are set so that the radial lengths from the shaft center Ax of the rotary shaft 11 to the outer circumferential surfaces of the respective permanent magnets 18a to 18f are the same.

Herein, the lengths from the shaft center Ax of the rotary shaft 11 to inner circumferential surfaces of the permanent magnets 18 at the center positions in the circumferential direction are denoted by H, and length H1 for the first permanent magnet 18a will be compared with lengths H2 to H4 for the second, third, and fourth permanent magnets 18b to 18d. When an adhesive layer, for example, between the permanent magnets 18 and the rotor core 17a is ignored, the lengths H are the same as the length to the outer circumferential surface of the rotor core 17a on which the permanent magnets 18 are mounted.

In the rotor core 17a of the rotor 17 according to the present embodiment, the length H1 is the shortest, and the length H4 extending to the opposite side thereof is the longest. More specifically, the length gradually becomes longer from the length H1 to the length H2, the length H3, and the length H4, and gradually becomes shorter from the length H4 to the length H5, the length H6, and the length H1.

As described in the foregoing, the spacing 19b between the outer circumferential surfaces of the six permanent magnets 18a to 18f and the inner circumferential surface of the stator core 16a is constant, and accordingly the radial length of the first permanent magnet 18a that is the magnet thickness t1 is made the largest, and the magnetic thicknesses t2 to t4 of the second, third, and fourth permanent magnets 18b to 18d are made gradually smaller in this order.

Because the outer circumferential surfaces of the permanent magnets 18 in the present embodiment are formed in a shape of arc surface, even in one of the permanent magnets 18, the magnet thickness t thereof gradually changes from one end to the other end as a matter of course.

As a structure on which the rotor 17 of the motor 10 according to the present embodiment has been described, the magnetic center of the rotor core 17a is decentered with respect to the shaft center Ax of the rotary shaft 11, whereby the change pattern of the magnetic properties (saliency, magnetic resistance, permeance, etc.) of the rotor core 17a is changed steplessly and smoothly over a semiperimeter in the circumferential direction.

Because the rotor 17 according to the present embodiment has the above-described structure, the sizes of the first to sixth permanent magnets 18a to 18f are consequently different. However, even with these different sizes, to avoid demagnetization due to a demagnetizing field or demagnetization due to high temperature, it is preferable that magnetic operating points of the first to sixth permanent magnets 18a to 18f be approximately the same. In addition, even with the different sizes, the rotor 17 could be configured to smoothly rotate by changing the density of material and appropriately distributing the weights of the respective permanent magnets 18 to keep a rotational balance of the rotor 17.

In the first to sixth permanent magnets 18a to 18f having different sizes and weights, the lengths H from the shaft center Ax of the rotary shaft 11 to the inner circumferential surfaces that are attachment surfaces onto the rotor core 17a are different from each other, and thus centrifugal forces applied to the respective first to sixth permanent magnets 18a to 18f are also different. In this case, to prevent the permanent magnets 18 from being ejected by the centrifugal forces, the retentive strength on the rotor core 17a can be appropriately changed depending on the magnitude of centrifugal force.

As illustrated in FIG. 64, FIG. 66A, and FIG. 66B, the stator 16 includes a stator core 16a on which multi-phase (U-phase, V-phase, and W-phase) stator coils 15 including U-phase windings 15U, V-phase windings 15V, and W-phase windings 15W are wound. As illustrated in the drawings, in the present embodiment, by selectively making different the winding numbers of U-phase, V-phase, and W-phase coils in each of three coil sets 15a each including a U-phase winding 15U, a V-phase winding 15V, and a W-phase winding 15W as one set, the distribution patterns of magnetic fields are made different from each other in each of the coil sets 15a. In FIG. 66A, the respective stator coils 15 are depicted with circles, and the winding number is expressed by the size of each circle. In FIG. 66B, the reference sign 16c denotes slot portions of the stator core 16a, and the reference sign 16d denotes a yoke portion thereof.

As illustrated in the drawing, in the stator core 16a according to the present embodiment, along the circumferential direction thereof, the stator coils 15 (U-phase windings 15U, V-phase windings 15V, and W-phase windings 15W) are sequentially wound, and three coil sets 15a each including a U-phase winding 15U, a V-phase winding 15V, and a W-phase winding 15W are formed along the circumferential direction at intervals of 120 degrees (FIG. 66A).

One of the coil sets 15a is constructed of a U+1-phase winding 15U having a larger winding number than the other stator coils 15, a V+1-phase winding 15V, and a W+1-phase winding 15W. Similarly, another one of the coil sets 15a is constructed of a U+2-phase winding 15U, a V+2-phase winding 15V having a larger winding number than the other stator coils 15, and a W+2-phase winding 15W. The other one of the coil sets 15a is constructed of a U+3-phase winding 15U, a V+3-phase winding 15V, and a W+3-phase winding 15W, the winding numbers of which are the same in three phases. In FIG. 66B, +1, +2, and +3 that are appended to U, V, and W indicating the respective phases indicate the order of the teeth 16b. Alternatively, in the coil set 15a having the same winding number in three phases, similarly to the other coil sets 15a, for example, the winding number of the W+3-phase winding 15W may be made larger than those of the other stator coils 15.

As described above, the motor 10 having six poles and nine slots is used in the motor system 1 according to the present embodiment and, in the stator 16 of this motor 10, three coil sets 15a each having the respective phases in which phases having different winding numbers are combined are arranged mechanically at intervals of 120 degrees.

Thus, the distribution of the magnetic field generated during one cycle in electrical angle by the three coil sets 15a, 15a, and 15a that are classified by difference in the respective winding numbers is not reproduced during one cycle (360 degrees) in mechanical angle.

More specifically, the distribution pattern of the magnetic field generated by the respective stator coils 15 of the three phases is not repeated during one cycle (in the whole circumference) in mechanical angle of the stator core 16a. In other words, the distribution pattern of the magnetic field generated by the stator coils 15 with one phase or by a combination of the respective phases on the inner circumferential side of the stator 16 has uniqueness over the whole circumference of the stator core 16a. In still other words, the magnetic flux density distribution waveform in the air gap generated by the stator 16 has a magnetic flux density component one cycle of which is 360 degrees in mechanical angle.

As in the present embodiment, when multi-phase (three phases of U-phase, V-phase, and W-phase in the present embodiment) stator coils 15 or coil sets having the respective phases are arranged at intervals of 120 degrees, a change in magnetic properties of the rotor 17 and a change in inductance are apparently the same as those in the case of the stator 16 having two poles, and the distribution of the magnetic field is not reproduced during one cycle (360 degrees) in mechanical angle.

Thus, in the motor 10 according to the present embodiment, the rotor 17 has a function of transmitting mechanical angle information and the stator 16 has a function of observing the mechanical angle information of the rotor 17. In addition, inductance corresponding to a position of the rotor 17 can be obtained from the stator 16, and the control device 20 can determine the mechanical angle of the rotor 17 from the inductance.

The decentering of the magnetic center of the rotor core 17a with respect to the shaft center Ax of the rotary shaft 11 can be achieved, not only by shifting the physical axis line R0 of the rotor core 17a from the shaft center Ax of the rotary shaft 11, but also by variation of the magnetic permeability of the rotor core 17a in the circumferential direction.

The shaft center Ax of the rotary shaft 11 is the geometrical center of the rotor core 17a, whereas the magnetic center of the rotor core 17a in the present embodiment indicates the center of magnetic variations when the rotor 17 being a field magnet and the stator 16 being an armature interact with each other. Generally, the magnetic center coincides with the geometrical center. Because the decentering of the magnetic center of the rotor core 17a herein is performed to steplessly change the change pattern of the magnetic properties of the rotor core 17a over a perimeter or a semiperimeter in the circumferential direction, the decentering does not necessarily have to be achieved only by physical processing. For example, materials having different magnetic permeabilities can be continuously joined in the circumferential direction to form a rotor core 17a in a circular shape.

The control device 20 in the motor system 1 according to the present embodiment includes a rotor control unit 21 for controlling the rotation of the rotor 17 and an inductance measurement unit 22 for measuring the inductance of the stator coils 15 described later that are wound on the stator 16 (FIG. 1).

The inductance measurement unit 22 is connected with a known measurement device using the inverter 28 illustration of which is omitted herein and the superimposed-voltage command unit 27 (see FIG. 45) including a high-frequency generator, for example, and measures the inductance by superimposing a high frequency voltage on the motor 10.

In addition, the control device 20 includes a memory unit 23 for storing therein reference data indicating the inductance depending on a mechanical angle (also denoted as mechanical angle θₘ) of the rotor 17 in association with information on the mechanical angle θₘ. Furthermore, the control device 20 includes a mechanical angle estimation unit 24 for estimating an initial position of the rotor 17 on the basis of the value of the inductance measured by the inductance measurement unit 22 and the reference data that is tabulated and stored in the memory unit 23.

The control device 20 can be implemented with a computer. In this computer, although not depicted, the memory unit 23 can be implemented with a memory such as a ROM and a RAM, and the rotor control unit 21, the inductance measurement unit 22, and the mechanical angle estimation unit 24 can be implemented with a CPU, for example. In the memory unit 23, a computing program and various control programs for measuring inductance, and a table containing the reference data, for example, are stored, and the CPU operates in accordance with these programs and functions as a unit for detecting the mechanical angle of the rotor 17.

In the motor system 1 according to the present embodiment, to detect the mechanical angle of the rotor 17, a measurement process and an estimation process are performed. Herein, a storing process step is performed in advance as a preceding step before the above processes. Once the reference data has been stored in the memory unit 23, the storing process step does not necessarily have to be performed every time.

The storing process step is a step of tabulating reference data indicating an inductance value L for each mechanical angle θₘ with respect to a reference position of the rotor 17 in advance and storing the data in the memory unit 23.

The measurement process and the estimation process are processes that are performed when the motor 10 is actually started, and in the measurement step, a high-frequency voltage is applied to the rotor 17 and the inductance of the stator 16 with respect to the position of the rotor 17 is measured.

In the estimation process, a measured value of the inductance is compared with the reference data that is tabulated in advance as a mechanical angle corresponding to the position of the rotor 17 and, based on the comparison result, the absolute position that is the initial position of the rotor 17 is estimated.

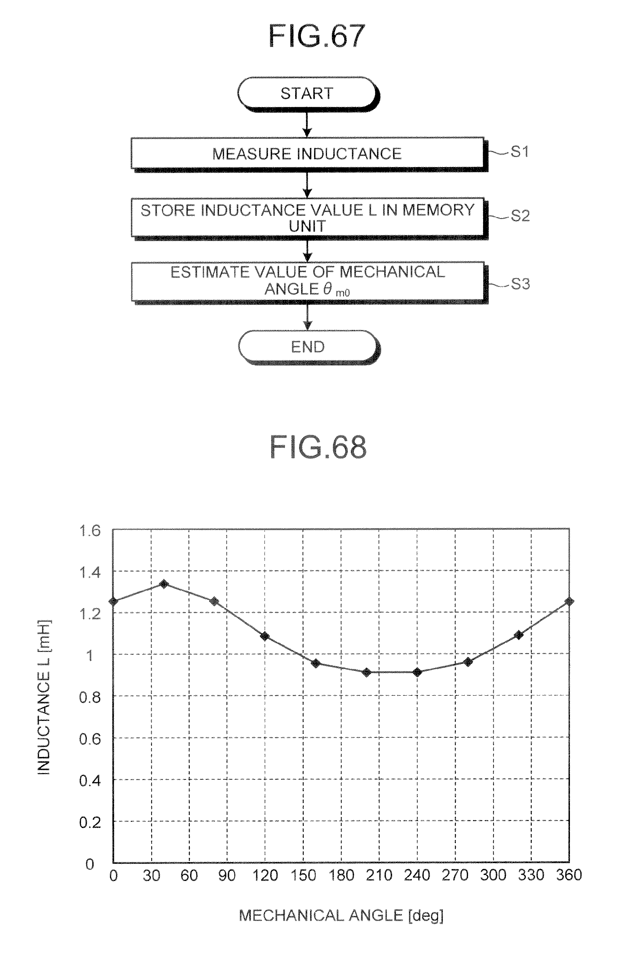

A procedure for estimating the mechanical angle of the rotor 17 will be described below with reference to FIG. 67 and FIG. 68. FIG. 67 is an explanatory diagram illustrating the procedure for estimating the mechanical angle of the motor 10 according to the embodiment. FIG. 68 is an explanatory diagram illustrating inductance distribution with respect to the mechanical angle of the motor 10. This is a diagram in which inductance values L that were calculated from values of current that was flown by applying a high-frequency voltage when the rotor 17 rotated by the mechanical angle θₘ from a plurality of reference points are plotted every 2π/9 (rad) in mechanical angle of the rotor 17. As the inductance values L herein, maximum values in one cycle (2π) in electrical angle for each phase are used.

As illustrated in FIG. 67, the CPU causes the inductance measurement unit 22 to measure the inductance when the rotor 17 is in a predetermined position by applying a high-frequency voltage to the motor 10 (step S1). The measured value is stored in the memory unit 23 (step S2). This completes the measurement process.

Subsequently, the CPU compares the measured value stored in the memory unit 23 with the reference data in the table that is stored in the memory unit 23 in advance, and estimates the mechanical angle θₘ₀ indicating the absolute position of the rotor 17 from the reference data that matches the distribution of the inductance values L that are measured values (step S3), thereby completing the estimation process. In this comparison, the gradient of a graph that is formed by plotting data, for example, can be considered.

As described above, in the motor 10 according to the present embodiment, because the distribution waveform of the inductance value L differs depending on the mechanical position of the rotor 17, the absolute position of the rotor 17 can be easily estimated from the inductance value L that is actually measured.

After the mechanical angle θₘ₀ that is an initial position of the rotor 17 of the motor 10 is estimated, the motor 10 can be driven by known motor control.

As described above, in the motor system 1 according to the present embodiment, sensorless control is performed in which the absolute position of the rotor 17 is estimated by applying a voltage to the stator coils 15 and detecting a change in the inductance value L. This eliminates the necessity of, for example, a sensor such as an encoder, making it possible to achieve reduction of the number of components and downsizing of the motor 10 associated therewith, for example.

The stator core 16a in the above-described embodiments has nine slots in which the stator coils 15 (U-phase windings 15U, V-phase windings 15V, and W-phase windings 15W) are sequentially wound in the circumferential direction (see FIG. 66A and FIG. 66B).

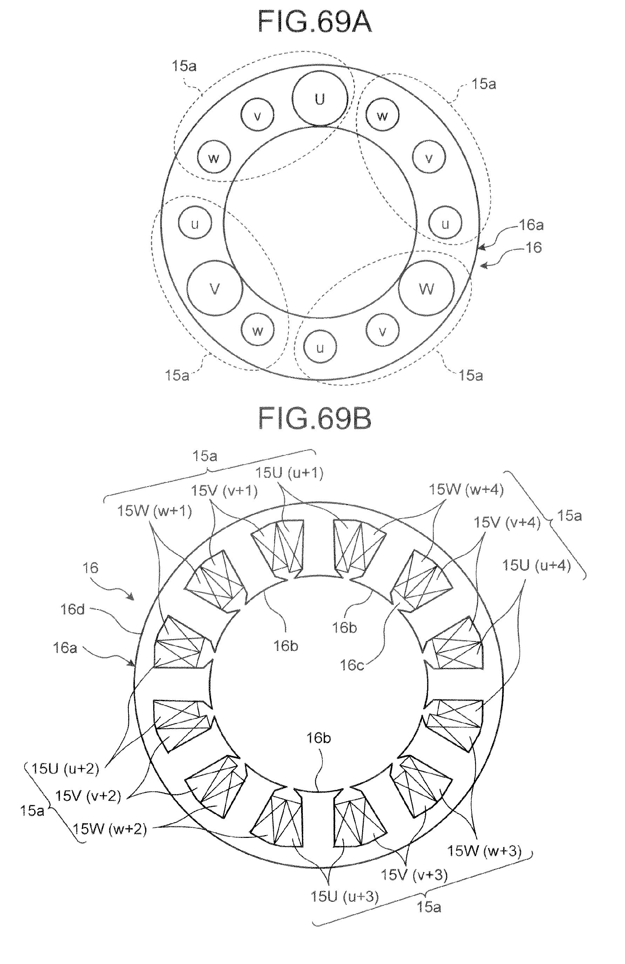

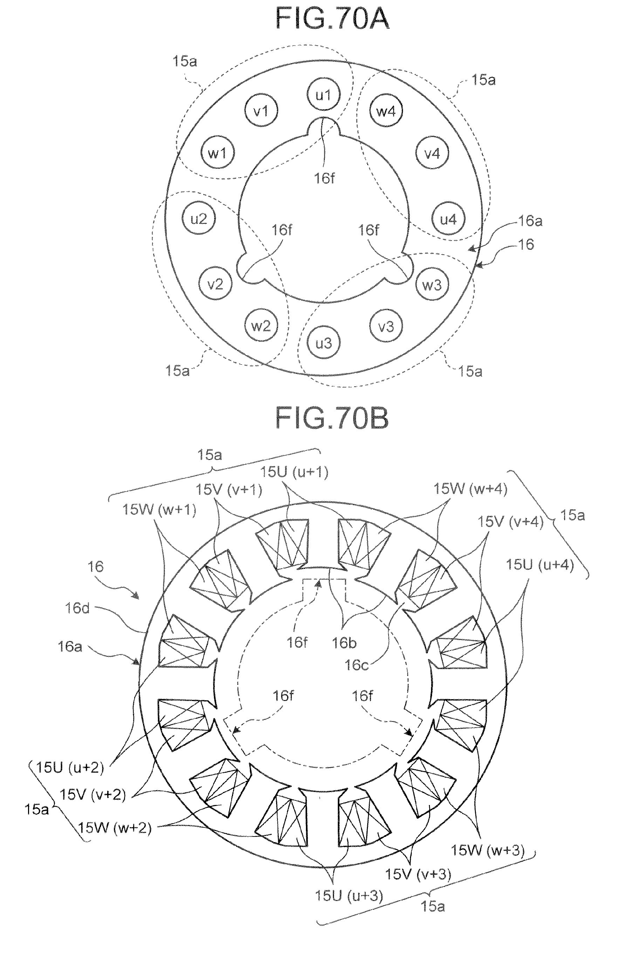

However, the stator 16 can have structures having twelve slots illustrated in FIGS. 69A and 69B and FIGS. 70A and 70B. More specifically, in the stator 16, the stator coils 15 may be sequentially wound for each phase in the circumferential direction, and the coil sets 15a each of which is constructed of the stator coils 15 of different phases may be formed in plurality along the circumferential direction so that the distribution patterns of magnetic fields in the respective coil sets 15a are different from each other.

FIG. 69A is a schematic diagram illustrating a stator according to a modification 1, FIG. 69B is an explanatory diagram illustrating a structure of the stator, FIG. 70A is a schematic diagram illustrating a stator according to a modification 2, and FIG. 70B is an explanatory diagram illustrating a structure of the stator.

### Modification 1 of Stator

As illustrated in FIG. 69A and FIG. 69B, by selectively making different the winding numbers of U-phase, V-phase, and W-phase coils in each of four coil sets 15a, the distribution patterns of magnetic fields may be made different from each other in each of the coil sets 15a so that the distribution pattern of a magnetic field has a one-time-only nature (uniqueness) over the whole circumference. In FIG. 69A similarly to FIG. 70A, the respective stator coils 15 are depicted with circles, and the winding number is expressed by the size of each circle.

More specifically, as illustrated in the drawing, in one coil set 15a, the winding numbers of the respective U-phase, V-phase, and W-phase coils are uniform, but in another coil set 15a, the winding number of a U-phase winding 15U(U+1) is made larger than those of the other windings (V-phase: V+1, W-phase: W+1). In another coil set 15a, the winding number of a V-phase winding 15V(V+2) is made larger than those of the other windings (W-phase: W+2, U-phase: U+2), and in still another coil set 15a, the winding number of a W-phase winding 15W(W+3) is made larger than those of the other windings (U-phase: U+3, V-phase: V+3).

### Modification 2 of Stator

A stator 16 illustrated in FIG. 70A and FIG. 70B also includes a stator core 16a on which stator coils 15 including U-phase windings 15U, V-phase windings 15V, and W-phase windings 15W each in plurality are wound in slots 16c each of which are formed between a plurality of teeth 16b.

A U-phase winding 15U, a V-phase winding 15V, and a W-phase winding 15W constitute one coil set 15a in the circumferential direction, and on the stator core 16a, four coil sets 15a are sequentially wound at intervals of 90 degrees in the circumferential direction. More specifically, one of the coil sets 15a is constructed of a U-phase winding 15U(U+1), a V-phase winding 15V(V+1), and a W-phase winding 15W(W+1).

The other coil sets 15a are constructed of the respective U-phase windings 15U of U+2, U+3, and U+4, the respective V-phase windings 15V of V+2, V+3, and V+4, and the respective W-phase windings 15W of W+2, W+3, and W+4 as illustrated in the drawing.

By selectively making different the heights of U-phase, V-phase, and W-phase teeth 16b in each of coil sets 15a, the distribution patterns of magnetic fields are made different from each other in each of the coil sets 15a so that the distribution pattern of a magnetic field has a one-time-only nature over the whole circumference.

More specifically, in one coil set 15a, the heights of the U-phase, V-phase, and W-phase teeth 16b are uniform, but in another coil set 15a, a tooth 16b around which a U-phase winding 15U(U+1) is wound is made shorter than the other teeth (V-phase: V+1, W-phase: W+1). In another coil set 15a, a tooth 16b around which a V-phase winding 15V(V+2) is wound is made shorter than the other teeth (W-phase: W+2, U-phase: U+2), and in still another coil set 15a, a tooth 16b on which a W-phase winding 15W(W+3) is wound is made shorter than the other teeth (U-phase: U+3, V-phase: V+3). In the drawing, the reference signs 16f schematically denote concave portions at which the teeth 16b are formed shorter.

### Another Embodiment

As described in the foregoing, according to the present embodiment, when the motor 10 is started, the mechanical angle θₘ₀ that is the initial position of the rotor 17 is directly detected. However, for example, with something like a mechanical angle detection mode switch provided, a start time and a normal operation can be switched by the switch.

More specifically, a stator 16 has a structure in which first stator coils 151 used during normal operation and second stator coils 152 used at the start time are wound on a stator core 16a for each phase of the U-phase, the V-phase, and the W-phase in such a manner that the passage of current is optionally switched. When the passage of current is switched to the second stator coils 152, the distribution of the magnetic field generated by the stator 16 on the inner circumferential side is not repeated in the whole circumference, so that the distribution of a magnetic field having a one-time-only nature is generated over the whole circumference.

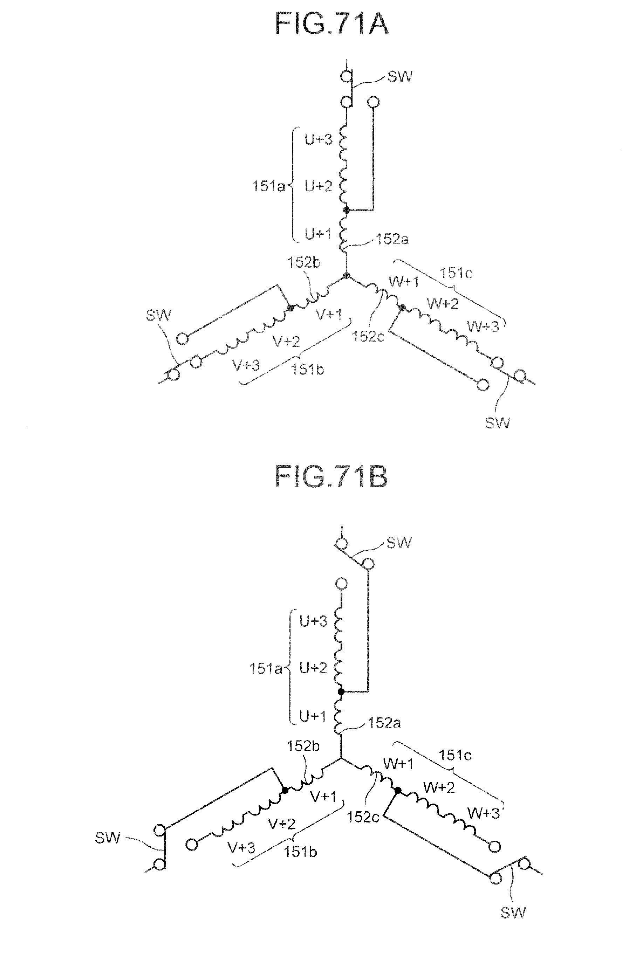

One example of this structure is illustrated in FIG. 71A and FIG. 71B. FIG. 71A is an explanatory diagram illustrating connection of the first stator coils, and FIG. 71B is an explanatory diagram illustrating connection of the second stator coils.

As illustrated in the drawings, a stator 16 can include, as a plurality of stator coils 15, a first stator coil 151a that is a coil set in which respective stator coils 15 of U+1, U+2, and U+3 are connected in series. The stator 16 includes a similar first stator coil 151b that is a coil set in which respective stator coils 15 of V+1, V+2, and V+3 are connected in series and a similar first stator coil 151c that is a coil set in which respective stator coils 15 of W+1, W+2, and W+3 are connected in series.

The first stator coil 151a in which all the three stator coils 15 of U+1, U+2, and U+3 are connected in series and a second stator coil 152a including only the stator coil 15 of U+1 are optionally switched by a stator coil selection switch SW (hereinafter, simply referred to as "switch SW"). Similarly, the first stator coil 151b in which all the stator coils 15 of V+1, V+2, and V+3 are connected in series and a second stator coil 152b including only the stator coil 15 of V+1 are optionally switched by a switch SW. Furthermore, similarly, the first stator coil 151c in which all the stator coils 15 of W+1, W+2, and W+3 are connected in series and a second stator coil 152c including only the stator coil 15 of W+1 are optionally switched by a switch SW.

Thus, in the present embodiment, a configuration in which the second stator coils 152 are included in part of the first stator coils 151 is used.

The magnetic field generated by the stator coils 15 illustrated in FIG. 71A is distributed uniformly in the whole circumference, and also the distribution pattern of the magnetic field is uniform. However, when this state is changed to that in FIG. 71B by switching the switches SW of the three coil sets, in the first stator coil 151a, circuitry is disconnected except the stator coil 15 of U+1 out of the stator coils 15 (e.g., U+1, U+2, and U+3), and consequently a current is applied only to the second stator coil 152a including only the stator coil 15 of U+1.

Similarly, when the switches SW are switched, a current is applied only to the second stator coil 152b including only the stator coil 15 of V+1 in the other first stator coil 151b, and is applied only to the second stator coil 152c including only the stator coil 15 of W+1 in the first stator coil 151c. In other words, when the passage of current is switched to the second stator coils 152, the passage of current to the other stator coils 15 excluding the second stator coils 152 is prohibited.

The magnetic field that is generated by the second stator coils 152a, 152b, and 152c being three coil sets in phases different from each other when the switches SW are switched has a distribution pattern of a magnetic field having uniqueness over the whole circumference of the stator core 16a similarly to the above-described embodiments. More specifically, the distribution pattern of the magnetic field generated by the respective stator coils 15 of the three phases (U, V, and W) being the second stator coils 152 is not repeated in the whole circumference of the stator core 16a. In other words, the stator coils 15 of the respective phases or the coil sets (in-phase groups of the stator coils 15) having the respective phases are arranged mechanically at intervals of 120 degrees.

In this example, when the switches SW are switched, as a combination of the second stator coils 152, a combination of the second stator coils 152a (three phases: U+1, V+1, W+1) is used from among the respective coil sets. However, the combination of the second stator coils 152 may be a combination of the second stator coils 152b (three phases: U+2, V+2, W+2) or a combination of the second stator coils 152c (three phases: U+3, V+3, W+3).

As described above, in the motor 10 according to the present embodiment, the stator coil 15 can be switched into two states that are, for example, a state in which the stator coils 15 are constructed of the first stator coils 151 selected for normal operation and a state in which the stator coils 15 are constructed of the second stator coils 152 selected at the start time.

Even in this structure, similarly to the previously described embodiments, the motor 10 and the motor system 1 that enable estimation of the absolute mechanical angle of the rotor 17 can be built.

Furthermore, with the motor 10 and the motor system 1 of the present embodiment, during the normal operation, the winding state of the stator coils 15 is in a state of concentrated winding that is widely and generally adopted. More specifically, because each of the first stator coils 151 is constructed of U-phase, V-phase, and W-phase coils as one set, the distribution of the magnetic field generated by the first stator coils 151 during one cycle in electrical angle is repeated during one cycle in mechanical cycle. This makes all changes in inductance uniform and reduces cogging, for example, thus making it possible for the rotor 17 to smoothly rotate.

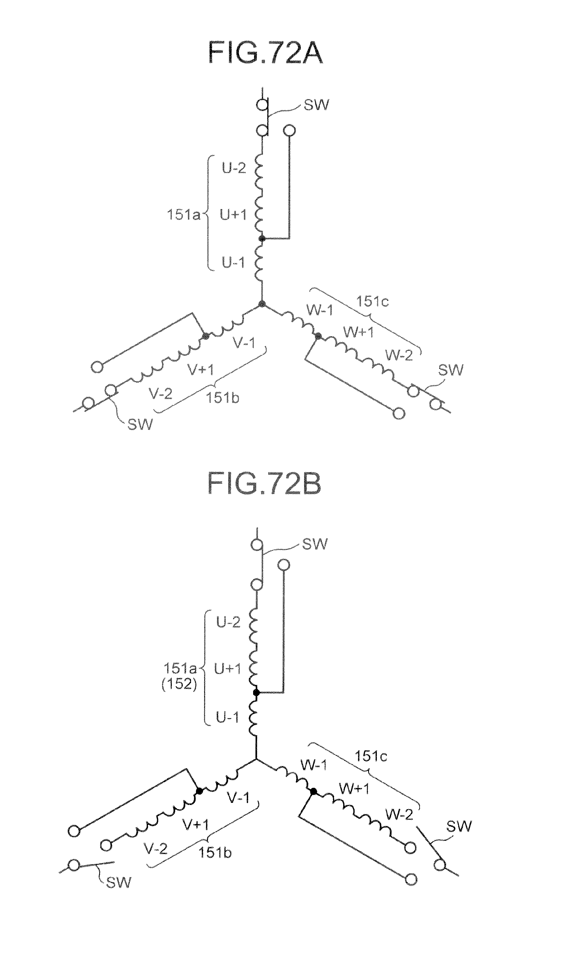

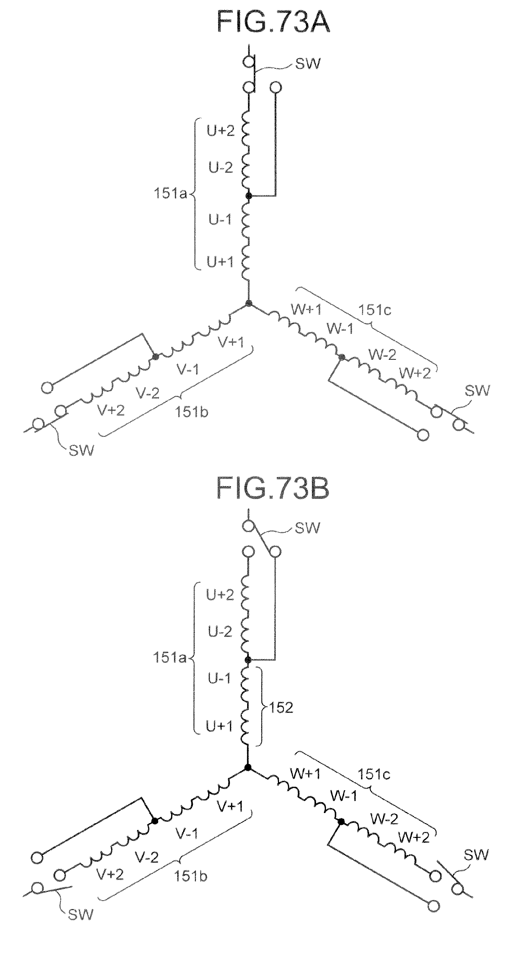

As an aspect including the switches SW as described above, configurations illustrated in FIGS. 72A and 72B and FIGS. 73A and 73B can be used.

### Modification 1

More specifically, in the case of a motor 10 having eight poles and nine slots, for example, as illustrated in FIGS. 72A and 72B, a stator 16 includes, as a plurality of stator coils 15, a first stator coil 151a that is a coil set in which respective stator coils 15 of U-1, U+1, and U-2 are connected in series, for example. The stator 16 includes a similar first stator coil 151b that is a coil set in which respective stator coils 15 of V-1, V+1, and V-2 are connected in series and a similar first stator coil 151c that is a coil set in which respective stator coils 15 of W-1, W+1, and W-2 are connected in series.

Normally, connection is made via switches SW as illustrated in FIG. 72A so that a current can be applied to all of the three coil sets, and when the switches SW are switched, the state of the passage of current is turned into that as illustrated in FIG. 72B.

More specifically, except the coil set in which all the three stator coils 15 of U-1, U+1, and U-2 are connected in series, the coil set in which all the stator coils 15 of V-1, V+1, and V-2 are connected in series and the coil set in which the respective stator coils 15 of W-1, W+1, and W-2 are connected in series become open-circuit.

In this example, the second stator coils 152 include only U-phase (U-1, U+1, and U-2), and the distribution pattern of the magnetic field generated by the stator coils 15 still has uniqueness over the whole circumference.

As a matter of course, the second stator coils 152 can include only V-phase (V-1, V+1, and V-2), or can include only W-phase (W-1, W+1, and W-2.

### Modification 2

In the case of a motor 10 having ten poles and twelve slots, a configuration illustrated in FIGS. 73A and 73B can be considered.

More specifically, as illustrated in the drawings, a stator 16 includes, as a plurality of stator coils 15, a first stator coil 151a that is a coil set in which respective stator coils 15 of U+1, U-1, U-2, and U+2, for example, are connected in series. The stator coil 16 includes a similar first stator coil 151b that is a coil set in which respective stator coils 15 of V+1, V-1, V-2, and V+2 are connected in series and a similar first stator coil 151c that is a coil set in which respective stator coils 15 of W+1, W-1, W-2, and W+2 are connected in series.

Normally, connection is made via switches SW as illustrated in FIG. 73A so that a current can be applied to all of the three coil sets, and when the switches SW are switched, the state of the passage of current is turned into that as illustrated in FIG. 73B.

More specifically, in the coil set in all of the four stator coils 15 of U+1, U-1, U-2, and U+2 are connected in series, a current is applied only to two stator coils 15 of U+1 and U-1, and the others become open-circuit.

In this example, the second stator coils 152 include only two stator coils 15 (U-phase: U+1, U-1), and the distribution pattern of the magnetic field generated by the stator coils 15 still has uniqueness over the whole circumference.

Even in this case, the second stator coils 152 can include only two stator coils 15 of V-phase (V+1 and V-1), or can include only those of W-phase (W+1 and W-1).

Although the present invention has been described in connection with the embodiments and the modifications above, the type of the motor 10, and the number of poles or the number of slots of the motor 10, for example, can be appropriately set.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents. Reference Signs List

- 1: MOTOR SYSTEM
- 10: MOTOR
- 15: STATOR COILS
- 15a: COIL SET
- 16: STATOR
- 16a: STATOR CORE
- 17: ROTOR
- 17a: ROTOR CORE
- 18: PERMANENT MAGNETS
- 20: CONTROL DEVICE
- 21: ROTOR CONTROL UNIT
- 22: INDUCTANCE MEASUREMENT UNIT
- 23: MEMORY UNIT
- 24: MECHANICAL ANGLE ESTIMATION UNIT

## Claims

1. A motor comprising:
a rotor that includes a rotor core provided with a plurality of permanent magnets; and
a stator that includes a stator core on which stator coils of a plurality of phases are wound, the stator being arranged facing the rotor with a predetermined air gap therebetween, wherein
the rotor has a structure in which a change pattern of magnetic properties of the rotor core or the permanent magnets changes stepwise in a circumferential direction, and
the stator has a structure in which a distribution pattern of a magnetic field generated by the stator coils with one phase or with a combination of the phases has uniqueness over a whole circumference.

2. The motor according to claim 1, wherein the stator has the structure in which a magnetic flux density distribution waveform in the air gap generated by the stator has a magnetic flux density component of which one cycle is 360 degrees in mechanical angle.

3. The motor according to claim 1 or 2, wherein the rotor has the structure in which total number of magnetic poles on a surface facing the air gap is equal to or larger than four, and a magnetic flux density distribution waveform in the air gap generated by the rotor has a magnetic flux density component of which one cycle is 360 degrees in mechanical angle.

4. The motor according to any one of claims 1 to 3, wherein the rotor has saliency.

5. The motor according to any one of claims 1 to 4, wherein in the permanent magnets, magnetic flux densities of the respective permanent magnets are made different to change magnetic properties of the rotor.

6. The motor according to claim 5, wherein in the rotor core, portions that have radial lengths different from each other are formed along the circumferential direction, to change magnetic properties of the rotor.

7. The motor according to claim 5 or 6, wherein in the rotor core, spacing depths of the respective permanent magnets embedded along the circumferential direction from a periphery of the rotor core are made different from each other, to change magnetic properties of the rotor.

8. The motor according to any one of claims 5 to 7, wherein in the rotor core, sizes or shapes of the permanent magnets are made different, to change magnetic properties of the rotor.

9. The motor according to any one of claims 5 to 8, wherein the rotor core includes slits communicating to magnet arrangement holes that are formed to arrange the permanent magnets, and lengths or shapes of the respective slits are made different to change magnetic properties of the rotor.

10. The motor according to any one of claims 1 to 9, wherein in the stator core, the stator coils are sequentially wound for each phase in the circumferential direction, coil sets each of which is constructed of the stator coils of different phases are formed along the circumferential direction, and distribution patterns of magnetic fields in the respective coil sets are different from each other.

11. The motor according to any one of claims 1 to 3, wherein magnetic center of the rotor core is decentered with respect to shaft center of a rotary shaft.

12. The motor according to claim 11, wherein the decentering of the magnetic center is achieved by shifting a physical axis line of the rotor core from the rotary shaft, and a spacing between an outer circumferential surface of the rotor core and an inner circumferential surface of the stator core changes steplessly in the circumferential direction.

13. The motor according to claim 11 or 12, wherein radial lengths of the respective permanent magnets are set so that radial lengths from center of the rotary shaft to outer circumferential surfaces of the respective permanent magnets are the same.

14. The motor according to claim 11, wherein the decentering of the magnetic center is achieved by variation of magnetic permeability of the rotor core in the circumferential direction.

15. The motor according to any one of claims 11 to 14, wherein the inner circumferential surface of the stator core has an approximately elliptical section.

16. The motor according to any one of claims 11 to 15,
wherein in the stator core, the stator coils are sequentially wound for each phase in the circumferential direction, coil sets each of which is constructed of the stator coils of different phases are formed along the circumferential direction, and distribution patterns of magnetic fields in the respective coil sets generated by the stator coils of the different phases have uniqueness over the whole circumference.

17. A motor system comprising:
the motor according to any one of claims 1 to 16; and
a control device that controls the motor, the control device comprising:
a rotor control unit that controls rotation of the rotor;
an inductance measurement unit that measures inductance of the stator coils;
a memory unit that stores therein reference data indicating inductance depending on a mechanical angle of the rotor in association with information of the mechanical angle; and
a mechanical angle estimation unit that estimates the mechanical angle of the rotor on the basis of the inductance measured by the inductance measurement unit and the reference data stored in the memory unit.
